(19) Europäisches Patentamt European Patent Office Office européen des brevets

(11) **EP 4 575 770 A1**

(12) **EUROPEAN PATENT APPLICATION**

(43) Date of publication:
**25.06.2025 Bulletin 2025/26**

(21) Application number: **24213137.3**

(22) Date of filing: **15.11.2024**

(51) International Patent Classification (IPC):
***G06F 9/30*** *(2018.01)*

(52) Cooperative Patent Classification (CPC):
**G06F 9/30036; G06F 9/3001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 US 202363614414 P**
**22.12.2023 US 202363614418 P**
**30.12.2023 US 202318401423**
**22.12.2023 US 202363614425 P**

(71) Applicant: **INTEL Corporation**
**Santa Clara, CA 95054 (US)**

(72) Inventors:
• **Heinecke, Alexander**
**San Jose, 95134 (US)**
• **Langhammer, Martin**
**Alderbury, SP5 3AB (GB)**

(74) Representative: **Goddar, Heinz J.**
**Boehmert & Boehmert**
**Anwaltspartnerschaft mbB**
**Pettenkoferstrasse 22**
**80336 München (DE)**

(54) **BLOCK NUMBER DOT PRODUCT**

(57)     Techniques for dot products using block format numbers are described. In some examples, a single instruction including one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in the block format to encode one or more numbers, wherein a block number of the block format has a value of a scale multiplied by a value of a scalar element and wherein the data that is in the block format is to use data from at least the first and second source operands is used for performing dot products.

**EP 4 575 770 A1**

Processed by Luminess, 75001 PARIS (FR)

**Description**

BACKGROUND

Block floating point numbers differ from classic IEEE 754-defined floating-point numbers in the following way: they have a secondary/primary exponent which is shared across various short-width floating point numbers/signed integers (mantissas). Therefore, they allow for more precision/accuracy than fix point representations and are more storage efficient than a simple list/array of classic floating point numbers, as latter might store redundant information.

Blockfloating-point numbers are most efficient when the function they are trying to approximate is smooth and values of similar/close order of magnitude appear in the data stream close together and the redundancy can be removed. In this case, the shared exponent naturally serves as compression method, while not losing information as the array/list of the classic floating number the exponent would have been the same or similar. The smaller "wiggles" are then handled with much narrower types in the "mantissas."

BRIEF DESCRIPTION OF DRAWINGS

Various examples in accordance with the present disclosure will be described with reference to the drawings, in which:

FIG. 1 illustrates an example execution of a dot product instruction that uses a block format for at least one operand.
FIG. 2 illustrates examples of source and destination operands.
FIG. 3 illustrates examples of a system utilizing a matrix (tile) operations accelerator.
FIG. 4 illustrates examples of support both floating point and block floating point and/or block integer.
FIG. 5 shows different possible numerical representations.
FIG. 6 illustrates examples of a multiplier used by any of FIG. 4.
FIG. 7 illustrates examples of a multiplier for some 8-bit numbers.
FIG.8 illustrates examples of multiplier for some floating point numbers.
FIG. 9 illustrates examples of instructions that may be supported by the dot product unit circuitry.
FIG. 10 illustrates an example method performed to process a dot product instruction that uses a block format for at least one operand.
FIG. 11 illustrates an example method to process a dot product instruction that uses a block format for at least one operand using emulation or binary translation.
FIG. 12 illustrates examples of computing hardware to process a dot product instruction that uses a block format for at least one operand and other instruction.
FIG. 13 illustrates an example computing system.
FIG. 14 illustrates a block diagram of an example processor and/or System on a Chip (SoC) that may have one or more cores and an integrated memory controller.
FIG. 15 is a block diagram illustrating a computing system 1500 configured to implement one or more aspects of the examples described herein.
FIG. 16A illustrates examples of a parallel processor.
FIG. 16B illustrates examples of a block diagram of a partition unit.
FIG. 16C illustrates examples of a block diagram of a processing cluster within a parallel processing unit.
FIG. 16D illustrates examples of a graphics multiprocessor in which the graphics multiprocessor couples with the pipeline manager of the processing cluster.
FIGS. 17A-17C illustrate additional graphics multiprocessors, according to examples.
FIG. 18 shows a parallel compute system, according to some examples.
FIGS. 19A-19B illustrate a hybrid logical/physical view of a disaggregated parallel processor, according to examples described herein.
FIG. 20(A) is a block diagram illustrating both an example in-order pipeline and an example register renaming, out-of-order issue/execution pipeline according to examples.
FIG. 20(B) is a block diagram illustrating both an example in-order architecture core and an example register renaming, out-of-order issue/execution architecture core to be included in a processor according to examples.
FIG. 21 illustrates examples of execution unit(s) circuitry, such as execution unit(s) circuitry.
FIG. 22 is a block diagram of a register architecture according to some examples.
FIG. 23 illustrates examples of an instruction format.
FIG. 24 illustrates examples of an addressing information field.
FIGS. 25(A)-(B) illustrate examples of a first prefix.
FIGS. 26(A)-(D) illustrate examples of how the R, X, and B fields of the first prefix are used.

FIGS. 27(A)-(B) illustrate examples of a second prefix.

FIGS. 28(A)-(E) illustrate examples of a third prefix.

FIGS. 29A-29B illustrate thread execution logic including an array of processing elements employed in a graphics processor core according to examples described herein.

FIG. 30 illustrates an additional execution unit, according to an example.

FIG. 31 is a block diagram illustrating a graphics processor instruction formats 3100 according to some examples.

FIG. 32 is a block diagram of another example of a graphics processor.

FIG. 33A is a block diagram illustrating a graphics processor command format according to some examples.

FIG. 33B is a block diagram illustrating a graphics processor command sequence according to an example.

FIG. 34 is a block diagram illustrating the use of a software instruction converter to convert binary instructions in a source ISA to binary instructions in a target ISA according to examples.

FIG. 35 is a block diagram illustrating an IP core development system that may be used to manufacture an integrated circuit to perform operations according to some examples.

FIG. 36 illustrates examples of a block diagram of a system that may implement arithmetic operations using a digital signal processing block.

DETAILED DESCRIPTION

The present disclosure relates to methods, apparatus, systems, and non-transitory computer-readable storage media for dot products using block format are described.

As the "heart of an AI application" is matrix multiplication, the computation of dot-products must be as optimized as possible to fully leverage the aforementioned benefits of this special number format. A challenge with block floating point is the relatively large input for SIMD architectures when having a compact format (means storing the k mantissas and scaling factor X close to each other in memory). This is due to the fact as one wants to also use as many bits as possible in the result vector which then needs to be a group of C for efficient SIMD register space usage.

While such formats can be executed on today's hardware with software flows, such as software-based implementation that is slow and has therefore very little chance for successfully establishing the format. Detailed herein are examples of instructions for dot products that use a block number format. These instructions allow, especially with the addition of a fast convert instructions, to have efficient support for block-floating point, especially for deep learning applications, in scaled architectures (CPU, GPU).

Examples detailed herein utilize one or more data formats (the term data types may also be used). A data format/type is a collection of one or more fields that are used to represent one or more values, infinity (positive or negative), and/or non-a-number (NaN) (which may be quiet or signaling). The fields are encoded by a sequence of bits. In the discussion below, a little-endian approach is used. Note that some standards, such as the Institute for Electrical and Electronics Engineers (IEEE) 754 standard, do not specify endianness.

In some examples, a scalar floating-point notation is ExMy with one sign bit, x exponent bits, and y mantissa bits (with the y value not including a leading implicit bit).

A first example of a data format/type is a signed integer. Signed integers may come in different sizes such as 8-bit (INT8), 16-bit (INT16), 32-bit (INT32), etc. A most significant bit of a signed integer denotes the sign of the number being represented. For example, the 8-bit signed integer of 10000010b represents -2 in decimal where the most significant bit (msb) of "1" indicates a negative value.

A second example of a data format/type is a 32-bit floating-point (also known as Float32, single precision floating-point, FP32, etc.). Data in a 32-bit floating-point format includes a sign bit (S) in the most significant bit position, followed by 8 exponent bits, and 23 fraction bits. In some examples, a mantissa or significant includes the fraction bits and an implicit leading bit. In some examples, the notation for the mantissa value does not explicitly include the implicit bit. For example, for M=3, the mantissa value is 3 plus the implicit bit. In examples that are compliant with a MicroXcaling (MX) data format, the mantissa is the same as the fraction (that is the "mantissa" notation does not include the implicit leading bit of scalar floating-point formats, however an implicit 1 is used for the mantissa).

A third example of a data format/type is a 16-bit floating-point (also known as Float16, half-precision floating-point, FP16, etc.). Data in a 16-bit floating-point format includes a sign bit (S) in the most significant bit position, followed by 5 exponent bits, and 10 fraction bits. In some examples, a mantissa or significant includes the fraction bits and an implicit leading bit. In some examples, the notation for the mantissa value does not explicitly include the implicit bit. For example, for M=3, the mantissa value is 3 plus the implicit bit. In examples that are compliant with the MX data format, the mantissa is the same as the fraction (that is the "mantissa" notation does not include the implicit leading bit of scalar floating-point formats, however an implicit 1 is used for the mantissa).

A fourth example of a data format/type is a 16-bit floating-point (also known as brain floating-point, BFloat16, BF16, etc.). Data in a BF16 floating-point format includes a sign bit (S) in the most significant bit position, followed by 8 exponent bits, and 7 fraction bits. In some examples, a mantissa or significant includes the fraction bits and an implicit leading bit. In some examples, the notation for the mantissa value does not explicitly include the implicit bit. For example, for M=3, the mantissa value is 3 plus the implicit bit. In examples that are compliant with the MX data format, the mantissa is the same as the fraction (that is the "mantissa" notation does not include the implicit leading bit of scalar floating-point formats, however an implicit 1 is used for the mantissa).

A fifth example of a data format/type is an 8-bit floating-point (also known as FP8, BF8, HF8, etc.). In some examples, data in a FP8 floating-point format includes a sign bit (S) in the most significant bit position, followed by 5 exponent bits, and 2 fraction bits. In some examples, data in a FP8 floating-point format includes a sign bit (S) in the most significant bit position, followed by 4 exponent bits, and 3 fraction bits. In some examples, a mantissa or significant includes the fraction bits and an implicit leading bit. In some examples, the notation for the mantissa value does not explicitly include the implicit bit. For example, for M=3, the mantissa value is 3 plus the implicit bit. In examples that are compliant with the MX data format, the mantissa is the same as the fraction (that is the "mantissa" notation does not include the implicit leading bit of scalar floating-point formats, however an implicit 1 is used for the mantissa).

A sixth example of a data format/type is a 6-bit floating-point (also known as FP6, etc.). In some examples, data in a FP6 floating-point format includes a sign bit (S) in the most significant bit position, followed by 3 exponent bits, and 2 fraction bits. In some examples, data in a FP6 floating-point format includes a sign bit (S) in the most significant bit position, followed by 2 exponent bits, and 3 fraction bits. In some examples, a mantissa or significant includes the fraction bits and an implicit leading bit. In some examples, the notation for the mantissa value does not explicitly include the implicit bit. For example, for M=3, the mantissa value is 3 plus the implicit bit. In examples that are compliant with the MX data format, the mantissa is the same as the fraction (that is the "mantissa" notation does not include the implicit leading bit of scalar floating-point formats, however an implicit 1 is used for the mantissa).

A seventh example of a data format/type is a 4-bit floating-point (also known as FP4, etc.). In some examples, data in a FP4 floating-point format includes a sign bit (S) in the most significant bit position, followed by 2 exponent bits, and 1 fraction bit. In some examples, a mantissa or significant includes the fraction bits and an implicit leading bit. In some examples, the notation for the mantissa value does not explicitly include the implicit bit. In examples that are compliant with the MX data format, the mantissa is the same as the fraction (that is the "mantissa" notation does not include the implicit leading bit of scalar floating-point formats, however an implicit 1 is used for the mantissa). In some examples, data in a FP4 floating-point format includes a sign bit (S) in the most significant bit position, followed by 3 exponent bits, and 0 fraction bits.

In some examples, the MX format has a shared scale and k scalar elements that have the same data type (bit-width).

For the FP8, FP6, and FP4 formats, the value of an encoding (excluding Inf and NaN encodings for FP8) is inferred as follows:

a) if $E > 0$, then $v = (-1)S \times 2^{E-bias} \times (1 + 2^{-m} \times M)$. This is a normal number.
b) if $E = 0$, then $v = (-1)S \times 2^{1-bias} \times (0 + 2^{-m} \times M)$. This is a subnormal number.

Where:

- $S, E,$ and $M$ are the values of the Sign, Exponent, and Mantissa fields, respectively.
- *bias* is the exponent bias.
- m is the number of mantissa bits.

In the block format, the k scalar elements (P) are d bits in size, and all share a scaling factor X. It is assumed that: a) all P elements are of the same datatype (integer or floating-point) with a width of d bits across all $P_i$ (does not needed to be a multiple of bytes), and b) the scaling factor X is shared across all P elements and has a width of w bits. X cannot have different datatypes it should be considered a biased floating exponent as defined by IEEE754. X can only represent not-a-number (NaN), it doesn't have an encoding for +/infinity. In summary, the required space for a basic type in the proposed datatype is w+k*d bits. Note, that w and k*d bits don't need to be stored necessarily adjacent to each other in memory. The actual value $V_i$ of the corresponding non-block datatype is achieved by scaling the $P_i$ by X.

In some examples, special number handling is used as in the case of regular floating point, also block floating point needs to handle special numbers may be as below.

a) If X == NaN -> all $V_i$ are NaN independent of position 0 < i< k
b) If X != NaN

a. If $P_i$ is NaN/infinite -> $V_i$ is $P_i$
b. If X*$P_i$ > max Float32/Float64 -> infinite, if X*$P_i$<-max Float32/Float64
c. $V_i$ = X * $P_i$

The maximum value compared with in b) can be defined by the implementation or a status/configuration register (e.g., MXCSR) in some examples.

In some examples, there are "k" sizes for disclosed instruction. The "k" can be defined for example by the SIMD of the architecture at hand or enforced by an external control. The datatype of X has been specified, but P can be floating point or integer value. Some choices are FP8 (1s-5e-2m,1s-4e-3m,1s-3e-4m), FP6 (1s-3e-2m,1s-2e-3m), FP4 (1-2-1, 1-3-0), signed integer 8 (int8), signed integer 6, signed integer 4.

Examples of instructions of this description handle one or more of these example formats with an output being FP8, binary float 16 (BF16), half-precision floating point (FP16), single-precision floating point (FP32), and/or double-precision floating point (FP64). This disclosure focuses on higher-level concepts that can be applied to different datatype combinations. In general, instructions perform dot-products using block numbers will implement a dot product operation of

$$C = dot(A, B) = X^{(A)} X^{(B)} \sum_{i=1}^{k} (P_i^{(A)} x P_i^{(B)})$$ where A and B are in block floating point formats of

$A: \{X^{(A)}, [P_i^{(A)}]_{i=1}^k\}$ and $B: \{X^{(B)}, [P_i^{(B)}]_{i=1}^k\}$.

In some examples, the opcode of an instruction is to cause the processor to execute a block number dot-product operation. The opcode might specify the source and destination datatype. In some examples, immediate bits in the instruction could determine the actual nature of the conversion.

Note further that the multiplication with $X^{(A)}$ and $X^{(B)}$ can also happen on partial products of length ½ k or ¼ k.

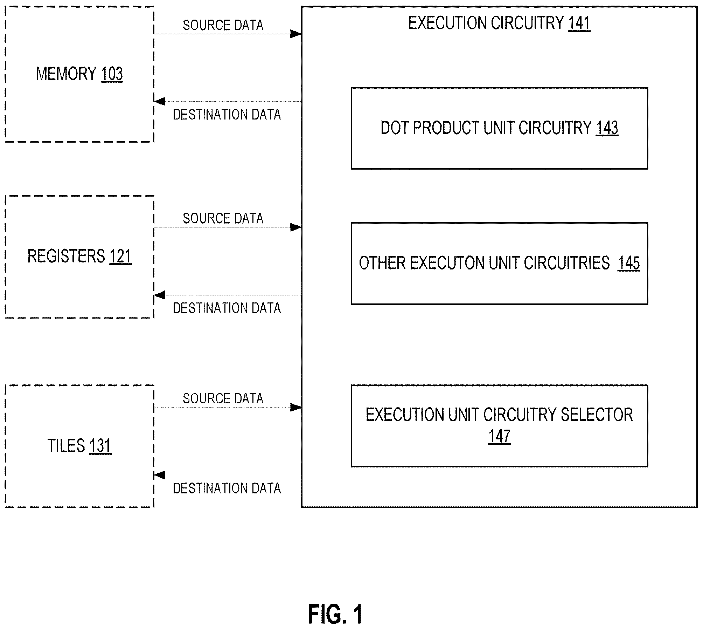

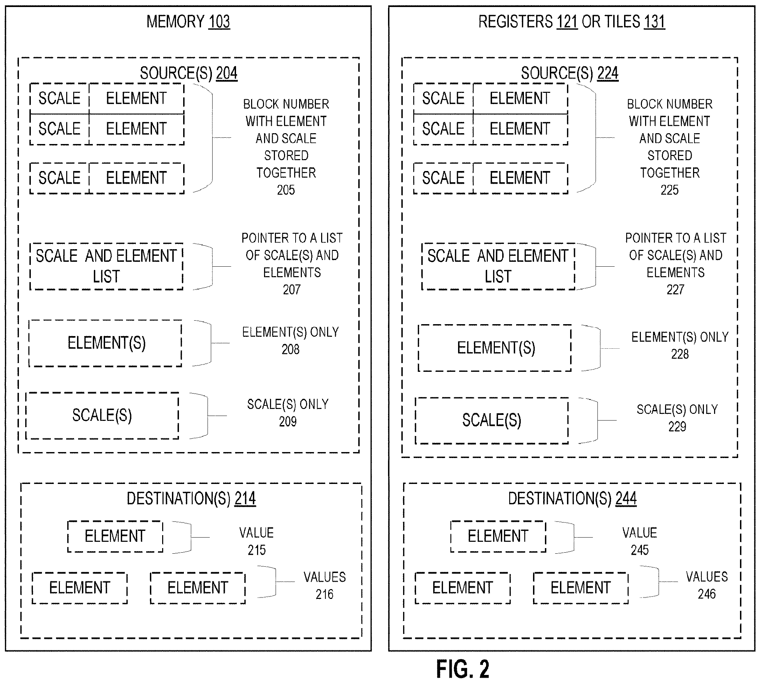

FIG. 1 illustrates an example execution of a dot product instruction that uses a block format for at least one operand. Depending on the implementation, the operands may come from, or be stored to, memory 103, one or more registers 121, and/or one or more tiles 131. Which location for an operand is dictated by the instruction itself. FIG. 2 illustrates examples of source and destination operands.

As shown, memory 103 may store one or more source operand(s) 204 and/or destination operand(s) 214. In some examples, a source operand is stored in a "compact" format with a scale and an element stored close together (if not adjacent to each other) as shown in source 205. In some examples, scale and a plurality of elements are stored close together (if not adjacent to each other). In this scenario, only a single scale would be stored for source 205.

In some examples, a pointer to a list of one or more scales and elements is stored as a source 207. This approach allows for a plurality of scales and a plurality of elements to be stored wherever. Typically, the list has one blockfloating point per entry. However, other variants may include a list of a single scale to a plurality of elements, etc.

In some examples, one or more elements 208 are stored separately than from one or more scale 209.

Examples of destination(s) 214 may include a single element 215 or a plurality of elements 216.

Some registers of registers 121 are vector (packed data or SIMD) registers in some examples. Some registers of registers 121 are scalar registers in some examples.

As shown, registers 121 or tiles 131 may store one or more source operand(s) 224 and/or destination operand(s) 244. In some examples, a source operand is stored in a "compact" format with a scale and an element stored close together (if not adjacent to each other) as shown in source 225. In some examples, scale and a plurality of elements are stored close together (if not adjacent to each other). In this scenario, only a single scale would be stored for source 225.

In some examples, a pointer to a list of one or more scales and elements is stored as a source 227. This approach allows for a plurality of scales and a plurality of elements to be stored wherever. Typically, the list has one blockfloating point per entry. However, other variants may include a list of a single scale to a plurality of elements, etc.

In some examples, one or more elements 228 are stored separately than from one or more scale 229.

Examples of destination(s) 244 may include a single element 245 or a plurality of elements 246.

Some registers of registers 121 are vector (packed data or SIMD) registers in some examples. Some registers of registers 121 are scalar registers in some examples.

In some examples, an instruction will utilize memory and one or more registers. In some examples, one or more scales are stored in memory and one or more elements are stored in one or more registers. In some examples, one or more elements are stored in memory and one or more scales are stored in one or more registers.

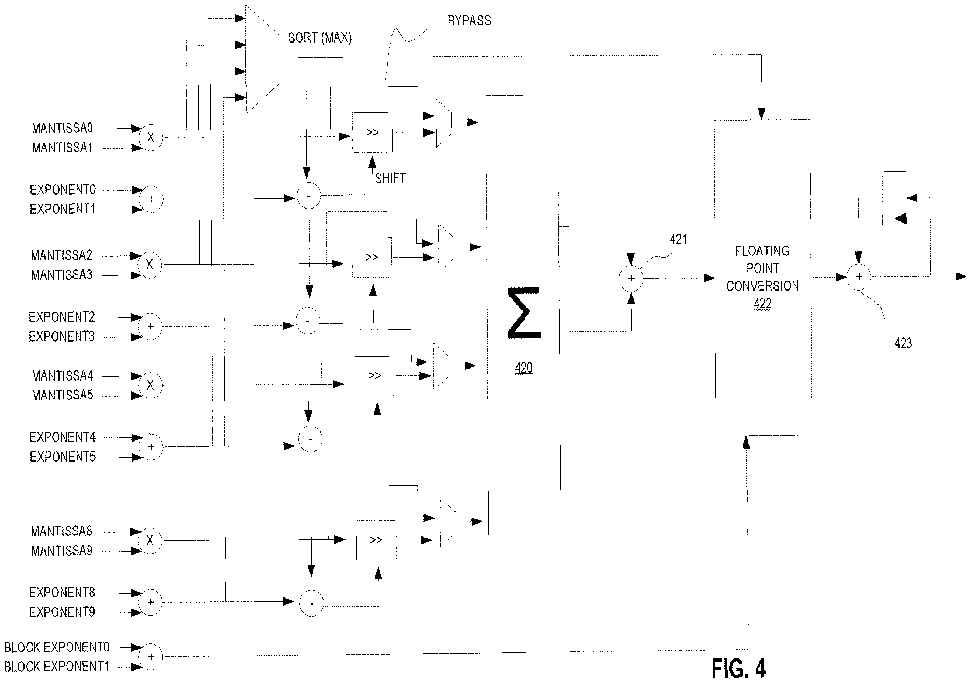

Execution circuitry 141 includes dot product unit circuitry 143 to perform a dot product operation using block numbers (either floating point or integer). In some examples, the dot product operation is the dot product described above, a cross product of dot products (e.g., to perform matrix multiplication), and/or one or more partial dot products. In some examples, the dot product unit circuitry 143 is a part of a matrix accelerator. In some examples, the dot product unit circuitry 143 is a part of a graphics processor or core thereof. In some examples, the dot product unit circuitry 143 is a part of a central processing unit or core thereof. In some examples, the dot product unit circuitry 143 includes the circuitry of one or more of FIGS. 4-8.

The execution circuitry 141 includes other execution circuities 145 (e.g., load, store, vector, Boolean, etc.). The opcode of the instruction is used to direct an execution unit circuitry selector 147 to allocate the proper execution circuitry for the desired operation.

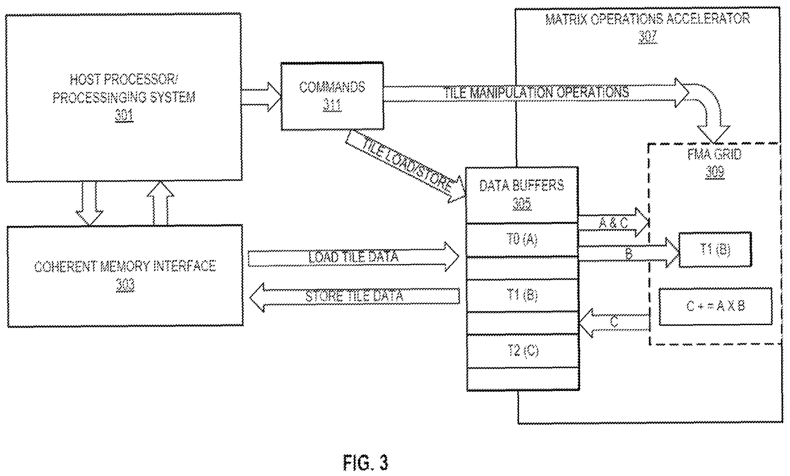

**FIG. 3** illustrates examples of a system utilizing a matrix (tile) operations accelerator. In some examples, this system supports the dot product instructions detailed herein. In this illustration, a host processor/processing system 301 communicates commands 311 (e.g., matrix manipulation operations such as arithmetic or matrix manipulation operations, or load and store operations) to a matrix operations accelerator 307. However, this is shown this way for discussion purposes only. As detailed later, this accelerator 307 may be a part of a processing core. Typically, commands 311 that are tile manipulation operator instructions will refer to tiles as register-register ("reg-reg") or register-memory ("reg-mem") format. Other commands such as TILESTORE, TILELOAD, TILECONFIG, etc., do not perform data operations on a tile. Commands may be decoded instructions (e.g., micro-ops) or macro-instructions for the accelerator 307 to handle.

In some examples, a coherent memory interface 303 is coupled to the host processor/processing system 301 and matrix operations accelerator 307 such that they can share memory.

In some embodiments, tiles are supported using an overlay over physical registers. For example, a tile may utilize 16 1,024-bit registers, 32 512-bit registers, etc. depending on the implementation. In some embodiments, the matrix operations utilize 2-dimensional (2-D) data structures representing one or more packed regions of memory such as registers. Throughout this description, these 2-D data structures are referred to as tiles or tile registers.

In some embodiments, the matrix operations accelerator 307 includes a plurality of FMAs 309 coupled to data buffers 305 (in some implementations, one or more of these buffers 305 are stored in the FMAs of the grid as shown). The data buffers 305 buffer tiles loaded from memory and/or tiles to be stored to memory (e.g., using a tileload or tilestore instruction). Data buffers may be, for example, a plurality of registers. Typically, these FMAs are arranged as a grid of chained FMAs 309 which are able to read and write tiles. In this example, the matrix operations accelerator 307 is to perform a matrix multiply operation using tiles T0, T1, and T2. At least one of tiles is housed in the FMA grid 309. In some embodiments, all tiles in an operation are stored in the FMA grid 309. In other embodiments, only a subset is stored in the FMA grid 309. As shown, T1 is housed and T0 and T2 are not. Note that A, B, and C refer to the matrices of these tiles which may or may not take up the entire space of the tile. In some examples, the FMA grid 309 includes the circuitry of one or more of FIGS. 4-8.

The matrix operations utilize 2-dimensional (2-D) data structures representing one or more packed regions of memory such as registers. Throughout this description, these 2-D data structures are referred to as tiles. Note that a matrix may be smaller than a tile (use less than all of a tile) or utilize a plurality of tiles (the matrix is larger than the size of any one tile). Throughout the description, matrix (tile) language is used to indicate operations performed using tiles that impact a matrix; whether or not that matrix is larger than any one tile is not typically relevant.

Each tile may be acted upon by different operations such as those that are detailed herein and include, but are not limited to: matrix (tile) multiplication, tile add, tile subtract, tile diagonal, tile zero, tile transform, tile dot product, tile broadcast, tile row broadcast, tile column broadcast, tile multiplication, tile multiplication and accumulation, tile move, etc. Additionally, support for operators such as the use of a scale and/or bias may be used with these operations or in support of non-numeric applications in the future, for instance, OpenCL "local memory," data compression/decompression, etc. Also described herein are instructions for performing matrix (tile) 16-bit tile dot product (TILEDPFP16PS) instructions.

Portions of storage (such as memory (non-volatile and volatile), registers, cache, etc.) are arranged into tiles of different horizontal and vertical dimensions. For example, a tile may have horizontal dimension of 4 (e.g., four rows of a matrix) and a vertical dimension of 8 (e.g., 8 columns of the matrix). Typically, the horizontal dimension is related to element sizes (e.g., 2-, 4-, 8-, 16-, 32-, 64-, 128-bit, etc.). Multiple datatypes (single precision floating-point, double precision floating-point, integer, etc.) may be supported.

FIG. 4 illustrates examples of support both floating point and block floating point and/or block integer. As noted above, in a block floating point representation a single exponent is shared among multiple mantissas. In some examples, the mantissas are represented as integers, for example INT8 or signed 8-bit numbers.

Mantissas are multiplied by multipliers. Exponents are added by adders. The block exponents are added together.

All of the multipliers are summed by a compressor 420 (if not shifted). In one case, the compressor can output a redundant form result, which is then added by a carry propagate adder (CPA) 421. Other implementations are also possible, such as a binary adder tree, or a mixed redundant form compressor and binary adders.

The result is then converted to floating point, such as the Institute of Electrical and Electronics Engineers (IEEE) 754 standard single precision format, by converter 422, which uses the two block exponents as an input.

The floating point result can then be accumulated by floating point adder 423 or added to other tensor core results.

In this example, the same multipliers are used for both formats, although the way they are used is different. For block floating point, the shifters are bypassed, and the multiplier results input directly to the compressor circuitry 420.

To reduce power in the block floating point mode, the exponent sort and the mantissa shifts can be zeroed. Zeroing (by ANDing with a '0') can be applied at multiple places in the circuit (with different gate count and power reduction results). For example, the input exponents can be zeroed, the calculated exponents can be zeroed, the input to the shifters can be zeroed.

One feature of the circuit of FIG. 4 is that it can use both regular floating point representation (an exponent for every value) as well as an additional block floating point exponent.

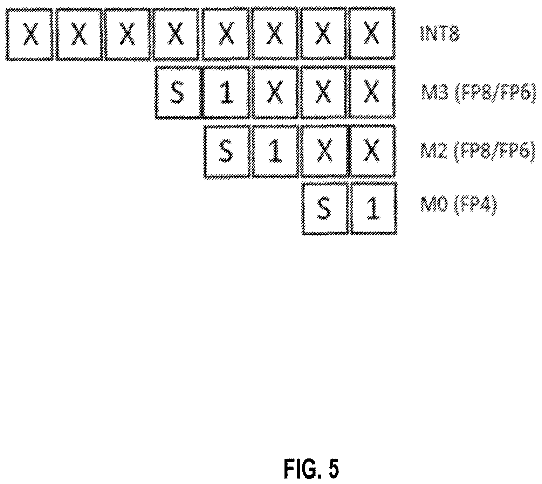

FIG. 5 shows different possible numerical representations. INT8 (which is used with block floating point) has an 8-bit signed value. FP8 may have {1,4,3} and {1,5,2} representations, where the first number is the sign bit, the next number is the number of bits in the exponent, and the last number is the number of bits in the mantissa). FP6 may have {1,2,3} and {1,3,2} representation and FP4 may have {1,3,0)} representation. All floating point formats have an implied leading '1' for the mantissa.

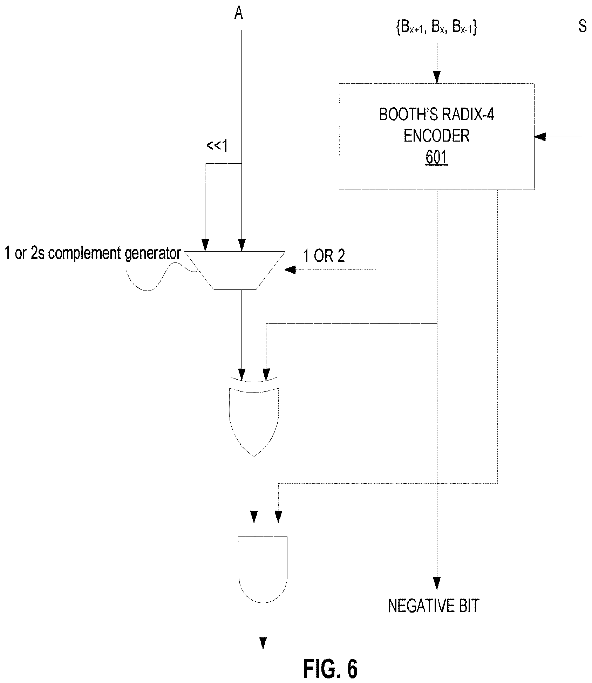

FIG. 6 illustrates examples of a multiplier used by any of FIGS. 1-4. In this illustration, Booth's radix-4 coding is used. In particular, a Booth's radix-4 coder 601 circuit codes partial products by two bits of the multiplier input at a time.

The basic idea is to express the multiplier in radix-4, that is, as a set of digits 0 - 3 instead of just 0,1. This cuts the number of partial products in half because you are multiplying by two binary bits at once. However, it requires multiplying by 3 which is difficult. Multiplication by 0, 1, or 2 is trivial because they only involve simple shifts. To avoid multiplying by 3, the digit set is coded to be 2, 1, 0, -1, and -2. The partial products with the positive digits are trivial to form while the negative values can be done by subtracting instead of adding their partial products. The typical Booth's radix-4 coding is below.

| $B_{x+1}$ | $B_x$ | $B_{x-1}$ | Code |
|---|---|---|---|
| 0 | 0 | 0 | 0 |
| 0 | 0 | 1 | +1 |
| 0 | 1 | 0 | +1 |
| 0 | 1 | 1 | +2 |
| 1 | 0 | 0 | -2 |
| 1 | 0 | 1 | -1 |
| 1 | 1 | 0 | -1 |
| 1 | 1 | 1 | 0 |

In this illustration, in addition to the two bits of the multiplier that are being coded, the sign (S) of the multiplication is used. In some examples, S is the XOR of the two signs of the input operands. The partial product is a multiple of the multiplicand, which may be 0, 1, 2, -2, or -1. The x2 is implemented using a left shift. In some examples, the negative numbers are not fully (2s complement) calculated as this would require a carry and instead are coded as 1s complement using an inversion, and the various carry in bits are added in the compressor tree.

The table below shows the coding for the illustrated modified Booth's radix-4 encoder.

| S | $B_{x+1}$ | $B_x$ | $B_{x-1}$ | Code |
|---|---|---|---|---|
| 0 | 0 | 0 | 0 | 0 |
| 0 | 0 | 0 | 1 | +1 |
| 0 | 0 | 1 | 0 | +1 |
| 0 | 0 | 1 | 1 | +2 |
| 0 | 1 | 0 | 0 | -2 |
| 0 | 1 | 0 | 1 | -1 |
| 0 | 1 | 1 | 0 | -1 |
| 0 | 1 | 1 | 1 | 0 |
| 1 | 0 | 0 | 0 | 0 |
| 1 | 0 | 0 | 1 | -1 |
| 1 | 0 | 1 | 0 | -1 |
| 1 | 0 | 1 | 1 | -2 |
| 1 | 1 | 0 | 0 | +2 |
| 1 | 1 | 0 | 1 | +1 |
| 1 | 1 | 1 | 0 | +1 |

(continued)

| S | $B_{x+1}$ | $B_x$ | $B_{x-1}$ | Code |
|---|---|---|---|---|
| 1 | 1 | 1 | 1 | 0 |

As some of the multiplier results will be negative, an approach to achieving this is to negate the partial product coding as shown above.

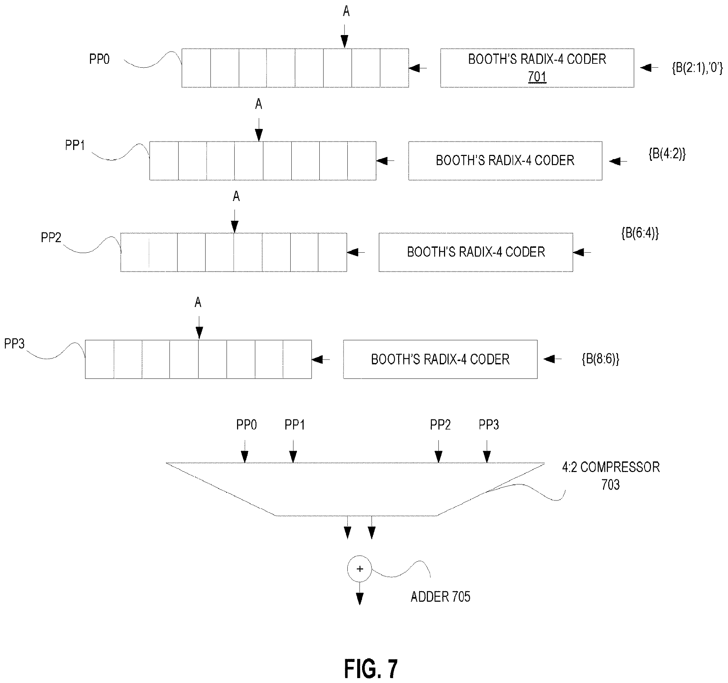

FIG. 7 illustrates examples of a multiplier for some 8-bit numbers. Bits of the multiplier are encoded using a Booth radix-4 encoder 701. The multiplicand is used to create four partial products (PPs). The partial products are to be added. In some examples, a 4-2 compressor 703 compresses the partial products and the output of the 4-2 compressor are added by adder 705 (e.g., a carry propagate adder). This architecture works for INT8. Some floating-point numbers may also be mapped to this multiplier. For example, the FP8 format M2 can be mapped directly to this structure. As the two most significant bits will be '01', the upper two partial products will be 0 (as the least significant bit of the third partial product multiplicand triplet will be '0'). The signed value (which will invert the result of the multiply) can be applied externally.

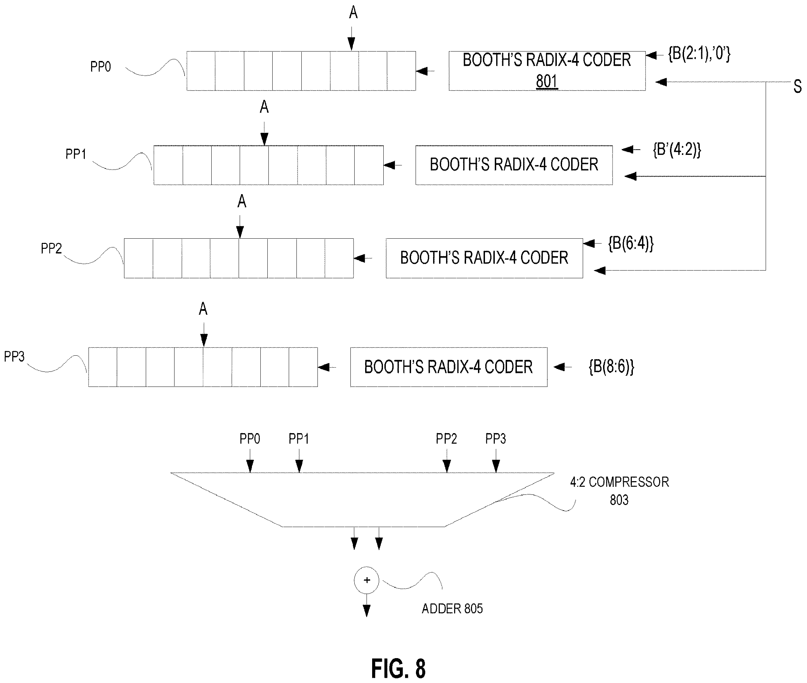

FIG.8 illustrates examples of multiplier for some floating point numbers. This multiplier is a modification to the multiplier of FIG. 8 and supports all of the floating point mantissas and implements the negation of the result directly (not externally). The coding of the second table is used for the Booth's coding using a Booth's radix-4 encoder 801. The most significant partial product is not material as it will be zeroed for all of the low precision FP numbers discussed above.

The sign value (e.g., XOR of the two input signs) is used as an input to the coding of the first three partial products. A new multiplier B' is defined from B. This number has a single bit optionally zeroed. B[4] is normally the input to the third partial product coding circuit. When the number is in a M3 format, the value of the M3 mantissa will be "1XXX", B[4] would create a '+1' coding in the third partial product (the full input will be b[6:4] = "001"). This value is zeroed in the M3 case. All of the negative values will be correctly calculated with the 'S' input method described herein.

Like FIG. 7, the partial products are compressed using compressor 803 and the output of the compressor 803 is added using adder 805. In some examples, the compressor 803 is a 3-2 compressor (with PP3 not being input).

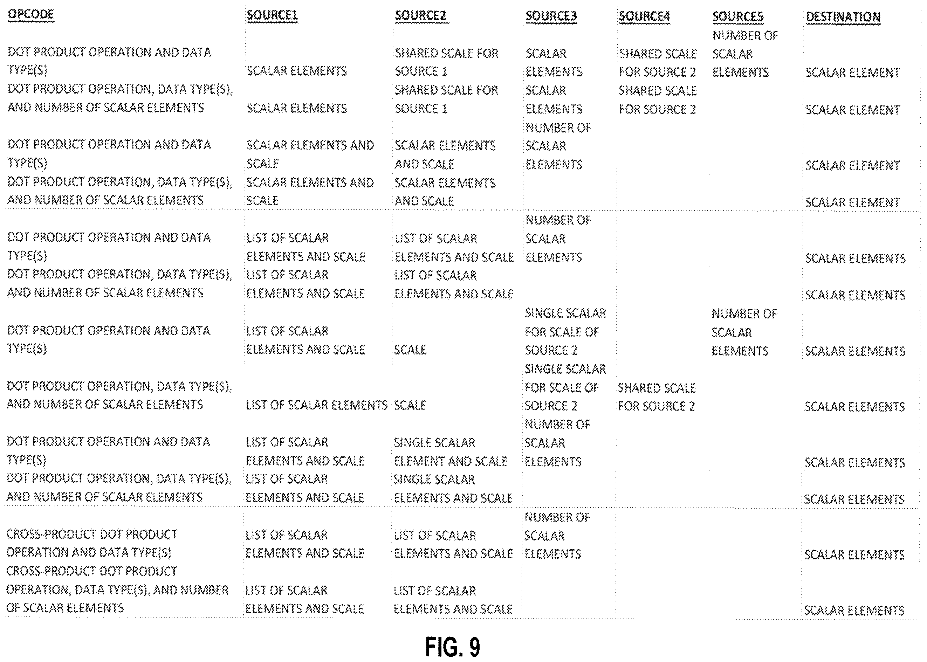

FIG. 9 illustrates examples of instructions that may be supported by the dot product unit circuitry 143. This table reflects examples of opcode usage and operand usage. In some examples, the opcode is provided by field 2303, BPG12, or 3304. In some examples, source and/or destination locations are provided by one or more of bits from a prefix 2301 (e.g., R-bit, VVVV, etc.), addressing information 2305 (e.g., reg 2444, R/M 2446, SIB byte 2404, etc.), 1918, 1920, 1922, 1924, 1926, etc.

The first row details examples of formats of a dot product instruction that uses the block format. The opcode indicates that a dot product operation using block format data is to be performed. The opcode also indicates, in some examples, the data types of the source and destination. For example, FP8 for the source and FP16 for the destination. In this example, the scalar elements and a shared scale for each source A and B are not stored close to each other. As such, the scalar elements and the shared scale for those elements are separately addressed. This addressing may be to a memory location, register, or tile. In some examples, the instruction encoding operates in a fashion where source 1 and source 2 are indicated by SRC1++ (where source 2 is found in the source following source 1 - for example, if source 1 is SRC13 then source 2 is SRC14, but SRC14 does not need to be explicitly defined by the instruction encoding). In some examples, the instruction encoding has each source independently encoded. In this example, the number of scalar elements is defined by a source such as a register or immediate. The destination (e.g., memory, register, or tile) will store the single scalar value produced by the dot product.

The second row details examples of formats of a dot product instruction that uses the block format. The opcode indicates that a dot product operation using block format data is to be performed. The opcode also indicates, in some examples, the data types of the source and destination and a number of scalar elements of the sources. For example, FP8 for the source and FP16 for the destination. In this example, the scalar elements and a shared scale for each source A and B are not stored close to each other. As such, the scalar elements and the shared scale for those elements are separately addressed. This addressing may be to a memory location, register, or tile. In some examples, the instruction encoding operates in a fashion where source 1 and source 2 are indicated by SRC1++ (where source 2 is found in the source following source 1 - for example, if source 1 is SRC13 then source 2 is SRC14, but SRC14 does not need to be explicitly defined by the instruction encoding). In some examples, the instruction encoding operates in where each source is independently encoded. The destination (e.g., memory, register, or tile) will store the single scalar value produced by the dot product.

The third row details examples of formats of a dot product instruction that uses the block format. The opcode indicates that a dot product operation using block format data is to be performed. The opcode also indicates, in some examples, the data types of the source and destination. For example, FP8 for the source and FP16 for the destination. In this example, the scalar elements and a shared scale for each source A and B are stored close to each other. As such, the scalar elements and the shared scale for those elements are addressed together (e.g., stored consecutively in memory, etc.). This addressing may be to a memory location, register, or tile. In this example, the number of scalar elements is defined by a source such as a register or immediate. The destination (e.g., memory, register, or tile) will store the single scalar value produced by the dot product.

The fourth row details examples of formats of a dot product instruction that uses the block format. The opcode indicates that a dot product operation using block format data is to be performed. The opcode also indicates, in some examples, the data types of the source and destination, and number of scalar elements. For example, FP8 for the source and FP16 for the destination. In this example, the scalar elements and a shared scale for each source A and B are stored close to each other. As such, the scalar elements and the shared scale for those elements are addressed together (e.g., stored consecutively in memory, etc.). This addressing may be to a memory location, register, or tile. The destination (e.g., memory, register, or tile) will store the single scalar value produced by the dot product.

The fifth row details examples of formats of a dot product instruction that uses the block format. The opcode indicates that a dot product operation using block format data is to be performed. The opcode also indicates, in some examples, the data types of the source and destination. For example, FP8 for the source and FP16 for the destination. In this example, the sources store lists with n entries (one block number (scale and element) per entry). The execution of this instruction cause n independent block number dot products to be calculated and a vector of n scalars is generated to be stored. The sources may be a memory location, register, or tile. In this example, the number of scalar elements is defined by a source such as a register or immediate. The destination (e.g., memory, register, or tile) will store the vector of n scalar values produced by the dot products. Note that in some examples, a single scale is used for all source elements and is only stored once.

The sixth row details examples of formats of a dot product instruction that uses the block format. The opcode indicates that a dot product operation using block format data is to be performed. The opcode also indicates, in some examples, the data types of the source and destination, and the number of scalar elements. For example, FP8 for the source and FP16 for the destination. In this example, the sources store lists with n entries (one block number (scale and element) per entry). The execution of this instruction cause n independent block number dot products to be calculated and a vector of n scalars is generated to be stored. The sources may be a memory location, register, or tile. The destination (e.g., memory, register, or tile) will store the vector of n scalar values produced by the dot products. Note that in some examples, a single scale is used for all source elements and is only stored once.

The seventh row details examples of formats of a dot product instruction that uses the block format. The opcode indicates that a dot product operation using block format data is to be performed. The opcode also indicates, in some examples, the data types of the source and destination. For example, FP8 for the source and FP16 for the destination. In this example, a source store lists with n entries (one block number (scale and element) per entry). A second source stores a scale and a third source stores a single scalar (together forming a single block number). The single block number is used n-times to produce n scalar dot product values. The sources may be a memory location, register, or tile. In this example, the number of scalar elements is defined by a source such as a register or immediate. The destination (e.g., memory, register, or tile) will store the vector of n scalar values produced by the dot products.

The eighth row details examples of formats of a dot product instruction that uses the block format. The opcode indicates that a dot product operation using block format data is to be performed. The opcode also indicates, in some examples, the data types of the source and destination, and number of scalar elements. For example, FP8 for the source and FP16 for the destination. In this example, a source store lists with n entries (one block number (scale and element) per entry). A second source stores a scale, and a third source stores a single scalar (together forming a single block number). The single block number is used n-times to produce n scalar dot product values. The sources may be a memory location, register, or tile. The destination (e.g., memory, register, or tile) will store the vector of n scalar values produced by the dot products.

The ninth row details examples of formats of a dot product instruction that uses the block format. The opcode indicates that a dot product operation using block format data is to be performed. The opcode also indicates, in some examples, the data types of the source and destination. For example, FP8 for the source and FP16 for the destination. In this example, a source store lists with n entries (one block number (scale and element) per entry). A second source stores a scale and a single scalar (together forming a single block number). The single block number is used n-times to produce n scalar dot product values. The sources may be a memory location, register, or tile. In this example, the number of scalar elements is defined by a source such as a register or immediate. The destination (e.g., memory, register, or tile) will store the vector of n scalar values produced by the dot products.

The tenth row details examples of formats of a dot product instruction that uses the block format. The opcode indicates that a dot product operation using block format data is to be performed. The opcode also indicates, in some examples, the data types of the source and destination, and number of scalar elements. For example, FP8 for the source and FP16 for the destination. In this example, a source store lists with n entries (one block number (scale and element) per entry). A second source stores a scale and a single scalar (together forming a single block number). The single block number is used n-times to produce n scalar dot product values. The sources may be a memory location, register, or tile. The destination (e.g., memory, register, or tile) will store the vector of n scalar values produced by the dot products.

The eleventh row details examples of formats of a cross-product dot product instruction that uses the block format. The opcode indicates that a dot product operation using block format data is to be performed. The opcode also indicates, in some examples, the data types of the source and destination. For example, FP8 for the source and FP16 for the destination. In this example, the sources store lists with n entries (one block number (scale and element) per entry). A cross product of dot products is computed. Every block number $A_i$ $(0 < i < n)$ is multiplied by $B_i$ $(0 < i < n)$. The output is $n^2$ elements. The sources may be a memory location, register, or tile. In this example, the number of scalar elements is defined by a source such as a register or immediate. The destination (e.g., memory, register, or tile) will store the vector of n scalar values produced by the dot products. Note that in some examples, a single scale is used for all source elements and is only stored once.

The twelfth row details examples of formats of a cross-product dot product instruction that uses the block format. The opcode indicates that a dot product operation using block format data is to be performed. The opcode also indicates, in some examples, the data types of the source and destination, and the number of scalar elements. For example, FP8 for the source and FP16 for the destination. In this example, the sources store lists with n entries (one block number (scale and element) per entry In this example, the sources store lists with n entries (one block number (scale and element) per entry). A cross product of dot products is computed. Every block number $A_i$ $(0 < i < n)$ is multiplied by $B_i$ $(0 < i < n)$. The output is $n^2$ elements. The sources may be a memory location, register, or tile. The destination (e.g., memory, register, or tile) will store the vector of n scalar values produced by the dot products. Note that in some examples, a single scale is used for all source elements and is only stored once.

In some examples, only partial k dot products are implemented, and then multiple (partial) scalings are performed (one with each instruction invocation).

In some examples, for cross-product of dot products, one of the sources is transposed prior to the operation.

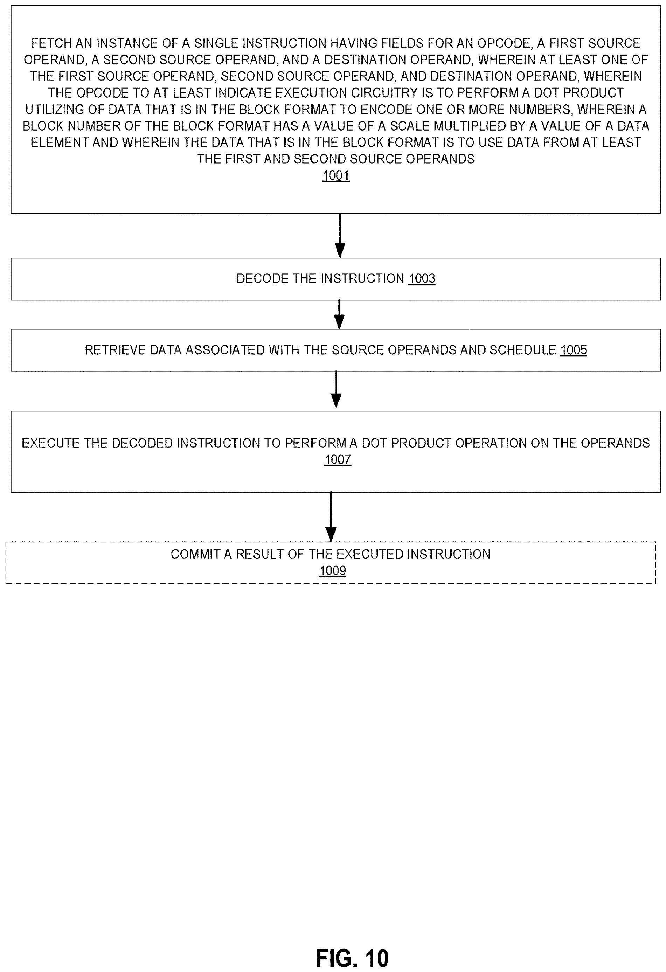

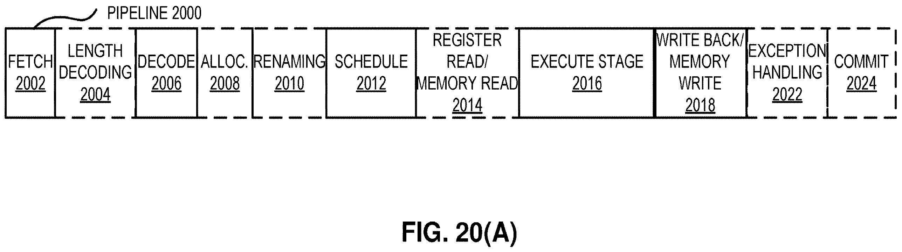

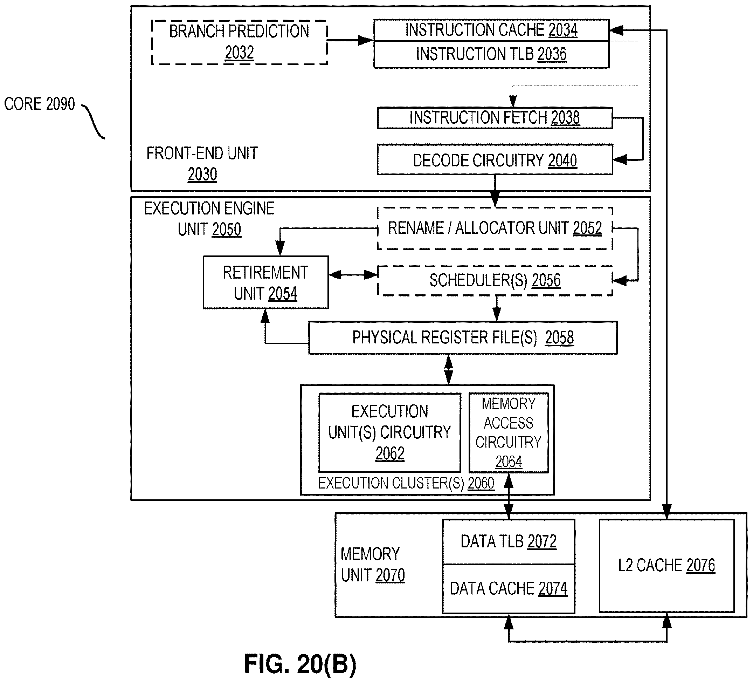

FIG. 10 illustrates an example method performed to process a dot product instruction that uses a block format for at least one operand. For example, a processor core as shown in FIG. 20(B), a pipeline as detailed below, etc., performs this method.

At 1001, an instance of single instruction is fetched. The instance of the single instruction includes fields for an opcode, at least a first source operand, at least second source operand, and a destination operand, wherein the opcode to at least indicate execution circuitry is to perform a dot product utilizing data that is in the block format to encode one or more numbers, wherein a block number of the block format has a value of a scale multiplied by a value of a data element and wherein the data that is in the block format is to use data from at least the first and second source operands.

Examples of instructions have been detailed with respect to FIG. 9. These examples expand on the type of dot product operation that may be performed, how the operands are encoded, etc. Note there may be more than two source operands (e.g., 5 source operands).

The fetched instruction is decoded at 1003. For example, the fetched dot product instruction that uses a block format for at least one operand is decoded by decoder circuitry such as decoder circuitry 1205 or decode circuitry 2040 detailed herein.

Data values associated with the source operands of the decoded instruction are retrieved when the decoded instruction is scheduled at 1005. For example, when one or more of the source operands are memory operands, the data from the indicated memory location is retrieved.

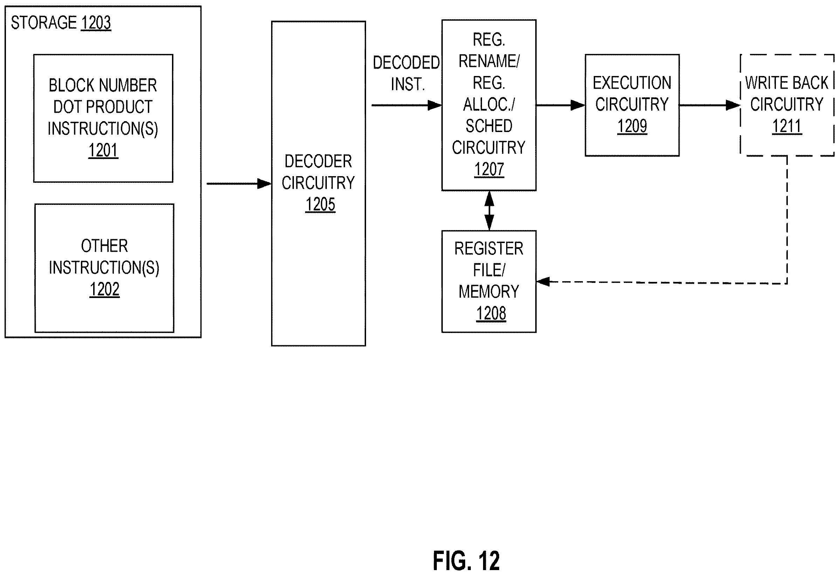

At 1007, the decoded instruction is executed by execution circuitry (hardware) such as execution circuitry 109 shown in FIG. 1, execution circuitry 1209 shown in FIG. 12, or execution cluster(s) 2060 shown in FIG. 20(B). For the dot product instruction that uses a block format for at least one operand, the execution will cause execution circuitry to perform the operations described in connection with FIG. 9.

In some examples, the instruction is committed or retired at 1009.

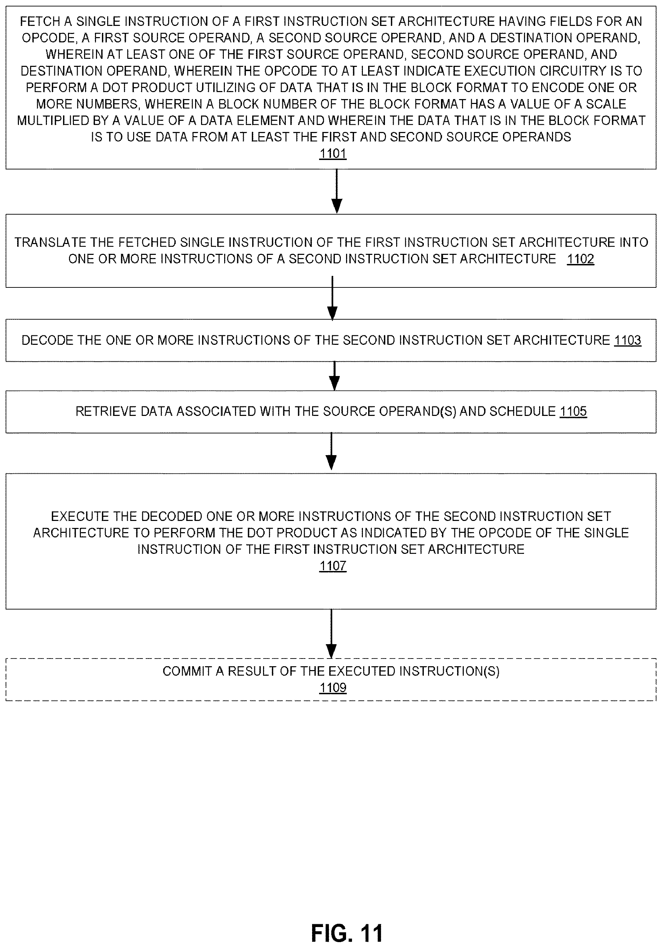

FIG. 11 illustrates an example method to process a dot product instruction that uses a block format for at least one operand using emulation or binary translation. For example, a processor core as shown in FIG. 20(B), a pipeline, and/or emulation/translation layer perform aspects of this method.

An instance of a single instruction of a first instruction set architecture is fetched at 1101. The instance of the single instruction of the first instruction set architecture includes fields for an opcode, at least a first source operand, at least second source operand, and a destination operand, wherein the opcode to at least indicate execution circuitry is to perform a dot product utilizing data that is in the block format to encode one or more numbers, wherein a block number of the block format has a value of a scale multiplied by a value of a data element and wherein the data that is in the block format is to use data from at least the first and second source operands.. Examples of instructions have been detailed with respect to FIG. 9. These examples expand on the type of dot product operation that may be performed, how the operands are encoded, etc. Note there may be more than two source operands (e.g., 5 source operands).

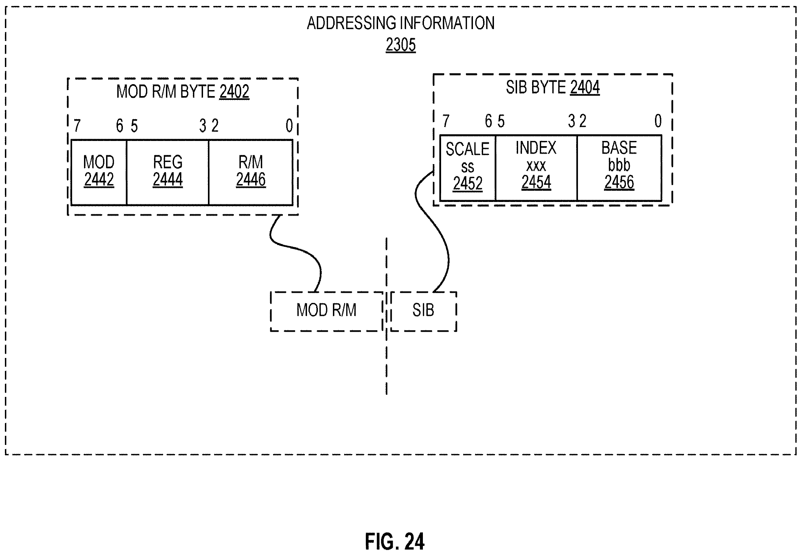

The fetched single instruction of the first instruction set architecture is translated into one or more instructions of a second instruction set architecture at 1102. This translation is performed by a translation and/or emulation layer of software in some examples. In some examples, this translation is performed by an instruction converter 2412 as shown in FIG. 24. In some examples, the translation is performed by hardware translation circuitry.

The one or more translated instructions of the second instruction set architecture are decoded at 1103. For example, the translated instructions are decoded by decoder circuitry such as decoder circuitry 1205 or decode circuitry 2040 detailed herein. In some examples, the operations of translation and decoding at 1102 and 1103 are merged.

Data values associated with the source operand(s) of the decoded one or more instructions of the second instruction set architecture are retrieved and the one or more instructions are scheduled at 1105. For example, when one or more of the source operands are memory operands, the data from the indicated memory location is retrieved.

At 1107, the decoded instruction(s) of the second instruction set architecture is/are executed by execution circuitry (hardware) such as execution circuitry 109 shown in FIG. 1, execution circuitry 1209 shown in FIG. 12, or execution cluster(s) 2060 shown in FIG. 20(B), to perform the operation(s) indicated by the opcode of the single instruction of the first instruction set architecture. For the dot product instruction that uses a block format for at least one operand, the execution will cause execution circuitry to perform the operations described in connection with FIG. 9.

In some examples, the instruction is committed or retired at 1109.

FIG. 12 illustrates examples of computing hardware to process a dot product instruction that uses a block format for at least one operand and other instruction. As illustrated, storage 1203 stores a dot product instruction that uses a block format for at least one operand 1201 and/or other instructions 1202 to be executed.

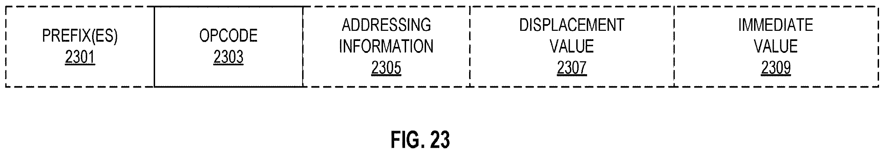

The instruction 1201 is received by decoder circuitry 1205. For example, the decoder circuitry 1205 receives this instruction from fetch circuitry (not shown). The instruction may be in any suitable format, such as that described with reference to FIG. 23 below.

More detailed examples of at least one instruction format for the instruction will be detailed later. The decoder circuitry 1205 decodes the instruction into one or more operations. In some examples, this decoding includes generating a plurality of micro-operations to be performed by execution circuitry (such as execution circuitry 1209). The decoder circuitry 1205 also decodes instruction prefixes.

In some examples, register renaming, register allocation, and/or scheduling circuitry 1207 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 1208 store data as operands of the instruction to be operated by execution circuitry 1209. Example register types include packed data registers, general purpose registers (GPRs), and floating-point registers.

Execution circuitry 1209 executes the decoded instruction. Example detailed execution circuitry includes execution circuitry 109 shown in FIG. 1, and execution cluster(s) 2060 shown in FIG. 20(B), etc. The execution of the decoded instruction causes the execution circuitry to perform a dot product that uses a block format for at least one operand.

In some examples, retirement/write back circuitry 1211 architecturally commits the destination register into the registers or memory 1208 and retires the instruction.

Some examples utilize instruction formats described herein. Some examples are implemented in one or more computer architectures, cores, accelerators, etc. Some examples are generated or are IP cores. Some examples utilize emulation and/or translation.

Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

Example Systems

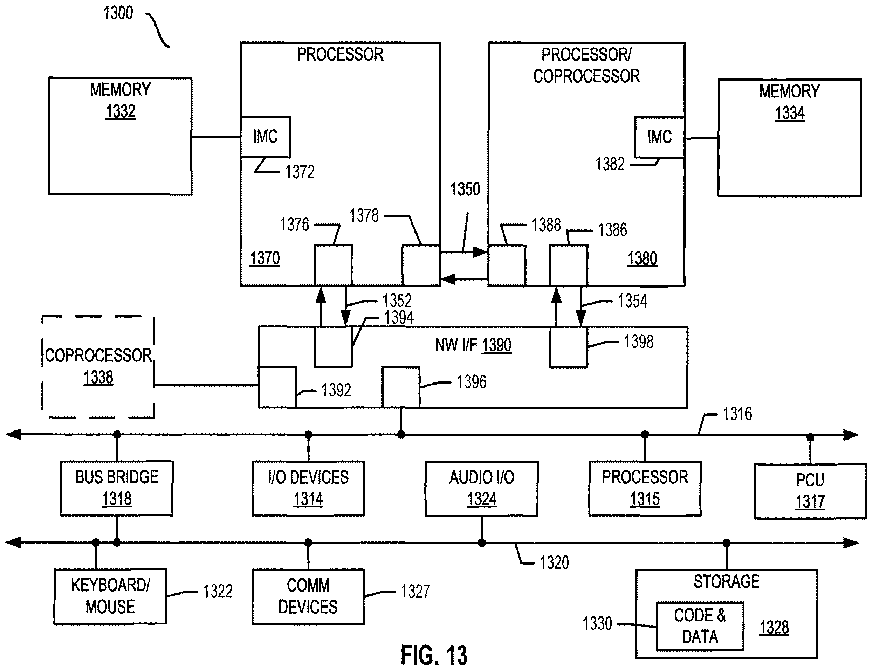

FIG. 13 illustrates an example computing system. Multiprocessor system 1300 is an interfaced system and includes a plurality of processors or cores including a first processor 1370 and a second processor 1380 coupled via an interface 1350 such as a point-to-point (P-P) interconnect, a fabric, and/or bus. In some examples, the first processor 1370 and the second processor 1380 are homogeneous. In some examples, first processor 1370 and the second processor 1380 are heterogenous. Though the example multiprocessor system 1300 is shown to have two processors, the system may have three or more processors, or may be a single processor system. In some examples, the computing system is a system on a chip (SoC).

Processors 1370 and 1380 are shown including integrated memory controller (IMC) circuitry 1372 and 1382, respectively. Processor 1370 also includes interface circuits 1376 and 1378; similarly, second processor 1380 includes interface circuits 1386 and 1388. Processors 1370, 1380 may exchange information via the interface 1350 using interface circuits 1378, 1388. IMCs 1372 and 1382 couple the processors 1370, 1380 to respective memories, namely a memory 1332 and a memory 1334, which may be portions of main memory locally attached to the respective processors.

Processors 1370, 1380 may each exchange information with a network interface (NW I/F) 1390 via individual interfaces 1352, 1354 using interface circuits 1376, 1394, 1386, 1398. The network interface 1390 (e.g., one or more of an interconnect, bus, and/or fabric, and in some examples is a chipset) may optionally exchange information with a co-processor 1338 via an interface circuit 1392. In some examples, the co-processor 1338 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 1370, 1380 or outside of both processors, yet connected with the processors via an interface such as P-P interconnect, such that either or both processors' local cache information may be stored in the shared cache if a processor is placed into a low power mode.

Network interface 1390 may be coupled to a first interface 1316 via interface circuit 1396. In some examples, first interface 1316 may be an interface such as a Peripheral Component Interconnect (PCI) interconnect, a PCI Express interconnect or another I/O interconnect. In some examples, first interface 1316 is coupled to a power control unit (PCU) 1317, which may include circuitry, software, and/or firmware to perform power management operations with regard to the processors 1370, 1380 and/or co-processor 1338. PCU 1317 provides control information to a voltage regulator (not shown) to cause the voltage regulator to generate the appropriate regulated voltage. PCU 1317 also provides control information to control the operating voltage generated. In various examples, PCU 1317 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1317 is illustrated as being present as logic separate from the processor 1370 and/or processor 1380. In other cases, PCU 1317 may execute on a given one or more of cores (not shown) of processor 1370 or 1380. In some cases, PCU 1317 may be implemented as a microcontroller (dedicated or general-purpose) or other control logic configured to execute its own dedicated power management code, sometimes referred to as P-code. In yet other examples, power management operations to be performed by PCU 1317 may be implemented externally to a processor, such as by way of a separate power management integrated circuit (PMIC) or another component external to the processor. In yet other examples, power management operations to be performed by PCU 1317 may be implemented within BIOS or other system software.

Various I/O devices 1314 may be coupled to first interface 1316, along with a bus bridge 1318 which couples first interface 1316 to a second interface 1320. In some examples, one or more additional processor(s) 1315, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 1316. In some examples, second interface 1320 may be a low pin count (LPC) interface. Various devices may be coupled to second interface 1320 including, for example, a keyboard and/or mouse 1322, communication devices 1327 and storage circuitry 1328. Storage circuitry 1328 may be one or more non-transitory machine-readable storage media as described below, such as a disk drive or other mass storage device which may include instructions/code and data 1330 and may implement the storage 1203 in some examples. Further, an audio I/O 1324 may be coupled to second interface 1320. Note that other architectures than the point-to-point architecture described above are possible. For example, instead of the point-to-point architecture, a system such as multiprocessor system 1300 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

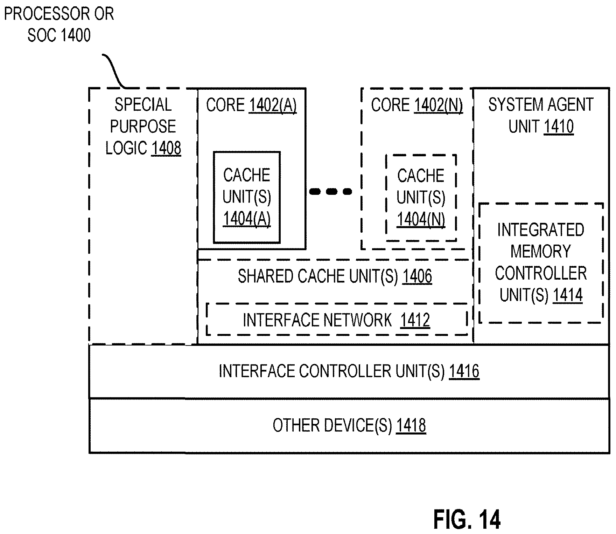

FIG. 14 illustrates a block diagram of an example processor and/or SoC 1400 that may have one or more cores and an integrated memory controller. The solid lined boxes illustrate a processor and/or SoC 1400 with a single core 1402(A), system agent unit circuitry 1410, and a set of one or more interface controller unit(s) circuitry 1416, while the optional addition of the dashed lined boxes illustrates an alternative processor and/or SoC 1400 with multiple cores 1402(A)-(N), a set of one or more integrated memory controller unit(s) circuitry 1414 in the system agent unit circuitry 1410, and special purpose logic 1408, as well as a set of one or more interface controller unit(s) circuitry 1416. Note that the processor and/or SoC 1400 may be one of the processors 1370 or 1380, or co-processor 1338 or 1315 of FIG. 13.

Thus, different implementations of the processor and/or SoC 1400 may include: 1) a CPU with the special purpose logic 1408 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like(which may include one or more cores, not shown), and the cores 1402(A)-(N) being one or more general purpose cores (e.g., general purpose in-order cores, general purpose out-of-order cores, or a combination of the two); 2) a co-processor with the cores 1402(A)-(N) being a large number of special purpose cores intended primarily for graphics and/or scientific (throughput); and 3) a co-processor with the cores 1402(A)-(N) being a large number of general purpose in-order cores. Thus, the processor and/or SoC 1400 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 1400 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1404(A)-(N) within the cores 1402(A)-(N), a set of one or more shared cache unit(s) circuitry 1406, and external memory (not shown) coupled to the set of integrated memory controller unit(s) circuitry 1414. The set of one or more shared cache unit(s) circuitry 1406 may include one or more mid-level caches, such as level 2 (L2), level 3 (L3), level 4 (L4), or other levels of cache, such as a last level cache (LLC), and/or combinations thereof. While in some examples interface network circuitry 1412 (e.g., a ring interconnect) interfaces the special purpose logic 1408 (e.g., integrated graphics logic), the set of shared cache unit(s) circuitry 1406, and the system agent unit circuitry 1410, alternative examples use any number of well-known techniques for interfacing such units. In some examples, coherency is maintained between one or more of the shared cache unit(s) circuitry 1406 and cores 1402(A)-(N). In some examples, interface controller unit(s) circuitry 1416 couple the cores 1402(A)-(N) to one or more other devices 1418 such as one or more I/O devices, storage, one or more communication devices (e.g., wireless networking, wired networking, etc.), etc.

In some examples, one or more of the cores 1402(A)-(N) are capable of multi-threading. The system agent unit circuitry 1410 includes those components coordinating and operating cores 1402(A)-(N). The system agent unit circuitry 1410 may include, for example, power control unit (PCU) circuitry and/or display unit circuitry (not shown). The PCU may be or may include logic and components needed for regulating the power state of the cores 1402(A)-(N) and/or the special purpose logic 1408 (e.g., integrated graphics logic). The display unit circuitry is for driving one or more externally connected displays.

The cores 1402(A)-(N) may be homogenous in terms of instruction set architecture (ISA). Alternatively, the cores 1402(A)-(N) may be heterogeneous in terms of ISA; that is, a subset of the cores 1402(A)-(N) may be capable of executing an ISA, while other cores may be capable of executing only a subset of that ISA or another ISA.

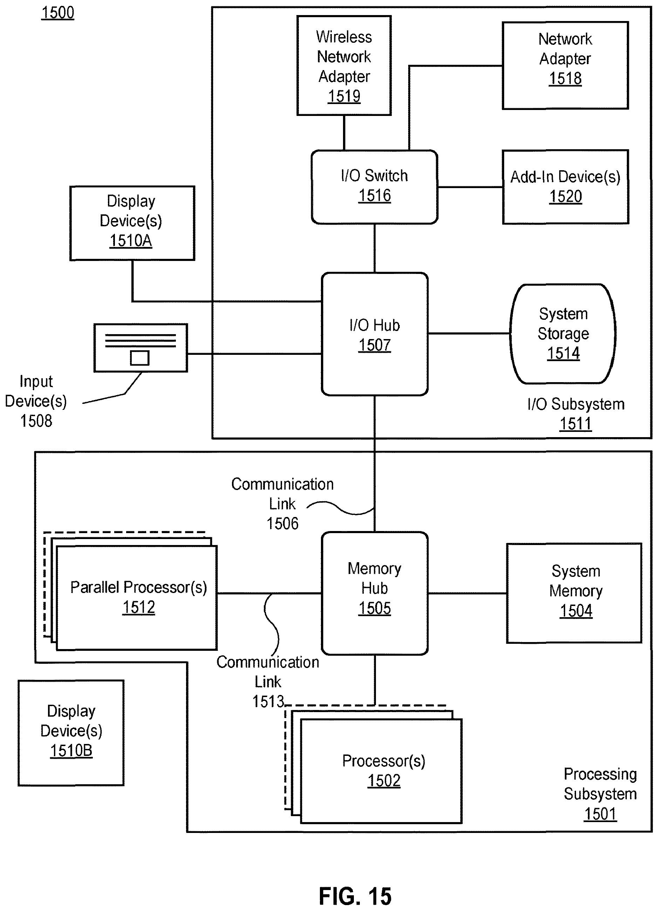

FIG. 15 is a block diagram illustrating a computing system 1500 configured to implement one or more aspects of the examples described herein. The computing system 1500 includes a processing subsystem 1501 having one or more processor(s) 1502 and a system memory 1504 communicating via an interconnection path that may include a memory hub 1505. The memory hub 1505 may be a separate component within a chipset component or may be integrated within the one or more processor(s) 1502. The memory hub 1505 couples with an I/O subsystem 1511 via a communication link 1506. The I/O subsystem 1511 includes an I/O hub 1507 that can enable the computing system 1500 to receive input from one or more input device(s) 1508. Additionally, the I/O hub 1507 can enable a display controller, which may be included in the one or more processor(s) 1502, to provide outputs to one or more display device(s) 151 0A. In some examples the one or more display device(s) 1510A coupled with the I/O hub 1507 can include a local, internal, or embedded display device.

The processing subsystem 1501, for example, includes one or more parallel processor(s) 1512 coupled to memory hub 1505 via a bus or communication link 1513. The communication link 1513 may be one of any number of standards-based communication link technologies or protocols, such as, but not limited to PCI Express, or may be a vendor specific communications interface or communications fabric. The one or more parallel processor(s) 1512 may form a computationally focused parallel or vector processing system that can include a large number of processing cores and/or processing clusters, such as a many integrated core (MIC) processor. For example, the one or more parallel processor(s) 1512 form a graphics processing subsystem that can output pixels to one of the one or more display device(s) 1510A coupled via the I/O hub 1507. The one or more parallel processor(s) 1512 can also include a display controller and display interface (not shown) to enable a direct connection to one or more display device(s) 1510B.

Within the I/O subsystem 1511, a system storage unit 1514 can connect to the I/O hub 1507 to provide a storage mechanism for the computing system 1500. An I/O switch 1516 can be used to provide an interface mechanism to enable connections between the I/O hub 1507 and other components, such as a network adapter 1518 and/or wireless network adapter 1519 that may be integrated into the platform, and various other devices that can be added via one or more add-in device(s) 1520. The add-in device(s) 1520 may also include, for example, one or more external graphics processor devices, graphics cards, and/or compute accelerators. The network adapter 1518 can be an Ethernet adapter or another wired network adapter. The wireless network adapter 1519 can include one or more of a Wi-Fi, Bluetooth, near field communication (NFC), or other network device that includes one or more wireless radios.

The computing system 1500 can include other components not explicitly shown, including USB or other port connections, optical storage drives, video capture devices, and the like, which may also be connected to the I/O hub 1507. Communication paths interconnecting the various components in FIG. 15 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link™ (CXL™) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1512 may incorporate circuitry optimized for graphics and video processing, including, for example, video output circuitry, and constitutes a graphics processing unit (GPU). Alternatively or additionally, the one or more parallel processor(s) 1512 can incorporate circuitry optimized for general purpose processing, while preserving the underlying computational architecture, described in greater detail herein. Components of the computing system 1500 may be integrated with one or more other system elements on a single integrated circuit. For example, the one or more parallel processor(s) 1512, memory hub 1505, processor(s) 1502, and I/O hub 1507 can be integrated into a system on chip (SoC) integrated circuit. Alternatively, the components of the computing system 1500 can be integrated into a single package to form a system in package (SIP) configuration. In some examples at least a portion of the components of the computing system 1500 can be integrated into a multi-chip module (MCM), which can be interconnected with other multi-chip modules into a modular computing system.

It will be appreciated that the computing system 1500 shown herein is illustrative and that variations and modifications are possible. The connection topology, including the number and arrangement of bridges, the number of processor(s) 1502, and the number of parallel processor(s) 1512, may be modified as desired. For instance, system memory 1504 can be connected to the processor(s) 1502 directly rather than through a bridge, while other devices communicate with system memory 1504 via the memory hub 1505 and the processor(s) 1502. In other alternative topologies, the parallel processor(s) 1512 are connected to the I/O hub 1507 or directly to one of the one or more processor(s) 1502, rather than to the memory hub 1505. In other examples, the I/O hub 1507 and memory hub 1505 may be integrated into a single chip. It is also possible that two or more sets of processor(s) 1502 are attached via multiple sockets, which can couple with two or more instances of the parallel processor(s) 1512.

Some of the particular components shown herein are optional and may not be included in all implementations of the computing system 1500. For example, any number of add-in cards or peripherals may be supported, or some components may be eliminated. Furthermore, some architectures may use different terminology for components similar to those illustrated in FIG. 15. For example, the memory hub 1505 may be referred to as a Northbridge in some architectures, while the I/O hub 1507 may be referred to as a Southbridge.

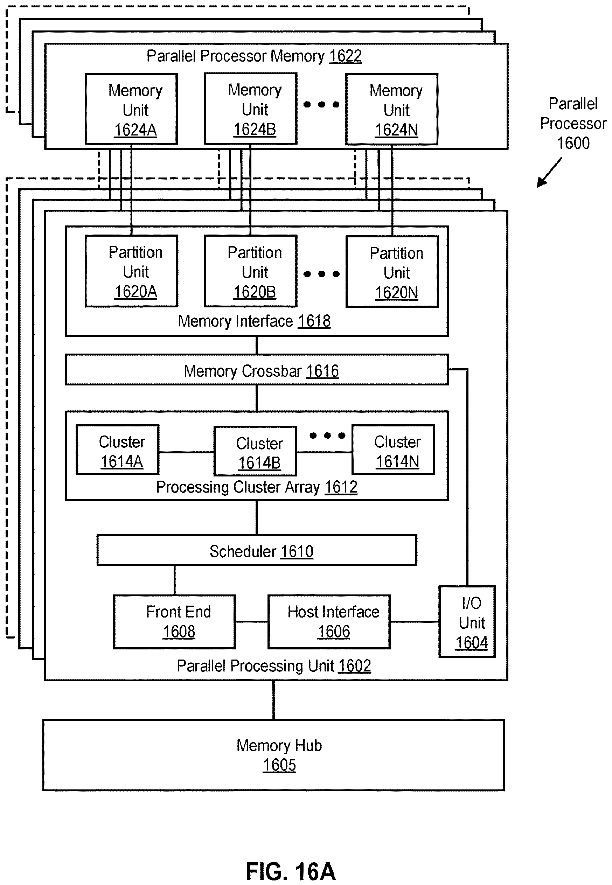

FIG. 16A illustrates examples of a parallel processor 1600. The parallel processor 1600 may be a GPU, GPGPU or the like as described herein. The various components of the parallel processor 1600 may be implemented using one or more integrated circuit devices, such as programmable processors, application specific integrated circuits (ASICs), or field programmable gate arrays (FPGA). The parallel processor 1600 may be one or more of the parallel processor(s) 1512 shown in FIG. 15.

The parallel processor 1600 includes a parallel processing unit 1602. The parallel processing unit includes an I/O unit 1604 that enables communication with other devices, including other instances of the parallel processing unit 1602. The I/O unit 1604 may be directly connected to other devices. For instance, the I/O unit 1604 connects with other devices via the use of a hub or switch interface, such as memory hub 1505. The connections between the memory hub 1505 and the I/O unit 1604 form a communication link 1513. Within the parallel processing unit 1602, the I/O unit 1604 connects with a host interface 1606 and a memory crossbar 1616, where the host interface 1606 receives commands directed to performing processing operations and the memory crossbar 1616 receives commands directed to performing memory operations.

When the host interface 1606 receives a command buffer via the I/O unit 1604, the host interface 1606 can direct work operations to perform those commands to a front end 1608. In some examples the front end 1608 couples with a scheduler 1610, which is configured to distribute commands or other work items to a processing cluster array 1612. The scheduler 1610 ensures that the processing cluster array 1612 is properly configured and in a valid state before tasks are distributed to the processing clusters of the processing cluster array 1612. The scheduler 1610 may be implemented via firmware logic executing on a microcontroller. The microcontroller implemented scheduler 1610 is configurable to perform complex scheduling and work distribution operations at coarse and fine granularity, enabling rapid preemption and context switching of threads executing on the processing cluster array 1612. Preferably, the host software can prove workloads for scheduling on the processing cluster array 1612 via one of multiple graphics processing doorbells. In other examples, polling for new workloads or interrupts can be used to identify or indicate availability of work to perform. The workloads can then be automatically distributed across the processing cluster array 1612 by the scheduler 1610 logic within the scheduler microcontroller.

The processing cluster array 1612 can include up to "N" processing clusters (e.g., cluster 1614A, cluster 1614B, through cluster 1614N). Each cluster 1614A-1614N of the processing cluster array 1612 can execute a large number of concurrent threads. The scheduler 1610 can allocate work to the clusters 1614A-1614N of the processing cluster array 1612 using various scheduling and/or work distribution algorithms, which may vary depending on the workload arising for each type of program or computation. The scheduling can be handled dynamically by the scheduler 1610 or can be assisted in part by compiler logic during compilation of program logic configured for execution by the processing cluster array 1612. Optionally, different clusters 1614A-1614N of the processing cluster array 1612 can be allocated for processing different types of programs or for performing different types of computations.

The processing cluster array 1612 can be configured to perform various types of parallel processing operations. For example, the processing cluster array 1612 is configured to perform general-purpose parallel compute operations. For example, the processing cluster array 1612 can include logic to execute processing tasks including filtering of video and/or audio data, performing modeling operations, including physics operations, and performing data transformations.

The processing cluster array 1612 is configured to perform parallel graphics processing operations. In such examples in which the parallel processor 1600 is configured to perform graphics processing operations, the processing cluster array 1612 can include additional logic to support the execution of such graphics processing operations, including, but not limited to texture sampling logic to perform texture operations, as well as tessellation logic and other vertex processing logic. Additionally, the processing cluster array 1612 can be configured to execute graphics processing related shader programs such as, but not limited to vertex shaders, tessellation shaders, geometry shaders, and pixel shaders. The parallel processing unit 1602 can transfer data from system memory via the I/O unit 1604 for processing. During processing the transferred data can be stored to on-chip memory (e.g., parallel processor memory 1622) during processing, then written back to system memory.

In examples in which the parallel processing unit 1602 is used to perform graphics processing, the scheduler 1610 may be configured to divide the processing workload into approximately equal sized tasks, to better enable distribution of the graphics processing operations to multiple clusters 1614A-1614N of the processing cluster array 1612. In some of these examples, portions of the processing cluster array 1612 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1614A-1614N may be stored in buffers to allow the intermediate data to be transmitted between clusters 1614A-1614N for further processing.

During operation, the processing cluster array 1612 can receive processing tasks to be executed via the scheduler 1610, which receives commands defining processing tasks from front end 1608. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1610 may be configured to fetch the indices corresponding to the tasks or may receive the indices from the front end 1608. The front end 1608 can be configured to ensure the processing cluster array 1612 is configured to a valid state before the workload specified by incoming command buffers (e.g., batch-buffers, push buffers, etc.) is initiated.

Each of the one or more instances of the parallel processing unit 1602 can couple with parallel processor memory 1622. The parallel processor memory 1622 can be accessed via the memory crossbar 1616, which can receive memory requests from the processing cluster array 1612 as well as the I/O unit 1604. The memory crossbar 1616 can access the parallel processor memory 1622 via a memory interface 1618. The memory interface 1618 can include multiple partition units (e.g., partition unit 1620A, partition unit 1620B, through partition unit 1620N) that can each couple to a portion (e.g., memory unit) of parallel processor memory 1622. The number of partition units 1620A-1620N may be configured to be equal to the number of memory units, such that a first partition unit 1620A has a corresponding first memory unit 1624A, a second partition unit 1620B has a corresponding second memory unit 1624B, and an Nth partition unit 1620N has a corresponding Nth memory unit 1624N. In other examples, the number of partition units 1620A-1620N may not be equal to the number of memory devices.

The memory units 1624A-1624N can include various types of memory devices, including dynamic random-access memory (DRAM) or graphics random access memory, such as synchronous graphics random access memory (SGRAM), including graphics double data rate (GDDR) memory. Optionally, the memory units 1624A-1624N may also include 3D stacked memory, including but not limited to high bandwidth memory (HBM). Persons skilled in the art will appreciate that the specific implementation of the memory units 1624A-1624N can vary and can be selected from one of various conventional designs. Render targets, such as frame buffers or texture maps may be stored across the memory units 1624A-1624N, allowing partition units 1620A-1620N to write portions of each render target in parallel to efficiently use the available bandwidth of parallel processor memory 1622. In some examples, a local instance of the parallel processor memory 1622 may be excluded in favor of a unified memory design that utilizes system memory in conjunction with local cache memory.

Optionally, any one of the clusters 1614A-1614N of the processing cluster array 1612 has the ability to process data that will be written to any of the memory units 1624A-1624N within parallel processor memory 1622. The memory crossbar 1616 can be configured to transfer the output of each cluster 1614A-1614N to any partition unit 1620A-1620N or to another cluster 1614A-1614N, which can perform additional processing operations on the output. Each cluster 1614A-1614N can communicate with the memory interface 1618 through the memory crossbar 1616 to read from or write to various external memory devices. In one of the examples with the memory crossbar 1616 the memory crossbar 1616 has a connection to the memory interface 1618 to communicate with the I/O unit 1604, as well as a connection to a local instance of the parallel processor memory 1622, enabling the processing units within the different processing clusters 1614A-1614N to communicate with system memory or other memory that is not local to the parallel processing unit 1602. Generally, the memory crossbar 1616 may, for example, be able to use virtual channels to separate traffic streams between the clusters 1614A-1614N and the partition units 1620A-1620N.

While a single instance of the parallel processing unit 1602 is illustrated within the parallel processor 1600, any number of instances of the parallel processing unit 1602 can be included. For example, multiple instances of the parallel processing unit 1602 can be provided on a single add-in card, or multiple add-in cards can be interconnected. For example, the parallel processor 1600 can be an add-in device, such as add-in device(s) 1520 of FIG. 15, which may be a graphics card such as a discrete graphics card that includes one or more GPUs, one or more memory devices, and device-to-device or network or fabric interfaces. The different instances of the parallel processing unit 1602 can be configured to inter-operate even if the different instances have different numbers of processing cores, different amounts of local parallel processor memory, and/or other configuration differences. Optionally, some instances of the parallel processing unit 1602 can include higher precision floating point units relative to other instances. Systems incorporating one or more instances of the parallel processing unit 1602 or the parallel processor 1600 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1602 can be partitioned into multiple instances. Those multiple instances can be configured to execute workloads associated with different clients in an isolated manner, enabling a pre-determined quality of service to be provided for each client. For example, each cluster 1614A-1614N can be compartmentalized and isolated from other clusters, allowing the processing cluster array 1612 to be divided into multiple compute partitions or instances. In such configuration, workloads that execute on an isolated partition are protected from faults or errors associated with a different workload that executes on a different partition. The partition units 1620A-1620N can be configured to enable a dedicated and/or isolated path to memory for the clusters 1614A-1614N associated with the respective compute partitions. This datapath isolation enables the compute resources within a partition can communicate with one or more assigned memory units 1624A-1624N without being subjected to inference by the activities of other partitions.

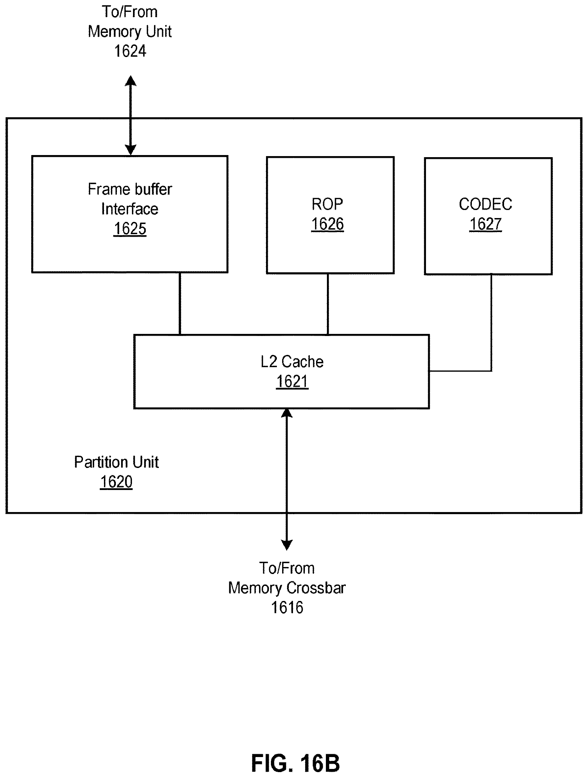

FIG. 16B is a block diagram of a partition unit 1620. The partition unit 1620 may be an instance of one of the partition units 1620A-1620N of FIG. 16A. As illustrated, the partition unit 1620 includes an L2 cache 1621, a frame buffer interface 1625, and a ROP 1626 (raster operations unit). The L2 cache 1621 is a read/write cache that is configured to perform load and store operations received from the memory crossbar 1616 and ROP 1626. Read misses and urgent write-back requests are output by L2 cache 1621 to frame buffer interface 1625 for processing. Updates can also be sent to the frame buffer via the frame buffer interface 1625 for processing. In some examples the frame buffer interface 1625 interfaces with one of the memory units in parallel processor memory, such as the memory units 1624A-1624N of FIG. 16A (e.g., within parallel processor memory 1622). The partition unit 1620 may additionally or alternatively also interface with one of the memory units in parallel processor memory via a memory controller (not shown).

In graphics applications, the ROP 1626 is a processing unit that performs raster operations such as stencil, z test, blending, and the like. The ROP 1626 then outputs processed graphics data that is stored in graphics memory. In some examples the ROP 1626 includes or couples with a CODEC 1627 that includes compression logic to compress depth or color data that is written to memory or the L2 cache 1621 and decompress depth or color data that is read from memory or the L2 cache 1621. The compression logic can be lossless compression logic that makes use of one or more of multiple compression algorithms. The type of compression that is performed by the CODEC 1627 can vary based on the statistical characteristics of the data to be compressed. For example, in some examples, delta color compression is performed on depth and color data on a per-tile basis. In some examples the CODEC 1627 includes compression and decompression logic that can compress and decompress compute data associated with machine learning operations. The CODEC 1627 can, for example, compress sparse matrix data for sparse machine learning operations. The CODEC 1627 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1626 may be included within each processing cluster (e.g., cluster 1614A-1614N of FIG. 16A) instead of within the partition unit 1620. In such example, read and write requests for pixel data are transmitted over the memory crossbar 1616 instead of pixel fragment data. The processed graphics data may be displayed on a display device, such as one of the one or more display device(s) 1510A-1510B of FIG. 15, routed for further processing by the processor(s) 1502, or routed for further processing by one of the processing entities within the parallel processor 1600 of FIG. 16A.

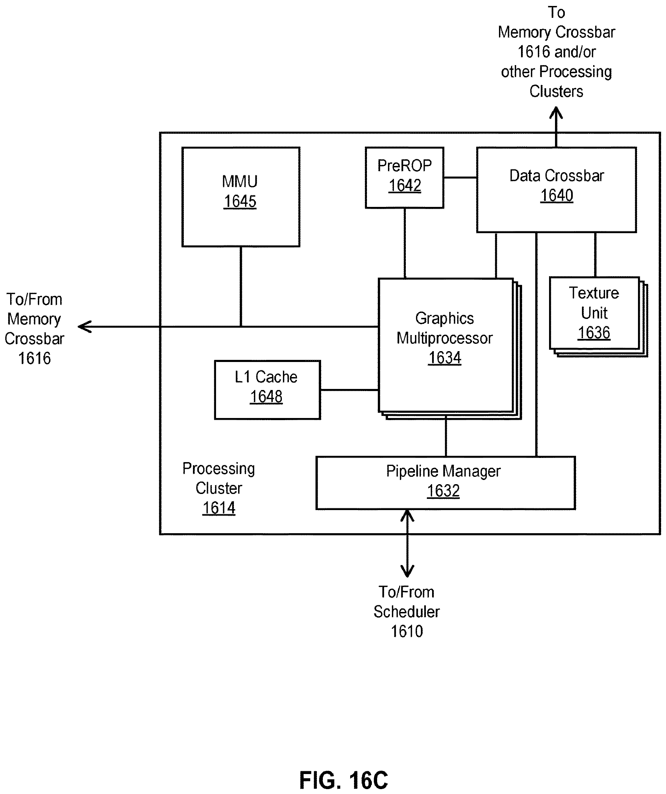

FIG. 16C is a block diagram of a processing cluster 1614 within a parallel processing unit. For example, the processing cluster is an instance of one of the processing clusters 1614A-1614N of FIG. 16A. The processing cluster 1614 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1614 can be controlled via a pipeline manager 1632 that distributes processing tasks to SIMT parallel processors. The pipeline manager 1632 receives instructions from the scheduler 1610 of FIG. 16A and manages execution of those instructions via a graphics multiprocessor 1634 and/or a texture unit 1636. The graphics multiprocessor 1634 is an exemplary instance of a SIMT parallel processor. However, various types of SIMT parallel processors of differing architectures may be included within the processing cluster 1614. One or more instances of the graphics multiprocessor 1634 can be included within a processing cluster 1614. The graphics multiprocessor 1634 can process data and a data crossbar 1640 can be used to distribute the processed data to one of multiple possible destinations, including other shader units. The pipeline manager 1632 can facilitate the distribution of processed data by specifying destinations for processed data to be distributed via the data crossbar 1640.

Each graphics multiprocessor 1634 within the processing cluster 1614 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1614 constitute a thread. A set of threads executing across the set of parallel processing engines is a thread group. A thread group executes the same program on different input data. Each thread within a thread group can be assigned to a different processing engine within a graphics multiprocessor 1634. A thread group may include fewer threads than the number of processing engines within the graphics multiprocessor 1634. When a thread group includes fewer threads than the number of processing engines, one or more of the processing engines may be idle during cycles in which that thread group is being processed. A thread group may also include more threads than the number of processing engines within the graphics multiprocessor 1634. When the thread group includes more threads than the number of processing engines within the graphics multiprocessor 1634, processing can be performed over consecutive clock cycles. Optionally, multiple thread groups can be executed concurrently on the graphics multiprocessor 1634.

The graphics multiprocessor 1634 may include an internal cache memory to perform load and store operations. Optionally, the graphics multiprocessor 1634 can forego an internal cache and use a cache memory (e.g., level 1 (L1) cache 1648) within the processing cluster 1614. Each graphics multiprocessor 1634 also has access to level 2 (L2) caches within the partition units (e.g., partition units 1620A-1620N of FIG. 16A) that are shared among all processing clusters 1614 and may be used to transfer data between threads. The graphics multiprocessor 1634 may also access off-chip global memory, which can include one or more of local parallel processor memory and/or system memory. Any memory external to the parallel processing unit 1602 may be used as global memory. Embodiments in which the processing cluster 1614 includes multiple instances of the graphics multiprocessor 1634 can share common instructions and data, which may be stored in the L1 cache 1648.

Each processing cluster 1614 may include an MMU 1645 (memory management unit) that is configured to map virtual addresses into physical addresses. In other examples, one or more instances of the MMU 1645 may reside within the memory interface 1618 of FIG. 16A. The MMU 1645 includes a set of page table entries (PTEs) used to map a virtual address to a physical address of a tile and optionally a cache line index. The MMU 1645 may include address translation lookaside buffers (TLB) or caches that may reside within the graphics multiprocessor 1634 or the L1 cache 1648 of processing cluster 1614. The physical address is processed to distribute surface data access locality to allow efficient request interleaving among partition units. The cache line index may be used to determine whether a request for a cache line is a hit or miss.

In graphics and computing applications, a processing cluster 1614 may be configured such that each graphics multiprocessor 1634 is coupled to a texture unit 1636 for performing texture mapping operations, e.g., determining texture sample positions, reading texture data, and filtering the texture data. Texture data is read from an internal texture L1 cache (not shown) or in some examples from the L1 cache within graphics multiprocessor 1634 and is fetched from an L2 cache, local parallel processor memory, or system memory, as needed. Each graphics multiprocessor 1634 outputs processed tasks to the data crossbar 1640 to provide the processed task to another processing cluster 1614 for further processing or to store the processed task in an L2 cache, local parallel processor memory, or system memory via the memory crossbar 1616. A preROP 1642 (pre-raster operations unit) is configured to receive data from graphics multiprocessor 1634, direct data to ROP units, which may be located with partition units as described herein (e.g., partition units 1620A-1620N of FIG. 16A). The preROP 1642 unit can perform optimizations for color blending, organize pixel color data, and perform address translations.

It will be appreciated that the core architecture described herein is illustrative and that variations and modifications are possible. Any number of processing units, e.g., graphics multiprocessor 1634, texture units 1636, preROPs 1642, etc., may be included within a processing cluster 1614. Further, while only one processing cluster 1614 is shown, a parallel processing unit as described herein may include any number of instances of the processing cluster 1614. Optionally, each processing cluster 1614 can be configured to operate independently of other processing clusters 1614 using separate and distinct processing units, L1 caches, L2 caches, etc.

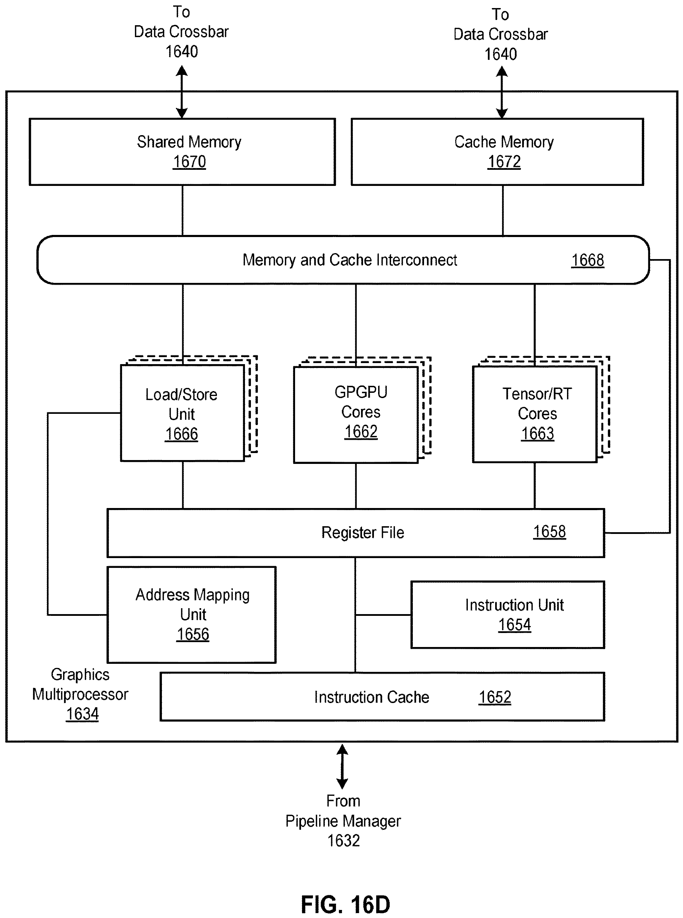

FIG. 16D shows an example of the graphics multiprocessor 1634 in which the graphics multiprocessor 1634 couples with the pipeline manager 1632 of the processing cluster 1614. The graphics multiprocessor 1634 has an execution pipeline including but not limited to an instruction cache 1652, an instruction unit 1654, an address mapping unit 1656, a register file 1658, one or more general purpose graphics processing unit (GPGPU) cores 1662, and one or more load/store units 1666. The GPGPU cores 1662 and load/store units 1666 are coupled with cache memory 1672 and shared memory 1670 via a memory and cache interconnect 1668. The graphics multiprocessor 1634 may additionally include tensor and/or ray-tracing cores 1663 that include hardware logic to accelerate matrix and/or ray-tracing operations.

The instruction cache 1652 may receive a stream of instructions to execute from the pipeline manager 1632. The instructions are cached in the instruction cache 1652 and dispatched for execution by the instruction unit 1654. The instruction unit 1654 can dispatch instructions as thread groups (e.g., warps), with each thread of the thread group assigned to a different execution unit within GPGPU core 1662. An instruction can access any of a local, shared, or global address space by specifying an address within a unified address space. The address mapping unit 1656 can be used to translate addresses in the unified address space into a distinct memory address that can be accessed by the load/store units 1666.

The register file 1658 provides a set of registers for the functional units of the graphics multiprocessor 1634. The register file 1658 provides temporary storage for operands connected to the data paths of the functional units (e.g., GPGPU cores 1662, load/store units 1666) of the graphics multiprocessor 1634. The register file 1658 may be divided between each of the functional units such that each functional unit is allocated a dedicated portion of the register file 1658. For example, the register file 1658 may be divided between the different warps being executed by the graphics multiprocessor 1634.

The GPGPU cores 1662 can each include floating point units (FPUs) and/or integer arithmetic logic units (ALUs) that are used to execute instructions of the graphics multiprocessor 1634. In some implementations, the GPGPU cores 1662 can include hardware logic that may otherwise reside within the tensor and/or ray-tracing cores 1663. The GPGPU cores 1662 can be similar in architecture or can differ in architecture. For example and in some examples, a first portion of the GPGPU cores 1662 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1634 can additionally include one or more fixed function or special function units to perform specific functions such as copy rectangle or pixel blending operations. One or more of the GPGPU cores can also include fixed or special function logic.

The GPGPU cores 1662 may include SIMD logic capable of performing a single instruction on multiple sets of data. Optionally, GPGPU cores 1662 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1668 is an interconnect network that connects each of the functional units of the graphics multiprocessor 1634 to the register file 1658 and to the shared memory 1670. For example, the memory and cache interconnect 1668 is a crossbar interconnect that allows the load/store unit 1666 to implement load and store operations between the shared memory 1670 and the register file 1658. The register file 1658 can operate at the same frequency as the GPGPU cores 1662, thus data transfer between the GPGPU cores 1662 and the register file 1658 is very low latency. The shared memory 1670 can be used to enable communication between threads that execute on the functional units within the graphics multiprocessor 1634. The cache memory 1672 can be used as a data cache for example, to cache texture data communicated between the functional units and the texture unit 1636. The shared memory 1670 can also be used as a program managed cached. The shared memory 1670 and the cache memory 1672 can couple with the data crossbar 1640 to enable communication with other components of the processing cluster. Threads executing on the GPGPU cores 1662 can programmatically store data within the shared memory in addition to the automatically cached data that is stored within the cache memory 1672.

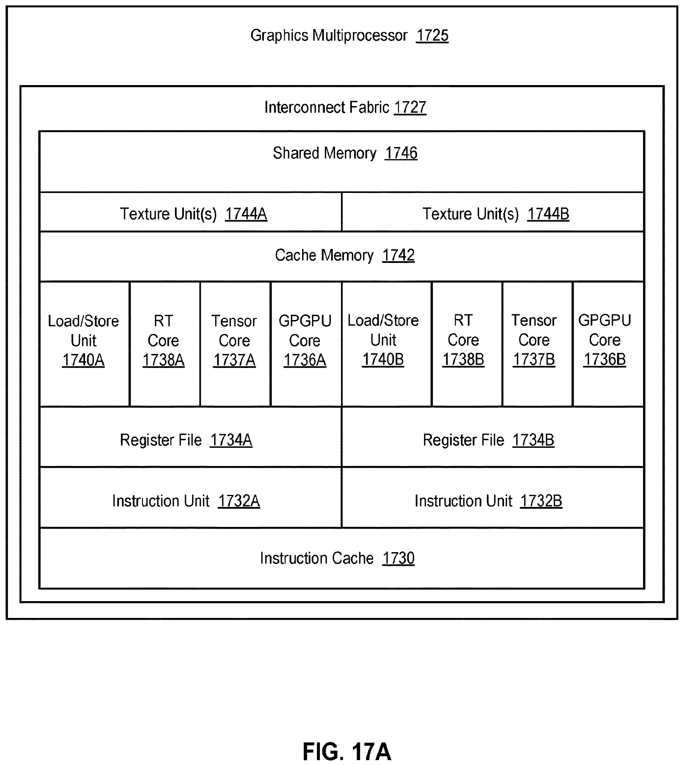

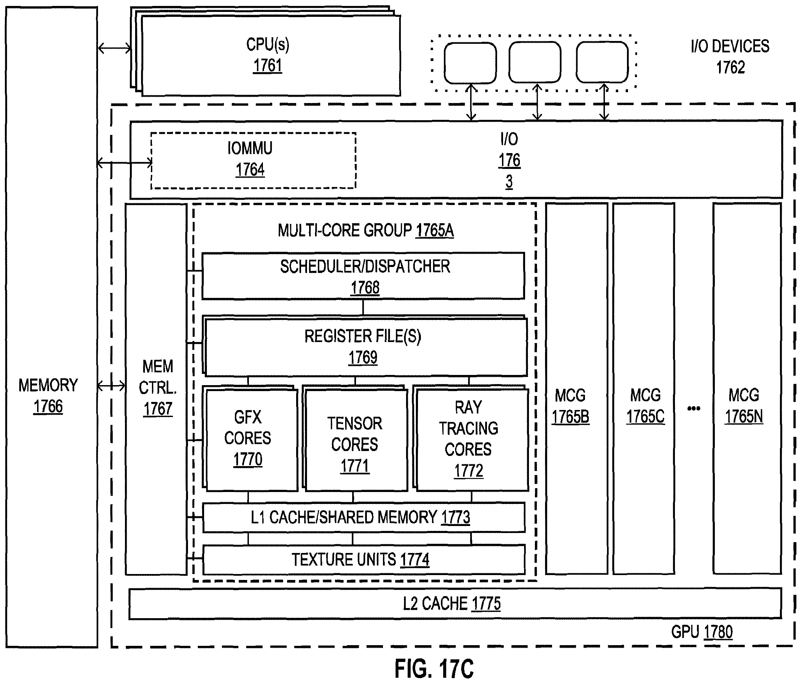

FIGS. 17A-17C illustrate additional graphics multiprocessors, according to examples. FIG. 17A-17B illustrate graphics multiprocessors 1725, 1750, which are related to the graphics multiprocessor 1634 of FIG. 16C and may be used in place of one of those. Therefore, the disclosure of any features in combination with the graphics multiprocessor 1634 herein also discloses a corresponding combination with the graphics multiprocessors 1725, 1750, but is not limited to such. FIG. 17C illustrates a graphics processing unit (GPU) 1780 which includes dedicated sets of graphics processing resources arranged into multi-core groups 1765A-1765N, which correspond to the graphics multiprocessors 1725, 1750. The illustrated graphics multiprocessors 1725, 1750 and the multi-core groups 1765A-1765N can be streaming multiprocessors (SM) capable of simultaneous execution of a large number of execution threads.

The graphics multiprocessor 1725 of FIG. 17A includes multiple additional instances of execution resource units relative to the graphics multiprocessor 1634 of FIG. 16D. For example, the graphics multiprocessor 1725 can include multiple instances of the instruction unit 1732A-1732B, register file 1734A-1734B, and texture unit(s) 1744A-1744B. The graphics multiprocessor 1725 also includes multiple sets of graphics or compute execution units (e.g., GPGPU core 1736A-1736B, tensor core 1737A-1737B, ray-tracing core 1738A-1738B) and multiple sets of load/store units 1740A-1740B. The execution resource units have a common instruction cache 1730, texture and/or data cache memory 1742, and shared memory 1746.

The various components can communicate via an interconnect fabric 1727. The interconnect fabric 1727 may include one or more crossbar switches to enable communication between the various components of the graphics multiprocessor 1725. The interconnect fabric 1727 may be a separate, high-speed network fabric layer upon which each component of the graphics multiprocessor 1725 is stacked. The components of the graphics multiprocessor 1725 communicate with remote components via the interconnect fabric 1727. For example, the cores 1736A-1736B, 1737A-1737B, and 1738A-1738B can each communicate with shared memory 1746 via the interconnect fabric 1727. The interconnect fabric 1727 can arbitrate communication within the graphics multiprocessor 1725 to ensure a fair bandwidth allocation between components.

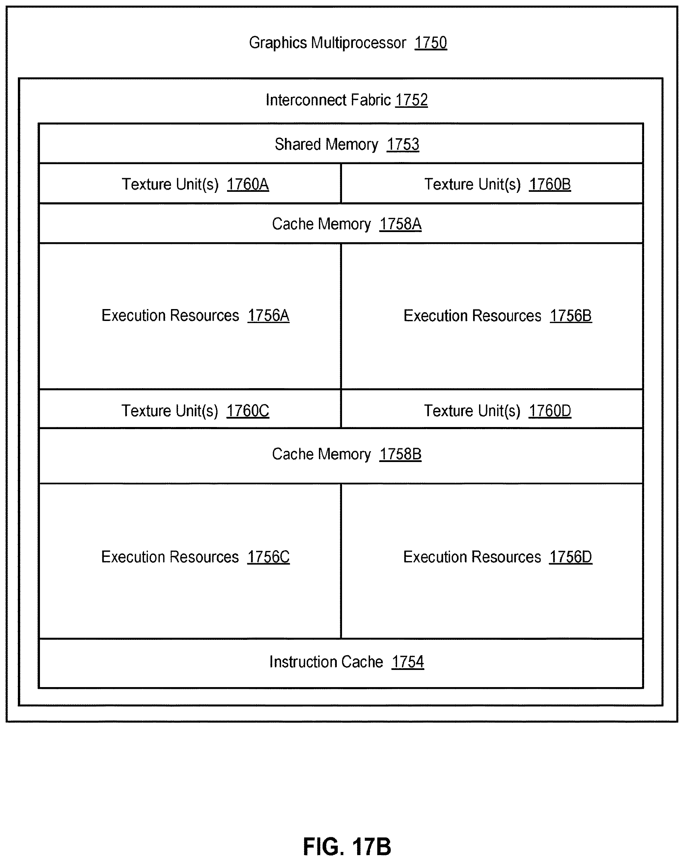

The graphics multiprocessor 1750 of FIG. 17B includes multiple sets of execution resources 1756A-1756D, where each set of execution resource includes multiple instruction units, register files, GPGPU cores, and load store units, as illustrated in FIG. 16D and FIG. 17A. The execution resources 1756A-1756D can work in concert with texture unit(s) 1760A-1760D for texture operations, while sharing an instruction cache 1754, and shared memory 1753. For example, the execution resources 1756A-1756D can share an instruction cache 1754 and shared memory 1753, as well as multiple instances of a texture and/or data cache memory 1758A-1758B. The various components can communicate via an interconnect fabric 1752 similar to the interconnect fabric 1727 of FIG. 17A.

Persons skilled in the art will understand that the architecture described in FIG. 1, 16A-16D, and 17A-17B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1602 of FIG. 16A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 17C illustrates a graphics processing unit (GPU) 1780 which includes dedicated sets of graphics processing resources arranged into multi-core groups 1765A-1765N. While the details of only a single multi-core group 1765A are provided, it will be appreciated that the other multi-core groups 1765B-1765N may be equipped with the same or similar sets of graphics processing resources. Details described with respect to the multi-core groups 1765A-1765N may also apply to any graphics multiprocessor 1634, 1725, 1750 described herein.

As illustrated, a multi-core group 1765A may include a set of graphics cores 1770, a set of tensor cores 1771, and a set of ray tracing cores 1772. A scheduler/dispatcher 1768 schedules and dispatches the graphics threads for execution on the various cores 1770, 1771, 1772. A set of register files 1769 store operand values used by the cores 1770, 1771, 1772 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1773 store graphics data such as texture data, vertex data, pixel data, ray data, bounding volume data, etc., locally within each multi-core group 1765A. One or more texture units 1774 can also be used to perform texturing operations, such as texture mapping and sampling. A Level 2 (L2) cache 1775 shared by all or a subset of the multi-core groups 1765A-1765N stores graphics data and/or instructions for multiple concurrent graphics threads. As illustrated, the L2 cache 1775 may be shared across a plurality of multi-core groups 1765A-1765N. One or more memory controllers 1767 couple the GPU 1780 to a memory 1766 which may be a system memory (e.g., DRAM) and/or a dedicated graphics memory (e.g., GDDR6 memory).

Input/output (I/O) circuitry 1763 couples the GPU 1780 to one or more I/O devices 1762 such as digital signal processors (DSPs), network controllers, or user input devices. An on-chip interconnect may be used to couple the I/O devices 1762 to the GPU 1780 and memory 1766. One or more I/O memory management units (IOMMUs) 1764 of the I/O circuitry 1763 couple the I/O devices 1762 directly to the system memory 1766. Optionally, the IOMMU 1764 manages multiple sets of page tables to map virtual addresses to physical addresses in system memory 1766. The I/O devices 1762, CPU(s) 1761, and GPU(s) 1780 may then share the same virtual address space.

In one implementation of the IOMMU 1764, the IOMMU 1764 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1766). The base addresses of each of the first and second sets of page tables may be stored in control registers and swapped out on a context switch (e.g., so that the new context is provided with access to the relevant set of page tables). While not illustrated in FIG. 17C, each of the cores 1770, 1771, 1772 and/or multi-core groups 1765A-1765N may include translation lookaside buffers (TLBs) to cache guest virtual to guest physical translations, guest physical to host physical translations, and guest virtual to host physical translations.

The CPU(s) 1761, GPUs 1780, and I/O devices 1762 may be integrated on a single semiconductor chip and/or chip package. The illustrated memory 1766 may be integrated on the same chip or may be coupled to the memory controllers 1767 via an off-chip interface. In one implementation, the memory 1766 comprises GDDR6 memory which shares the same virtual address space as other physical system-level memories, although the underlying principles described herein are not limited to this specific implementation.

The tensor cores 1771 may include a plurality of execution units specifically designed to perform matrix operations, which are the fundamental compute operation used to perform deep learning operations. For example, simultaneous matrix multiplication operations may be used for neural network training and inferencing. The tensor cores 1771 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1771. The training of neural networks, in particular, requires a significant number of matrix dot product operations. In order to process an inner-product formulation of an $N \times N \times N$ matrix multiply, the tensor cores 1771 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1771 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1771 support a sparse mode of operation for matrices in which the vast majority of values are zero. The tensor cores 1771 include support for sparse input matrices that are encoded in a sparse matrix representation (e.g., coordinate list encoding (COO), compressed sparse row (CSR), compress sparse column (CSC), etc.). The tensor cores 1771 also include support for compressed sparse matrix representations in the event that the sparse matrix representation may be further compressed. Compressed, encoded, and/or compressed and encoded matrix data, along with associated compression and/or encoding metadata, can be read by the tensor cores 1771 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1771, output matrix C may be output in a compressed format, a sparse encoding, or a compressed sparse encoding.

The ray tracing cores 1772 may accelerate ray tracing operations for both real-time ray tracing and non-real-time ray tracing implementations. In particular, the ray tracing cores 1772 may include ray traversal/intersection circuitry for performing ray traversal using bounding volume hierarchies (BVHs) and identifying intersections between rays and primitives enclosed within the BVH volumes. The ray tracing cores 1772 may also include circuitry for performing depth testing and culling (e.g., using a Z buffer or similar arrangement). In one implementation, the ray tracing cores 1772 perform traversal and intersection operations in concert with the image denoising techniques described herein, at least a portion of which may be executed on the tensor cores 1771. For example, the tensor cores 1771 may implement a deep learning neural network to perform denoising of frames generated by the ray tracing cores 1772. However, the CPU(s) 1761, graphics cores 1770, and/or ray tracing cores 1772 may also implement all or a portion of the denoising and/or deep learning algorithms.

In addition, as described above, a distributed approach to denoising may be employed in which the GPU 1780 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1772 may process all BVH traversal and/or ray-primitive intersections, saving the graphics cores 1770 from being overloaded with thousands of instructions per ray. For example, each ray tracing core 1772 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1765A can simply launch a ray probe, and the ray tracing cores 1772 independently perform ray traversal and intersection and return hit data (e.g., a hit, no hit, multiple hits, etc.) to the thread context. The other cores 1770, 1771 are freed to perform other graphics or compute work while the ray tracing cores 1772 perform the traversal and intersection operations.

Optionally, each ray tracing core 1772 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1770 and tensor cores 1771) are freed to perform other forms of graphics work.

In some examples described below, a hybrid rasterization/ray tracing approach is used in which work is distributed between the graphics cores 1770 and ray tracing cores 1772.

The ray tracing cores 1772 (and/or other cores 1770, 1771) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1772, graphics cores 1770 and tensor cores 1771 is Vulkan API (e.g., Vulkan version 1.1.85 and later). Note, however, that the underlying principles described herein are not limited to any particular ray tracing ISA.

In general, the various cores 1772, 1771, 1770 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:

- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1772 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1772 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1772 can also be used to perform computations that are not directly analogous to ray tracing. For example, mesh projection, mesh refinement, and volume sampling computations can be accelerated using the ray tracing cores 1772. Generic coordinate space calculations, such as nearest neighbor calculations can also be performed. For example, the set of points near a given point can be discovered by defining a bounding box in the coordinate space around the point. BVH and ray probe logic within the ray tracing cores 1772 can then be used to determine the set of point intersections within the bounding box. The intersections constitute the origin point and the nearest neighbors to that origin point. Computations that are performed using the ray tracing cores 1772 can be performed in parallel with computations performed on the graphics cores 1772 and tensor cores 1771. A shader compiler can be configured to compile a compute shader or other general-purpose graphics processing program into low level primitives that can be parallelized across the graphics cores 1770, tensor cores 1771, and ray tracing cores 1772.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

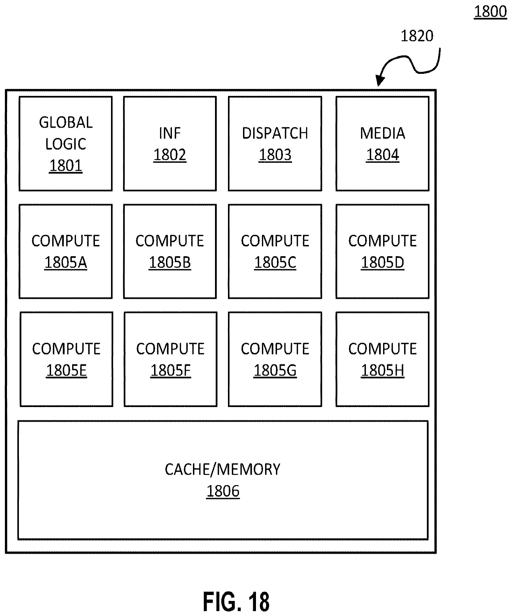

FIG. 18 shows a parallel compute system 1800, according to some examples. In some examples the parallel compute system 1800 includes a parallel processor 1820, which can be a graphics processor or compute accelerator as described herein. The parallel processor 1820 includes a global logic unit 1801, an interface 1802, a thread dispatcher 1803, a media unit 1804, a set of compute units 1805A-1805H, and a cache/memory units 1806. The global logic unit 1801, in some examples, includes global functionality for the parallel processor 1820, including device configuration registers, global schedulers, power management logic, and the like. The interface 1802 can include a front-end interface for the parallel processor 1820. The thread dispatcher 1803 can receive workloads from the interface 1802 and dispatch threads for the workload to the compute units 1805A-1805H. If the workload includes any media operations, at least a portion of those operations can be performed by the media unit 1804. The media unit can also offload some operations to the compute units 1805A-1805H. The cache/memory units 1806 can include cache memory (e.g., L3 cache) and local memory (e.g., HBM, GDDR) for the parallel processor 1820. Compute units 1805 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

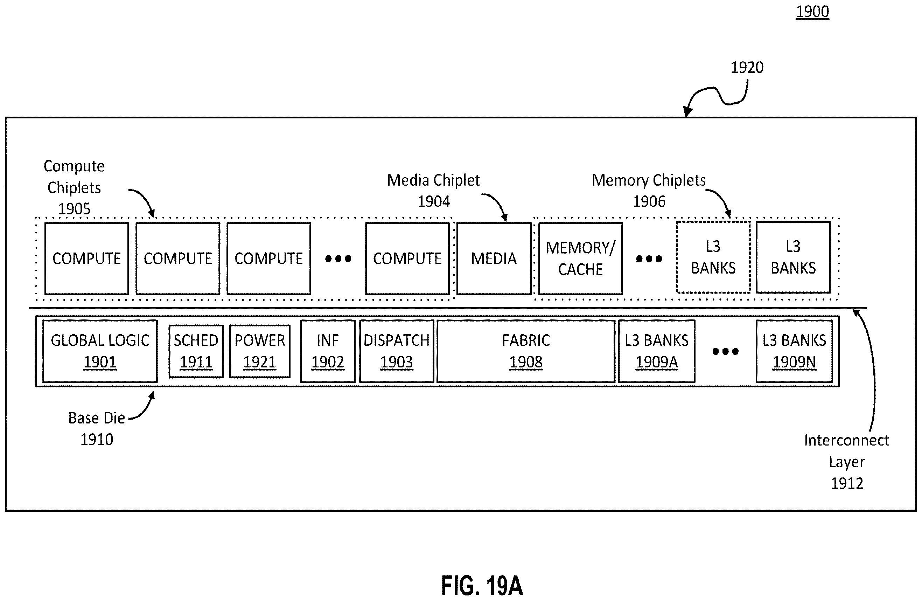

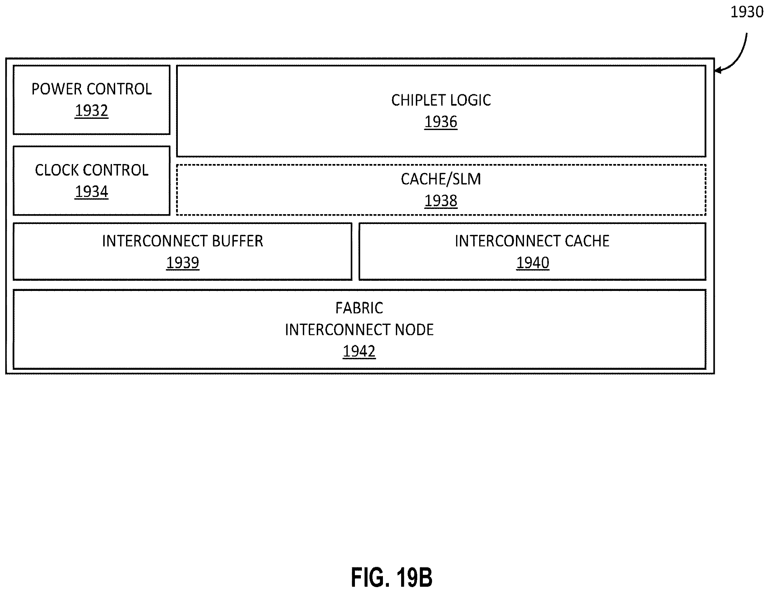

FIGS. 19A-19B illustrate a hybrid logical/physical view of a disaggregated parallel processor, according to examples described herein. FIG. 19A illustrates a disaggregated parallel compute system 1900. FIG. 19B illustrates a chiplet 1930 of the disaggregated parallel compute system 1900.

As shown in FIG. 19A, a disaggregated parallel compute system 1900 can include a parallel processor 1920 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1905, a media chiplet 1904, and memory chiplets 1906. Each chiplet can be separately manufactured using different process technologies. For example, compute chiplets 1905 may be manufactured using the smallest or most advanced process technology available at the time of fabrication, while memory chiplets 1906 or other chiplets (e.g., I/O, networking, etc.) may be manufactured using a larger or less advanced process technologies.

The various chiplets can be bonded to a base die 1910 and configured to communicate with each other and logic within the base die 1910 via an interconnect layer 1912. In some examples, the base die 1910 can include global logic 1901, which can include scheduler 1911 and power management 1921 logic units, an interface 1902, a dispatch unit 1903, and an interconnect fabric 1908 coupled with or integrated with one or more L3 cache banks 1909A-1909N. The interconnect fabric 1908 can be an inter-chiplet fabric that is integrated into the base die 1910. Logic chiplets can use the fabric 1908 to relay messages between the various chiplets. Additionally, L3 cache banks 1909A-1909N in the base die and/or L3 cache banks within the memory chiplets 1906 can cache data read from and transmitted to DRAM chiplets within the memory chiplets 1906 and to system memory of a host.

In some examples the global logic 1901 is a microcontroller that can execute firmware to perform scheduler 1911 and power management 1921 functionality for the parallel processor 1920. The microcontroller that executes the global logic can be tailored for the target use case of the parallel processor 1920. The scheduler 1911 can perform global scheduling operations for the parallel processor 1920. The power management 1921 functionality can be used to enable or disable individual chiplets within the parallel processor when those chiplets are not in use.

The various chiplets of the parallel processor 1920 can be designed to perform specific functionality that, in existing designs, would be integrated into a single die. A set of compute chiplets 1905 can include clusters of compute units (e.g., execution units, streaming multiprocessors, etc.) that include programmable logic to execute compute or graphics shader instructions. A media chiplet 1904 can include hardware logic to accelerate media encode and decode operations. Memory chiplets 1906 can include volatile memory (e.g., DRAM) and one or more SRAM cache memory banks (e.g., L3 banks).

As shown in FIG. 19B, each chiplet 1930 can include common components and application specific components. Chiplet logic 1936 within the chiplet 1930 can include the specific components of the chiplet, such as an array of streaming multiprocessors, compute units, or execution units described herein. The chiplet logic 1936 can couple with an optional cache or shared local memory 1938 or can include a cache or shared local memory within the chiplet logic 1936. The chiplet 1930 can include a fabric interconnect node 1942 that receives commands via the inter-chiplet fabric. Commands and data received via the fabric interconnect node 1942 can be stored temporarily within an interconnect buffer 1939. Data transmitted to and received from the fabric interconnect node 1942 can be stored in an interconnect cache 1940. Power control 1932 and clock control 1934 logic can also be included within the chiplet. The power control 1932 and clock control 1934 logic can receive configuration commands via the fabric can configure dynamic voltage and frequency scaling for the chiplet 1930. In some examples, each chiplet can have an independent clock domain and power domain and can be clock gated and power gated independently of other chiplets.

At least a portion of the components within the illustrated chiplet 1930 can also be included within logic embedded within the base die 1910 of FIG. 19A. For example, logic within the base die that communicates with the fabric can include a version of the fabric interconnect node 1942. Base die logic that can be independently clock or power gated can include a version of the power control 1932 and/or clock control 1934 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

FIG. 20(A) is a block diagram illustrating both an example in-order pipeline and an example register renaming, out-of-order issue/execution pipeline according to examples.

FIG. 20(B) is a block diagram illustrating both an example in-order architecture core and an example register renaming, out-of-order issue/execution architecture core to be included in a processor according to examples. The solid lined boxes in FIGS. 20(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 20(A), a processor pipeline 2000 includes a fetch stage 2002, an optional length decoding stage 2004, a decode stage 2006, an optional allocation (Alloc) stage 2008, an optional renaming stage 2010, a schedule (also known as a dispatch or issue) stage 2012, an optional register read/memory read stage 2014, an execute stage 2016, a write back/memory write stage 2018, an optional exception handling stage 2022, and an optional commit stage 2024. One or more operations can be performed in each of these processor pipeline stages. For example, during the fetch stage 2002, one or more instructions are fetched from instruction memory, and during the decode stage 2006, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 2006 and the register read/memory read stage 2014 may be combined into one pipeline stage. In some examples, during the execute stage 2016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 20(B) may implement the pipeline 2000 as follows: 1) the instruction fetch circuitry 2038 performs the fetch and length decoding stages 2002 and 2004; 2) the decode circuitry 2040 performs the decode stage 2006; 3) the rename/allocator unit circuitry 2052 performs the allocation stage 2008 and renaming stage 2010; 4) the scheduler(s) circuitry 2056 performs the schedule stage 2012; 5) the physical register file(s) circuitry 2058 and the memory unit circuitry 2070 perform the register read/memory read stage 2014; the execution cluster(s) 2060 perform the execute stage 2016; 6) the memory unit circuitry 2070 and the physical register file(s) circuitry 2058 perform the write back/memory write stage 2018; 7) various circuitry may be involved in the exception handling stage 2022; and 8) the retirement unit circuitry 2054 and the physical register file(s) circuitry 2058 perform the commit stage 2024.

FIG. 20(B) shows a processor core 2090 including front-end unit circuitry 2030 coupled to execution engine unit circuitry 2050, and both are coupled to memory unit circuitry 2070. The core 2090 may be a reduced instruction set architecture computing (RISC) core, a complex instruction set architecture computing (CISC) core, a very long instruction word (VLIW) core, or a hybrid or alternative core type. As yet another option, the core 2090 may be a special-purpose core, such as, for example, a network or communication core, compression engine, co-processor core, general purpose computing graphics processing unit (GPGPU) core, graphics core, or the like.

The front-end unit circuitry 2030 may include branch prediction circuitry 2032 coupled to instruction cache circuitry 2034, which is coupled to an instruction translation lookaside buffer (TLB) 2036, which is coupled to instruction fetch circuitry 2038, which is coupled to decode circuitry 2040. In some examples, the instruction cache circuitry 2034 is included in the memory unit circuitry 2070 rather than the front-end unit circuitry 2030. The decode circuitry 2040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2040 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 2040 may be implemented using various different mechanisms. Examples of suitable mechanisms include, but are not limited to, look-up tables, hardware implementations, programmable logic arrays (PLAs), microcode read only memories (ROMs), etc. In some examples, the core 2090 includes a microcode ROM (not shown) or other medium that stores microcode for certain macroinstructions (e.g., in decode circuitry 2040 or otherwise within the front-end unit circuitry 2030). In some examples, the decode circuitry 2040 includes a micro-operation (micro-op) or operation cache (not shown) to hold/cache decoded operations, micro-tags, or micro-operations generated during the decode or other stages of the processor pipeline 2000. The decode circuitry 2040 may be coupled to rename/allocator unit circuitry 2052 in the execution engine unit circuitry 2050.

The execution engine unit circuitry 2050 includes the rename/allocator unit circuitry 2052 coupled to retirement unit circuitry 2054 and a set of one or more scheduler(s) circuitry 2056. The scheduler(s) circuitry 2056 represents any number of different schedulers, including reservations stations, central instruction window, etc. In some examples, the scheduler(s) circuitry 2056 can include arithmetic logic unit (ALU) scheduler/scheduling circuitry, ALU queues, address generation unit (AGU) scheduler/scheduling circuitry, AGU queues, etc. The scheduler(s) circuitry 2056 is coupled to the physical register file(s) circuitry 2058. Each of the physical register file(s) circuitry 2058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 2058 includes vector registers unit circuitry, writemask registers unit circuitry, and scalar register unit circuitry. These register units may provide architectural vector registers, vector mask registers, general-purpose registers, etc. The physical register file(s) circuitry 2058 is coupled to the retirement unit circuitry 2054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2054 and the physical register file(s) circuitry 2058 are coupled to the execution cluster(s) 2060. The execution cluster(s) 2060 includes a set of one or more execution unit(s) circuitry 2062 and a set of one or more memory access circuitry 2064. The execution unit(s) circuitry 2062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some exmpales, execution unit(s) circuitry 2062 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2056, physical register file(s) circuitry 2058, and execution cluster(s) 2060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2064). It should also be understood that where separate pipelines are used, one or more of these pipelines may be out-of-order issue/execution and the rest in-order.

In some examples, the execution engine unit circuitry 2050 may perform load store unit (LSU) address/data pipelining to an Advanced Microcontroller Bus (AMB) interface (not shown), and address phase and writeback, data phase load, store, and branches.

The set of memory access circuitry 2064 is coupled to the memory unit circuitry 2070, which includes data TLB circuitry 2072 coupled to data cache circuitry 2074 coupled to level 2 (L2) cache circuitry 2076. In some examples, the memory access circuitry 2064 may include load unit circuitry, store address unit circuitry, and store data unit circuitry, each of which is coupled to the data TLB circuitry 2072 in the memory unit circuitry 2070. The instruction cache circuitry 2034 is further coupled to the level 2 (L2) cache circuitry 2076 in the memory unit circuitry 2070. In some examples, the instruction cache 2034 and the data cache 2074 are combined into a single instruction and data cache (not shown) in L2 cache circuitry 2076, level 3 (L3) cache circuitry (not shown), and/or main memory. The L2 cache circuitry 2076 is coupled to one or more other levels of cache and eventually to a main memory.

The core 2090 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 2090 includes logic to support a packed data instruction set architecture extension (e.g., AVX1, AVX2, AVX512, AMX, etc.), thereby allowing the operations used by many multimedia applications to be performed using packed data.

Example Execution Unit(s) Circuitry.

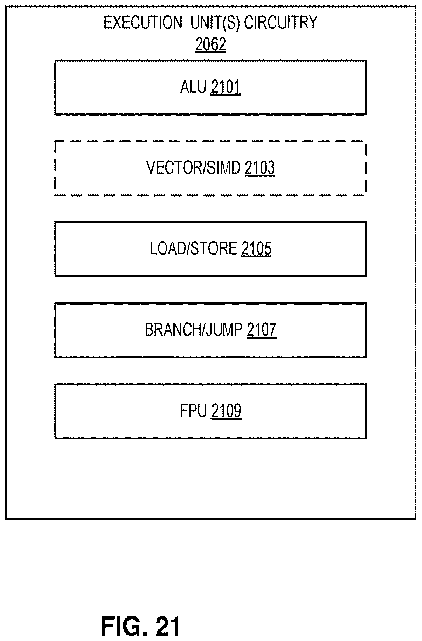

FIG. 21 illustrates examples of execution unit(s) circuitry, such as execution unit(s) circuitry 2062 of FIG. 20(B). As illustrated, execution unit(s) circuitry 2062 may include one or more ALU circuits 2101, optional vector/single instruction multiple data (SIMD) circuits 2103, Load/store circuits 2105, branch/jump circuits 2107, and/or Floating-point unit (FPU) circuits 2109. ALU circuits 2101 perform integer arithmetic and/or Boolean operations. Vector/SIMD circuits 2103 perform vector/SIMD operations on packed data (such as SIMD/vector registers). Load/store circuits 2105 execute load and store instructions to load data from memory into registers or store from registers to memory. Load/store circuits 2105 may also generate addresses. Branch/jump circuits 2107 cause a branch or jump to a memory address depending on the instruction. FPU circuits 2109 perform floating-point arithmetic. The width of the execution unit(s) circuitry 2062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

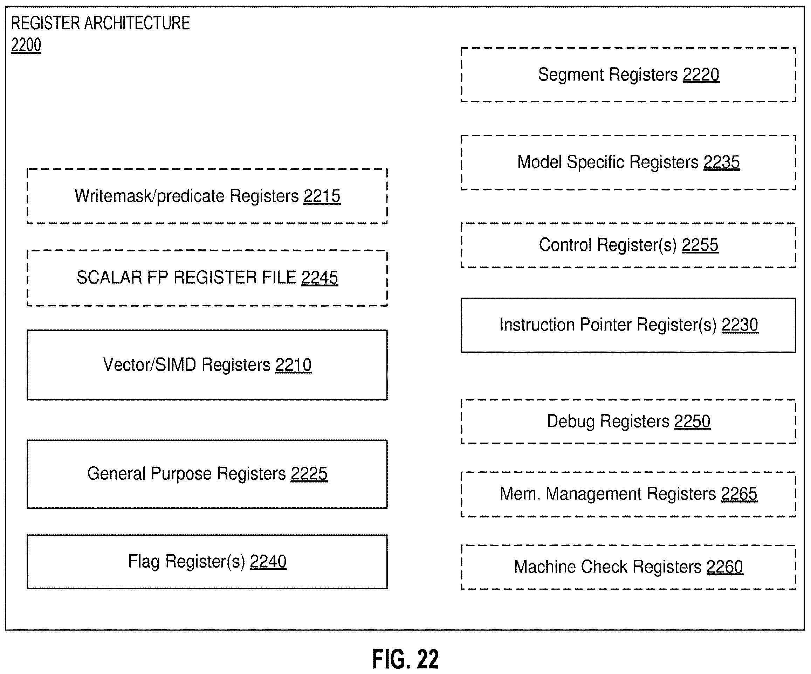

FIG. 22 is a block diagram of a register architecture 2200 according to some examples. As illustrated, the register architecture 2200 includes vector/SIMD registers 2210 that vary from 128-bit to 1,024 bits width. In some examples, the vector/SIMD registers 2210 are physically 512-bits and, depending upon the mapping, only some of the lower bits are used. For example, in some examples, the vector/SIMD registers 2210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2200 includes write mask/predicate registers 2215. For example, in some examples, there are 8 write mask/predicate registers (sometimes called k0 through k7) that are each 16-bit, 32-bit, 64-bit, or 128-bit in size. Writemask/predicate registers 2215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given write mask/predicate register 2215 corresponds to a data element position of the destination. In other examples, the write mask/predicate registers 2215 are scalable and consists of a set number of enable bits for a given vector element (e.g., 8 enable bits per 64-bit vector element).

The register architecture 2200 includes a plurality of general-purpose registers 2225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2200 includes scalar floating-point (FP) register file 2245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2240 (e.g., EFLAGS, RFLAGS, etc.) store status and control information for arithmetic, compare, and system operations. For example, the one or more flag registers 2240 may store condition code information such as carry, parity, auxiliary carry, zero, sign, and overflow. In some examples, the one or more flag registers 2240 are called program status and control registers.

Segment registers 2220 contain segment points for use in accessing memory. In some examples, these registers are referenced by the names CS, DS, SS, ES, FS, and GS.

Model specific registers or machine specific registers (MSRs) 2235 control and report on processor performance. Most MSRs 2235 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2260 consist of control, status, and error reporting MSRs that are used to detect and report on hardware errors. Control register(s) 2255 (e.g., CR0-CR4) determine the operating mode of a processor (e.g., processor 1370, 1380, 1338, 1315, and/or 1400) and the characteristics of a currently executing task. In some examples, MSRs 2235 are a subset of control registers 2255.

One or more instruction pointer register(s) 2230 store an instruction pointervalue. Debug registers 2250 control and allow for the monitoring of a processor or core's debugging operations.

Memory (mem) management registers 2265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2200 may, for example, be used in register file / memory 1208, or physical register file(s) circuitry 2058.

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 23 illustrates examples of an instruction format. As illustrated, an instruction may include multiple components including, but not limited to, one or more fields for: one or more prefixes, an opcode , addressing information (e.g., register identifiers, memory addressing information, etc.), a displacement value , and/or an immediate value. Note that some instructions utilize some or all the fields of the format whereas others may only use the field for the opcode 2303. In some examples, the order illustrated is the order in which these fields are to be encoded, however, it should be appreciated that in other examples these fields may be encoded in a different order, combined, etc.

The prefix(es) f 2301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2303 is used to at least partially define the operation to be performed upon a decoding of the instruction. In some examples, a primary opcode encoded in the opcode field 2303 is one, two, or three bytes in length. In other examples, a primary opcode can be a different length. An additional 3-bit opcode field is sometimes encoded in another field.

The addressing information field 2305 is used to address one or more operands of the instruction, such as a location in memory or one or more registers. FIG. 24 illustrates examples of the addressing information field 2305. In this illustration, an optional MOD R/M byte 2402 and an optional Scale, Index, Base (SIB) byte 2404 are shown. The MOD R/M byte 2402 and the SIB byte 2404 are used to encode up to two operands of an instruction, each of which is a direct register or effective memory address. Note that both of these fields are optional in that not all instructions include one or more of these fields. The MOD R/M byte 2402 includes a MOD field 2442, a register (reg) field 2444, and R/M field 2446.

The content of the MOD field 2442 distinguishes between memory access and non-memory access modes. In some examples, when the MOD field 2442 has a binary value of 11 (11b), a register-direct addressing mode is utilized, and otherwise a register-indirect addressing mode is used.

The register field 2444 may encode either the destination register operand or a source register operand or may encode an opcode extension and not be used to encode any instruction operand. The content of register field 2444, directly or through address generation, specifies the locations of a source or destination operand (either in a register or in memory). In some examples, the register field 2444 is supplemented with an additional bit from a prefix (e.g., prefix 2301) to allow for greater addressing.

The R/M field 2446 may be used to encode an instruction operand that references a memory address or may be used to encode either the destination register operand or a source register operand. Note the R/M field 2446 may be combined with the MOD field 2442 to dictate an addressing mode in some examples.

The SIB byte 2404 includes a scale field 2452, an index field 2454, and a base field 2456 to be used in the generation of an address. The scale field 2452 indicates a scaling factor. The index field 2454 specifies an index register to use. In some examples, the index field 2454 is supplemented with an additional bit from a prefix (e.g., prefix 2301) to allow for greater addressing. The base field 2456 specifies a base register to use. In some examples, the base field 2456 is supplemented with an additional bit from a prefix (e.g., prefix 2301) to allow for greater addressing. In practice, the content of the scale field 2452 allows for the scaling of the content of the index field 2454 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2307 provides this value. Additionally, in some examples, a displacement factor usage is encoded in the MOD field of the addressing information field 2305 that indicates a compressed displacement scheme for which a displacement value is calculated and stored in the displacement field 2307.

In some examples, the immediate value field 2309 specifies an immediate value for the instruction. An immediate value may be encoded as a 1-byte value, a 2-byte value, a 4-byte value, etc.

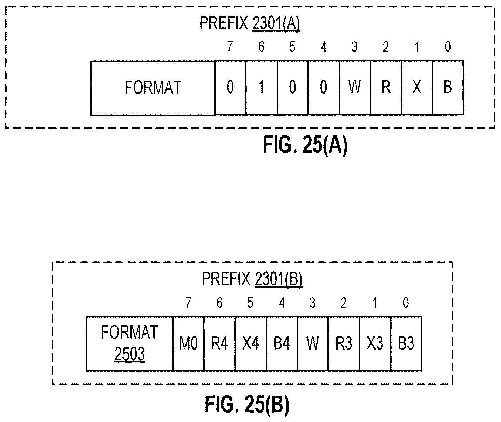

FIGS. 25(A)-(B) illustrates examples of a first prefix 2301(A). FIG. 25(A) illustrates first examples of the first prefix 2301(A). In some examples, the first prefix 2301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2301(A) may specify up to three registers using 3-bit fields depending on the format: 1) using the reg field 2444 and the R/M field 2446 of the MOD R/M byte 2402; 2) using the MOD R/M byte 2402 with the SIB byte 2404 including using the reg field 2444 and the base field 2456 and index field 2454; or 3) using the register field of an opcode.

In the first prefix 2301(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 2444 and MOD R/M R/M field 2446 alone can each only address 8 registers.

In the first prefix 2301(A), bit position 2 (R) may be an extension of the MOD R/M reg field 2444 and may be used to modify the MOD R/M reg field 2444 when that field encodes a general-purpose register, a 64-bit packed data register (e.g., a SSE register), or a control or debug register. R is ignored when MOD R/M byte 2402 specifies other registers or defines an extended opcode.

Bit position 1 (X) may modify the SIB byte index field 2454.

Bit position 0 (B) may modify the base in the MOD R/M R/M field 2446 or the SIB byte base field 2456; or it may modify the opcode register field used for accessing general purpose registers (e.g., general purpose registers 2225).

FIG. 25(B) illustrates second examples of the first prefix 2301(A). In some examples, the prefix 2301(A) supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsigned integer addition of two operands with overflow flag, conditional move, pop, push, etc. support REX2.

As shown, REX2 has a format field 2503 in a first byte and 8 bits in a second byte (e.g., a payload byte). In some examples, the format field 303 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 25(B).

The payload byte includes several bits.

Bit position 0 (B3) may modify the base in the MOD R/M R/M field 2446 or the SIB byte base field 2456; or it may modify the opcode register field used for accessing general purpose registers (e.g., general purpose registers 2225).

Bit position 1 (X3) may modify the SIB byte index field 2454.

Bit position 2 (R3) may be used as an extension of the MOD R/M reg field 2444 and may be used to modify the MOD R/M reg field 2444 when that field encodes a general-purpose register, a 64-bit packed data register (e.g., an SSE register), or a control or debug register. R3 may be ignored when MOD R/M byte 2402 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 2446 or the SIB byte base field 2456; or it may modify the opcode register field used for accessing general purpose registers (e.g., general purpose registers 2225).

Bit position 5 (X4) may further (along with X3) modify the SIB byte index field 2454.

Bit position 6 (R4) may further (along with R3) be used as an extension of the MOD R/M reg field 2444 and may be used to modify the MOD R/M reg field 2444 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50-0x5F(including POP and PUSH) use R4 to encode a push-pop acceleration hint.

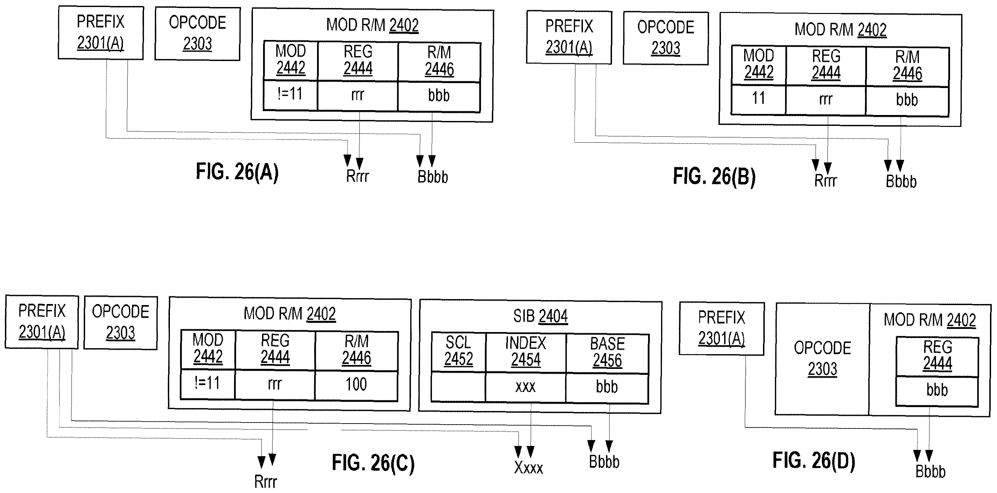

FIGS. 26(A)-(D) illustrate examples of how the R, X, and B fields of the first prefix 2301(A) are used. FIG. 26(A) illustrates R and B from the first prefix 2301(A) being used to extend the reg field 2444 and R/M field 2446 of the MOD R/M byte 2402 when the SIB byte 2404 is not used for memory addressing. FIG. 26(B) illustrates R and B from the first prefix 2301(A) being used to extend the reg field 2444 and R/M field 2446 of the MOD R/M byte 2402 when the SIB byte 24 04 is not used (register-register addressing). FIG. 26(C) illustrates R, X, and B from the first prefix 2301(A) being used to extend the reg field 2444 of the MOD R/M byte 2402 and the index field 2454 and base field 2456 when the SIB byte 24 04 being used for memory addressing. FIG. 26(D) illustrates B from the first prefix 2301(A) being used to extend the regfield 2444 of the MOD R/M byte 2402 when a register is encoded in the opcode 2303. The R4 and R3 values of FIG. 25(B) can be used to expand rrr, B4 and B3 can be used to expand bbb, and X4 and X3 can be used to expand xxx.

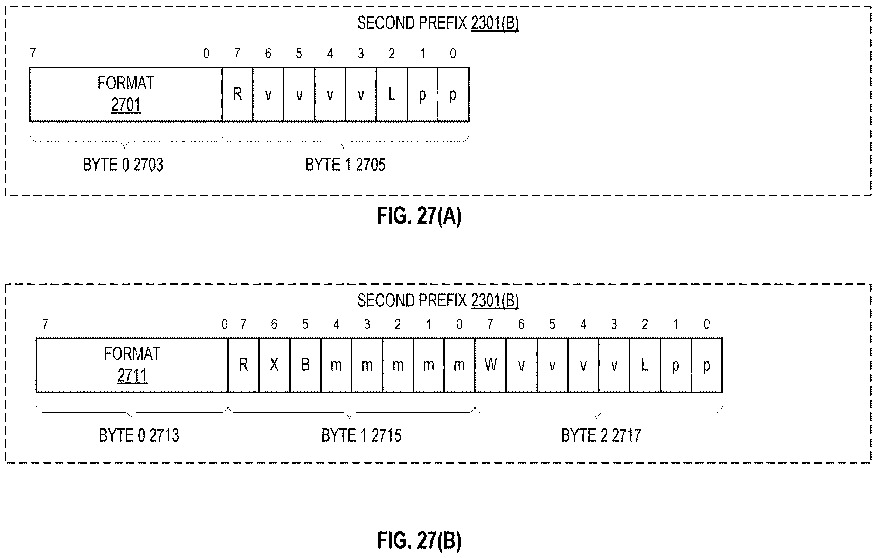

FIGS. 27(A)-(B) illustrate examples of a second prefix 2301(B). In some examples, the second prefix 2301(B) is an example of a VEX prefix. The second prefix 2301(B) encoding allows instructions to have more than two operands, and allows SIMD vector registers (e.g., vector/SIMD registers 2210) to be longer than 64-bits (e.g., 128-bit and 256-bit). The use of the second prefix 2301(B) provides for three-operand (or more) syntax. For example, previous two-operand instructions performed operations such as A = A + B, which overwrites a source operand. The use of the second prefix 2301(B) enables operands to perform nondestructive operations such as A = B + C.

In some examples, the second prefix 2301(B) comes in two forms - a two-byte form and a three-byte form. The two-byte second prefix 2301(B) is used mainly for 128-bit, scalar, and some 256-bit instructions; while the three-byte second prefix 2301(B) provides a compact replacement of the first prefix 2301(A) and 3-byte opcode instructions.

FIG. 27(A) illustrates examples of a two-byte form of the second prefix 2301(B). In some examples, a format field 2701 (byte 0 2703) contains the value C5H. In some examples, byte 1 2705 includes an "R" value in bit[7]. This value is the complement of the "R" value of the first prefix 2301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2446 to encode the instruction operand that references a memory address or encode either the destination register operand or a source register operand.

Instructions that use this prefix may use the MOD R/M reg field 2444 to encode either the destination register operand or a source register operand, or to be treated as an opcode extension and not used to encode any instruction operand.

For instruction syntax that support four operands, vvvv, the MOD R/M R/M field 2446 and the MOD R/M reg field 2444 encode three of the four operands. Bits[7:4] of the immediate value field 2309 are then used to encode the third source register operand.

FIG. 27(B) illustrates examples of a three-byte form of the second prefix 2301(B). In some examples, a format field 2711 (byte 0 2713) contains the value C4H. Byte 1 2715 includes in bits[7:5] "R," "X," and "B" which are the complements of the same values of the first prefix 2301(A). Bits[4:0] of byte 1 2715 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2717 is used similar to W of the first prefix 2301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2446 to encode the instruction operand that references a memory address or encode either the destination register operand or a source register operand.

Instructions that use this prefix may use the MOD R/M reg field 2444 to encode either the destination register operand or a source register operand, or to be treated as an opcode extension and not used to encode any instruction operand.

For instruction syntax that support four operands, vvvv, the MOD R/M R/M field 2446, and the MOD R/M reg field 2444 encode three of the four operands. Bits[7:4] of the immediate value field 2309 are then used to encode the third source register operand.

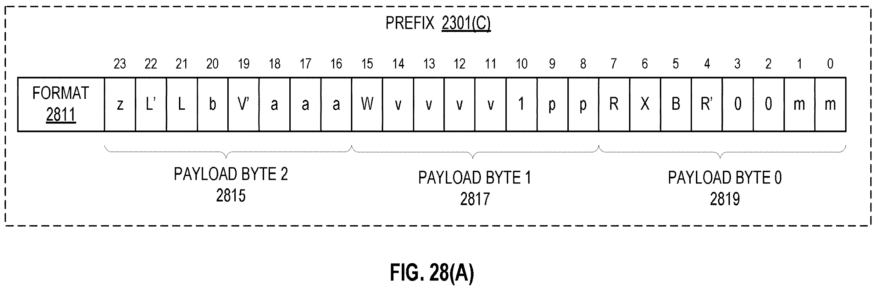

FIGS. 28(A)-(E) illustrates examples of a third prefix 2301(C). FIG. 28(A) illustrates first examples of the third prefix. In some examples, the third prefix 2301(C) is an example of an EVEX prefix. The third prefix 2301(C) is a four-byte prefix.

The third prefix 2301(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 22) or predication utilize this prefix. Opmask register a llow for conditional processing or selection control. Opmask instructions, whose source/destination operands are opmask registers and treat the content of an opmask register as a single value, are encoded using the second prefix 2301(B).

The third prefix 2301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2301(C) is a format field 2811 that has a value, in some examples, of 62H. Subsequent bytes are referred to as payload bytes 2815-2819 and collectively form a 24-bit value of P[23:0] providing specific capability in the form of one or more fields (detailed herein).

In some examples, P[1:0] of payload byte 2819 are identical to the low two mm bits. P[3:2] are reserved in some examples. Bit P[4] (R') allows access to the high 16 vector register set when combined with P[7] and the MOD R/M regfield 2444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2444 and MOD R/M R/M field 2446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2301(A) and second prefix 2311(B) and may serve as an opcode extension bit or operand size promotion.

P[18:16] specify the index of a register in the opmask (writemask) registers (e.g., writemask/predicate registers 2215). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2301(C) are detailed in the following tables.

Table 1: 32-Register Support in 64-bit Mode

|  | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | | vvvv | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

Table 2: Encoding Register Specifiers in 32-bit Mode

|  | [2:0] | REG. TYPE | COMMON USAGES |
|---|---|---|---|
| REG | MOD R/M reg | GPR, Vector | Destination or Source |
| VVVV | vvvv | GPR, Vector | 2nd Source or Destination |
| RM | MOD R/M R/M | GPR, Vector | 1st Source or Destination |
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

|  | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

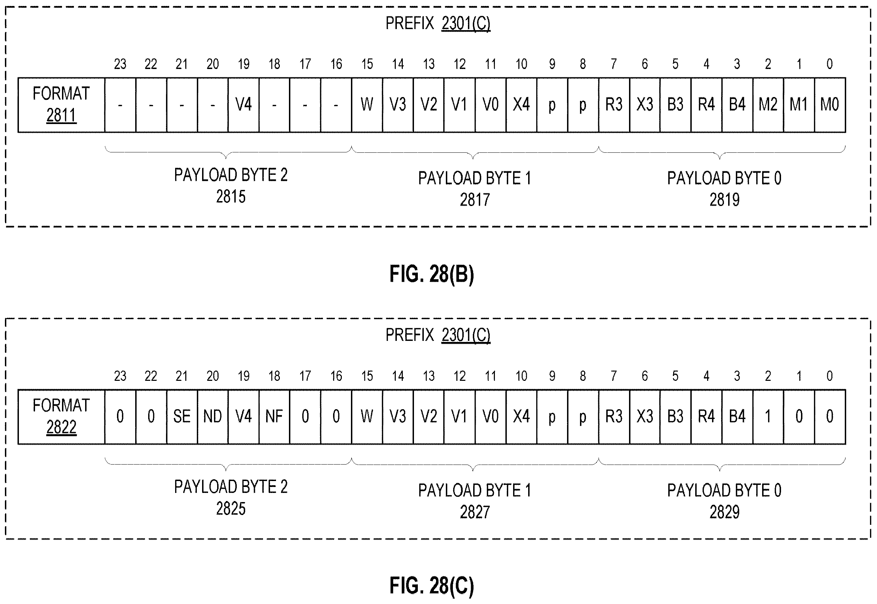

FIG. 28(B) illustrates second examples of the third prefix. In some examples, the prefix 24K01(B) is an example of an EVEX2 prefix. The EVEX2 prefix 2301(C) is a four-byte prefix.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, pop, push, leading zero count, total zero count, unsinged integer addition of two operands with carry flag, unsinged integer addition of two operands with overflow flag, conditional move, etc. support EVEX2.

For these instructions there it should be noted that NDD may or may not be used depending on the settings of the prefix of those instructions.

The extended EVEX prefix is an extension of a 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix ' BKP01(B) can encode 32 vector registers (e.g., 128-bit, 256-bit, and 512-bit registers) in 64-bit mode and/or 32 general purpose registers.

The EVEX2 prefix 'BKP01(B) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix ' BKP01(B) is a format field 'BKP11 that has a value, in some examples, of 0x62. Subsequent bytes are referred to as payload bytes 'BKP15-' BKP19 and collectively form a 24-bit value of P[23:0] providing specific capability in the form of one or more fields (detailed herein).

Bits 0:2 (M0, M1, and M2) of a first payload byte (payload byte 0) 2817 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bit 19 can be combined with bits 14:11 to encode a register in a new data destination.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 2301(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 28(C) illustrates third examples of the third prefix. In some examples, the prefix 2301(C) is an example of an EVEX2 prefix. The EVEX2 prefix 2301(C) is a four-byte prefix.

The EVEX2 prefix 2301(C) can encode at least 32 vector registers (e.g., 128-bit, 256-bit, and 512-bit registers) in 64-bit mode and/or up to 64 general purpose registers.

The EVEX2 prefix 2301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 2301(C) is a format field 2822 that has a value, in one example, of 0x62. Subsequent bytes are referred to as payload bytes 555-2829 and collectively form a 24-bit value of P[23:0] providing specific capability in the form of one or more fields (detailed herein).

Bits 0:1 are set to zero and bit 2 is set to 1.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated. In some examples, instructions for increment, decrement, negation, addition, subtraction, AND, OR, shift arithmetically left, shift logically left, shift arithmetically right, shift logically right, rotate left, rotate right, multiply, divide, population count, leading zero count, total zero count, etc. support flag suppression.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

Bit 21 is used in some examples to indicate exceptions are to be suppressed.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 2301(C) are detailed in the following table.

|  | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

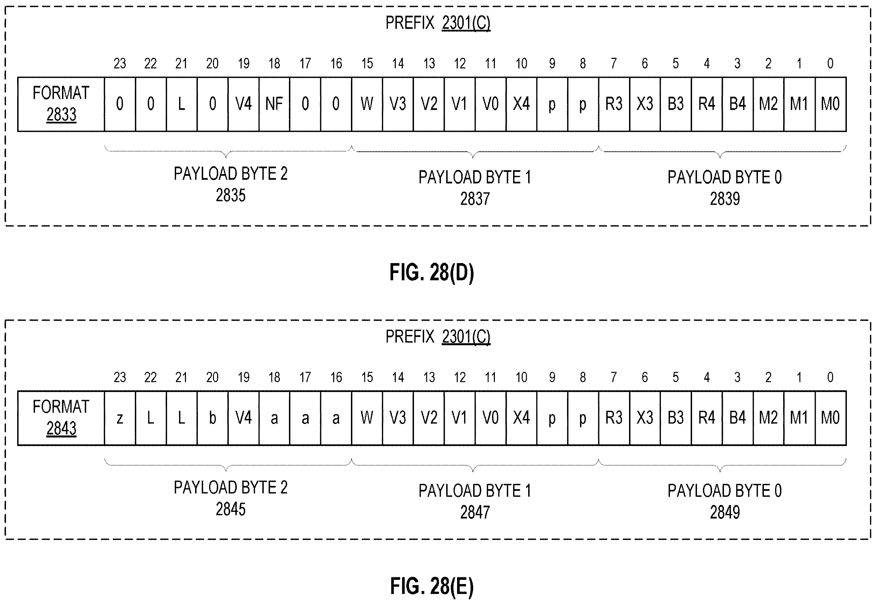

FIG. 28(D) illustrates fourth examples of the third prefix. In some examples, the prefix 2301(C) is an example of an EVEX2 prefix. The EVEX2 prefix 2301(C) is a four-byte prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 2301(C) can encode 32 vector registers (e.g., 128-bit, 256-bit, and 512-bit registers) in 64-bit mode and/or 32 general purpose registers.

The EVEX2 prefix 2301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 2301(C) is a format field 2833 that has a value, in some examples, of 0x62. Subsequent bytes are referred to as payload bytes 2835-2839 and collectively form a 24-bit value of P[23:0] providing specific capability in the form of one or more fields (detailed herein).

Bits 0:2 (M0, M1, and M2) of a first payload byte (payload byte 0) 2839 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bits 20, 22, and 23 are zero.

Bit 21 is a length specifier field

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 2301(C) are detailed in the following table.

|  | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 28(E) illustrates fifth examples of the third prefix. In some examples, the prefix 2301(C) is an example of an EVEX2 prefix. The EVEX2 prefix 2301(C) is a four-byte prefix.

The EVEX2 prefix 2301(C) can encode at least 32 vector registers (e.g., 128-bit, 256-bit, and 512-bit registers) in 64-bit mode and/or up to 64 general purpose registers. I

The EVEX2 prefix 2301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 2301(C) is a format field 2843 that has a value, in one example, of 0x62. Subsequent bytes are referred to as payload bytes 2845-2849 and collectively form a 24-bit value of P[23:0] providing specific capability in the form of one or more fields (detailed herein).

Bits 0:2 (M0, M1, and M2) of a first payload byte (payload byte 0) 2839 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:18 specify the index of a register in the opmask (writemask) registers (e.g., writemask/predicate registers 2615). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

Bit 19 can be combined with bits 14:11 to encode a register in a new data destination.

Bit 20 encodes multiple functionalities, which differ across different classes of instructions and can affect the meaning of the vector length/ rounding control specifier field bits 21:22]).

Bit 23 indicates support for merging-writemasking (e.g., when set to 0) or support for zeroing and merging-writemasking (e.g., when set to 1).

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 2301(C) are detailed in the following table.

|  | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |

(continued)

| | 4 | 3 | [2:0] | REG. TYPE | COMMON USAGES |
|---|---|---|---|---|---|
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

The table below illustrates the new prefixes and how they differ from at least one legacy format. Note that OP is an operation to be performed.

| Legacy Format | APX REX2 (No-NDD) Prefix | APX EVEX2 (NDD) Prefix |
|---|---|---|
| OP R/M, Reg | OP R/M, Reg | V = OP R/M, Reg |
| OP Reg, R/M | OP Reg, R/M | V = OP Reg, R/M |
| OP R/M, Imm | OP R/M, Imm | V = OP R/M, Imm |
| OP R/M | OP R/M | V = OP R/M |

Graphics Execution Units

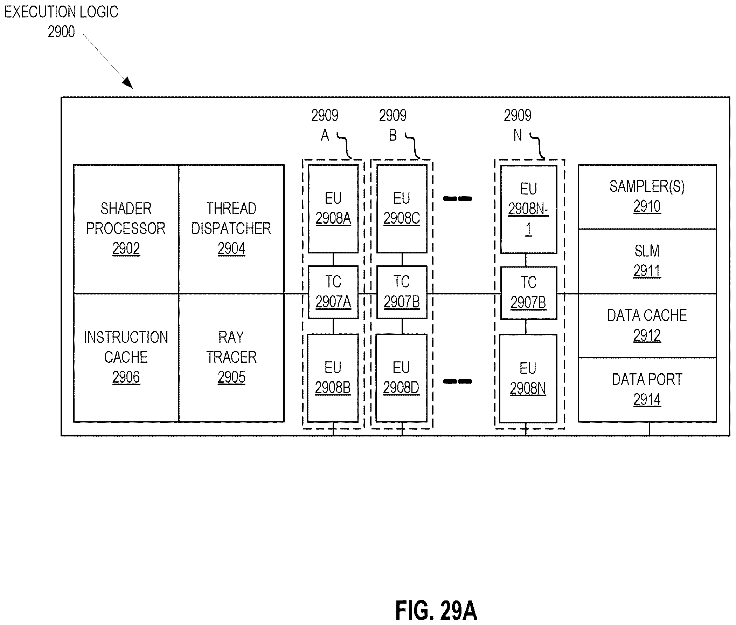

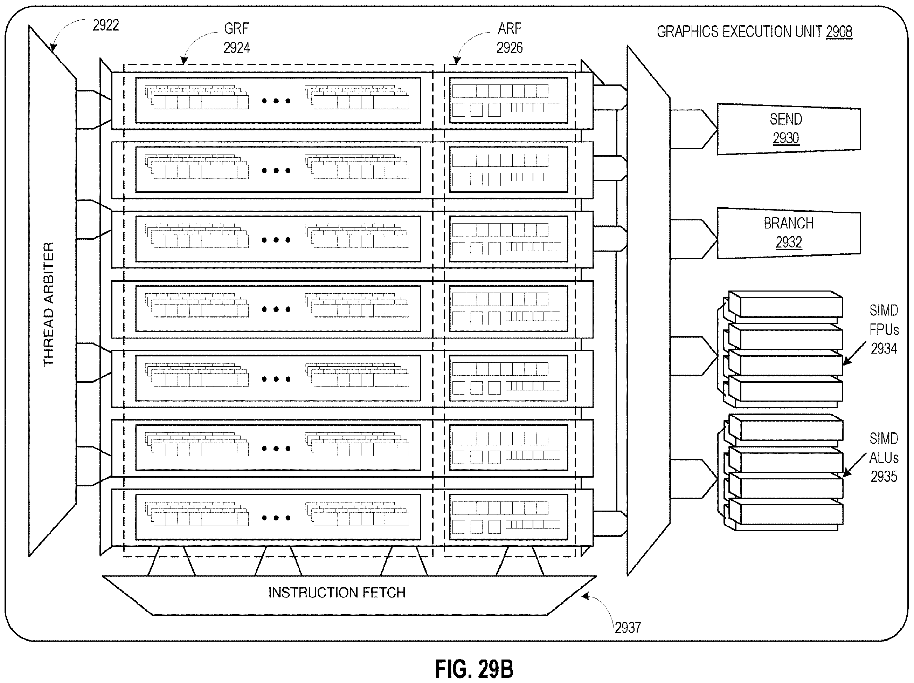

FIGS. 29A-29B illustrate thread execution logic 2900 including an array of processing elements employed in a graphics processor core according to examples described herein. Elements of Figures 29A-29B having the same reference numbers (or names) as the elements of any other figure herein can operate or function in any manner similar to that described elsewhere herein, but are not limited to such. Figure 29A is representative of an execution unit within a general-purpose graphics processor, while Figure 29B is representative of an execution unit that may be used within a compute accelerator.

As illustrated in Figure 29A, in some examples thread execution logic 2900 includes a shader processor 2902, a thread dispatcher 2904, instruction cache 2906, a scalable execution unit array including a plurality of execution units 2908A-2908N, a sampler 2910, shared local memory 2911, a data cache 2912, and a data port 2914. In some examples the scalable execution unit array can dynamically scale by enabling or disabling one or more execution units (e.g., any of execution units 2908A, 2908B, 2908C, 2908D, through 2908N-1 and 2908N) based on the computational requirements of a workload. In some examples the included components are interconnected via an interconnect fabric that links to each of the components. In some examples, thread execution logic 2900 includes one or more connections to memory, such as system memory or cache memory, through one or more of instruction cache 2906, data port 2914, sampler 2910, and execution units 2908A-2908N. In some examples, each execution unit (e.g. 2908A) is a stand-alone programmable general-purpose computational unit that is capable of executing multiple simultaneous hardware threads while processing multiple data elements in parallel for each thread. In various examples, the array of execution units 2908A-2908N is scalable to include any number individual execution units.

In some examples, the execution units 2908A-2908N are primarily used to execute shader programs. A shader processor 2902 can process the various shader programs and dispatch execution threads associated with the shader programs via a thread dispatcher 2904. In some examples the thread dispatcher includes logic to arbitrate thread initiation requests from the graphics and media pipelines and instantiate the requested threads on one or more execution unit in the execution units 2908A-2908N. For example, a geometry pipeline can dispatch vertex, tessellation, or geometry shaders to the thread execution logic for processing. In some examples, thread dispatcher 2904 can also process runtime thread spawning requests from the executing shader programs.

In some examples, the execution units 2908A-2908N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2908A-2908N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2908A-2908N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2908A-2908N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2908A-2908N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 2909A-2909N having thread control logic (2907A-2907N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2909A-2909N includes at least two execution units. For example, fused execution unit 2909A includes a first EU 2908A, second EU 2908B, and thread control logic 2907A that is common to the first EU 2908A and the second EU 2908B. The thread control logic 2907A controls threads executed on the fused graphics execution unit 2909A, allowing each EU within the fused execution units 2909A-2909N to execute using a common instruction pointer register.

One or more internal instruction caches (e.g., 2906) are included in the thread execution logic 2900 to cache thread instructions for the execution units. In some examples, one or more data caches (e.g., 2912) are included to cache thread data during thread execution. Threads executing on the thread execution logic 2900 can also store explicitly managed data in the shared local memory 2911. In some examples, a sampler 2910 is included to provide texture sampling for 3D operations and media sampling for media operations. In some examples, sampler 2910 includes specialized texture or media sampling functionality to process texture or media data during the sampling process before providing the sampled data to an execution unit.

During execution, the graphics and media pipelines send thread initiation requests to thread execution logic 2900 via thread spawning and dispatch logic. Once a group of geometric objects has been processed and rasterized into pixel data, pixel processor logic (e.g., pixel shader logic, fragment shader logic, etc.) within the shader processor 2902 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2902 then executes an application programming interface (API)-supplied pixel or fragment shader program. To execute the shader program, the shader processor 2902 dispatches threads to an execution unit (e.g., 2908A) via thread dispatcher 2904. In some examples, shader processor 2902 uses texture sampling logic in the sampler 2910 to access texture data in texture maps stored in memory. Arithmetic operations on the texture data and the input geometry data compute pixel color data for each geometric fragment, or discards one or more pixels from further processing.

In some examples, the data port 2914 provides a memory access mechanism for the thread execution logic 2900 to output processed data to memory for further processing on a graphics processor output pipeline. In some examples, the data port 2914 includes or couples to one or more cache memories (e.g., data cache 2912) to cache data for memory access via the data port.

In some examples, the execution logic 2900 can also include a ray tracer 2905 that can provide ray tracing acceleration functionality. The ray tracer 2905 can support a ray tracing instruction set that includes instructions/functions for ray generation.

Figure 29B illustrates exemplary internal details of an execution unit 2908, according to examples. A graphics execution unit 2908 can include an instruction fetch unit 2937, a general register file array (GRF) 2924, an architectural register file array (ARF) 2926, a thread arbiter 2922, a send unit 2930, a branch unit 2932, a set of SIMD floating point units (FPUs) 2934, and in some examples a set of dedicated integer SIMD ALUs 2935. The GRF 2924 and ARF 2926 includes the set of general register files and architecture register files associated with each simultaneous hardware thread that may be active in the graphics execution unit 2908. In some examples, per thread architectural state is maintained in the ARF 2926, while data used during thread execution is stored in the GRF 2924. The execution state of each thread, including the instruction pointers for each thread, can be held in thread-specific registers in the ARF 2926.

In some examples the graphics execution unit 2908 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2908 is not limited to the number of hardware threads, and multiple logical threads can be assigned to each hardware thread.

In some examples, the graphics execution unit 2908 can co-issue multiple instructions, which may each be different instructions. The thread arbiter 2922 of the graphics execution unit thread 2908 can dispatch the instructions to one of the send unit 2930, branch unit 2932, or SIMD FPU(s) 2934 for execution. Each execution thread can access 128 general-purpose registers within the GRF 2924, where each register can store 32 bytes, accessible as a SIMD 8-element vector of 32-bit data elements. In some examples, each execution unit thread has access to 4 Kbytes within the GRF 2924, although examples are not so limited, and greater or fewer register resources may be provided in other examples. In some examples the graphics execution unit 2908 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2924 can store a total of 28 Kbytes. Where 16 threads may access 4Kbytes, the GRF 2924 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2930. In some examples, branch instructions are dispatched to a dedicated branch unit 2932 to facilitate SIMD divergence and eventual convergence.

In some examples the graphics execution unit 2908 includes one or more SIMD FPU(s) 2934 to perform floating-point operations. In some examples, the FPU(s) 2934 also support integer computation. In some examples the FPU(s) 2934 can SIMD execute up to $M$ number of 32-bit floating-point (or integer) operations, or SIMD execute up to $2M$ 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2935 are also present, and may be specifically optimized to perform operations associated with machine learning computations.

In some examples, arrays of multiple instances of the graphics execution unit 2908 can be instantiated in a graphics sub-core grouping (e.g., a sub-slice). For scalability, product architects can choose the exact number of execution units per sub-core grouping. In some examples the execution unit 2908 can execute instructions across a plurality of execution channels. In a further example, each thread executed on the graphics execution unit 2908 is executed on a different channel.

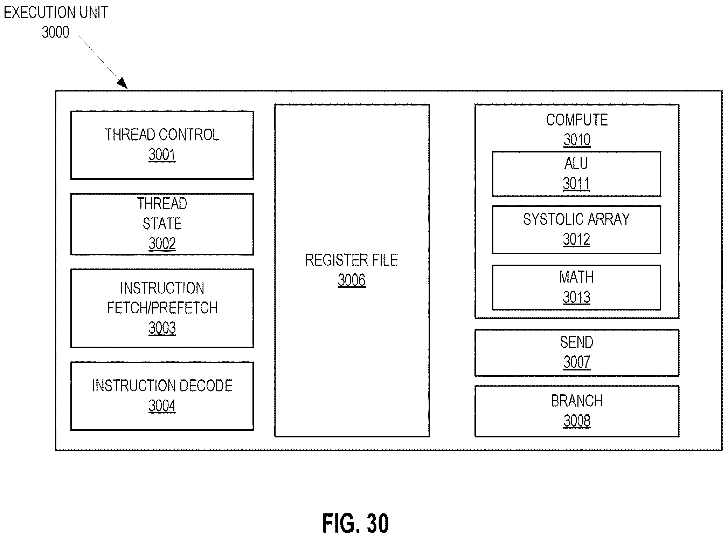

Figure 30 illustrates an additional execution unit 3000, according to an example. In some examples, the execution unit 3000 includes a thread control unit 3001, a thread state unit 3002, an instruction fetch/prefetch unit 3003, and an instruction decode unit 3004. The execution unit 3000 additionally includes a register file 3006 that stores registers that can be assigned to hardware threads within the execution unit. The execution unit 3000 additionally includes a send unit 3007 and a branch unit 3008. In some examples, the send unit 3007 and branch unit 3008 can operate similarly as the send unit 2930 and a branch unit 2932 of the graphics execution unit 2908 of Figure 29B.

The execution unit 3000 also includes a compute unit 3010 that includes multiple different types of functional units. In some examples the compute unit 3010 includes an ALU unit 3011 that includes an array of arithmetic logic units. The ALU unit 3011 can be configured to perform 64-bit, 32-bit, and 16-bit integer and floating point operations. Integer and floating point operations may be performed simultaneously. The compute unit 3010 can also include a systolic array 3012, and a math unit 3013. The systolic array 3012 includes a Wwide and D deep network of data processing units that can be used to perform vector or other data-parallel operations in a systolic manner. In some examples the systolic array 3012 can be configured to perform matrix operations, such as matrix dot product operations. In some examples the systolic array 3012 support 16-bit floating point operations, as well as 8-bit and 4-bit integer operations. In some examples the systolic array 3012 can be configured to accelerate machine learning operations. In such examples, the systolic array 3012 can be configured with support for the bfloat 16-bit floating point format. In some examples, a math unit 3013 can be included to perform a specific subset of mathematical operations in an efficient and lower-power manner than the ALU unit 3011. The math unit 3013 can include a variant of math logic that may be found in shared function logic of a graphics processing engine provided by other examples. In some examples the math unit 3013 can be configured to perform 32-bit and 64-bit floating point operations.

The thread control unit 3001 includes logic to control the execution of threads within the execution unit. The thread control unit 3001 can include thread arbitration logic to start, stop, and preempt execution of threads within the execution unit 3000. The thread state unit 3002 can be used to store thread state for threads assigned to execute on the execution unit 3000. Storing the thread state within the execution unit 3000 enables the rapid pre-emption of threads when those threads become blocked or idle. The instruction fetch/prefetch unit 3003 can fetch instructions from an instruction cache of higher level execution logic (e.g., instruction cache 2906 as in Figure 29A). The instruction fetch/prefetch unit 3003 can also issue prefetch requests for instructions to be loaded into the instruction cache based on an analysis of currently executing threads. The instruction decode unit 3004 can be used to decode instructions to be executed by the compute units. In some examples, the instruction decode unit 3004 can be used as a secondary decoder to decode complex instructions into constituent micro-operations.

The execution unit 3000 additionally includes a register file 3006 that can be used by hardware threads executing on the execution unit 3000. Registers in the register file 3006 can be divided across the logic used to execute multiple simultaneous threads within the compute unit 3010 of the execution unit 3000. The number of logical threads that may be executed by the execution unit 3000 is not limited to the number of hardware threads, and multiple logical threads can be assigned to each hardware thread. The size of the register file 3006 can vary across examples based on the number of supported hardware threads. In some examples, register renaming may be used to dynamically allocate registers to hardware threads.

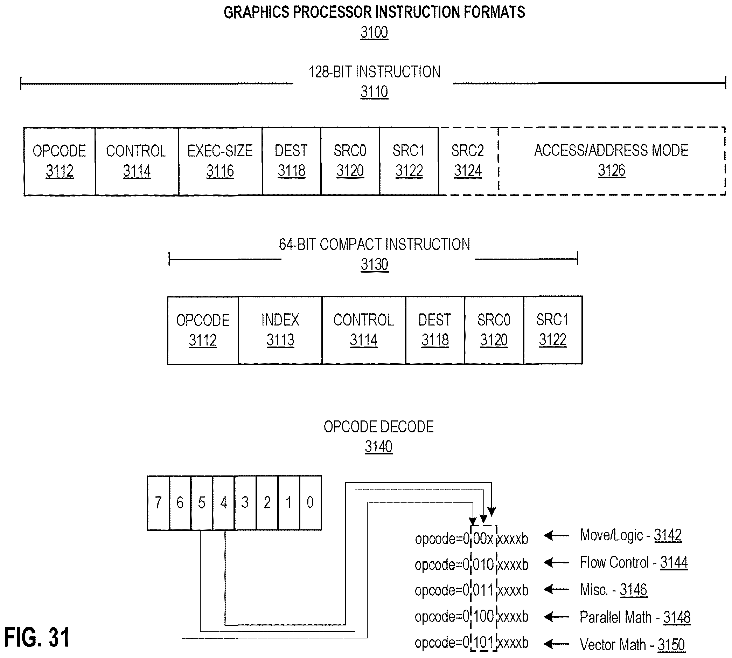

Figure 31 is a block diagram illustrating a graphics processor instruction formats 3100 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 3100 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 3110. A 64-bit compacted instruction format 3130 is available for some instructions based on the selected instruction, instruction options, and number of operands. The native 128-bit instruction format 3110 provides access to all instruction options, while some options and operations are restricted in the 64-bit compacted format 3130. The native instructions available in the 64-bit compacted format 3130 vary by example. In some examples, the instruction is compacted in part using a set of index values in an index field 3113. The execution unit hardware references a set of compaction tables based on the index values and uses the compaction table outputs to reconstruct a native instruction in the 128-bit instruction format 3110. Other sizes and formats of instruction can be used.

For each format, instruction opcode 3112 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 3114 enables control over certain execution options, such as channels selection (e.g., predication) and data channel order (e.g., swizzle). For instructions in the 128-bit instruction format 3110 an exec-size field 3116 limits the number of data channels that will be executed in parallel. In some examples, exec-size field 3116 is not available for use in the 64-bit compact instruction format 3130.

Some execution unit instructions have up to three operands including two source operands, src0 3120, src1 3122, and one destination 3118. In some examples, the execution units support dual destination instructions, where one of the destinations is implied. Data manipulation instructions can have a third source operand (e.g., SRC2 3124), where the instruction opcode 3112 determines the number of source operands. An instruction's last source operand can be an immediate (e.g., hard-coded) value passed with the instruction.

In some examples, the 128-bit instruction format 3110 includes an access/address mode field 3126 specifying, for example, whether direct register addressing mode or indirect register addressing mode is used. When direct register addressing mode is used, the register address of one or more operands is directly provided by bits in the instruction.

In some examples, the 128-bit instruction format 3110 includes an access/address mode field 3126, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 3126 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

**EP 4 575 770 A1**

In some examples instructions are grouped based on opcode 3112 bit-fields to simplify Opcode decode 3140. For an 8-bit opcode, bits 4, 5, and 6 allow the execution unit to determine the type of opcode. The precise opcode grouping shown is merely an example. In some examples, a move and logic opcode group 3142 includes data movement and logic instructions (e.g., move (mov), compare (cmp)). In some examples, move and logic opcode group 3142 shares the five most significant bits (MSB), where move (mov) instructions are in the form of 0000xxxxb and logic instructions are in the form of 0001xxxxb. A flow control instruction group 3144 (e.g., call, jump (jmp)) includes instructions in the form of 0010xxxxb (e.g., 0x20). A miscellaneous instruction group 3146 includes a mix of instructions, including synchronization instructions (e.g., wait, send) in the form of 0011xxxxb (e.g., 0x30). A parallel math instruction group 3148 includes component-wise arithmetic instructions (e.g., add, multiply (mul)) in the form of 0100xxxxb (e.g., 0x40). The parallel math instruction group 3148 performs the arithmetic operations in parallel across data channels. The vector math group 3150 includes arithmetic instructions (e.g., dp4) in the form of 0101xxxxb (e.g., 0x50). The vector math group performs arithmetic such as dot product calculations on vector operands. The illustrated opcode decode 3140, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

Graphics Pipeline

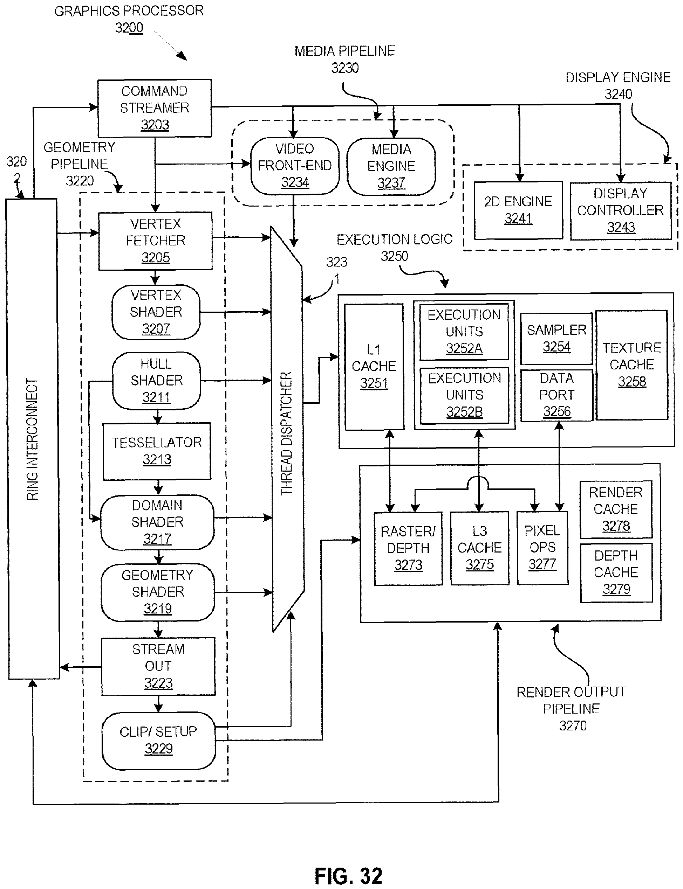

Figure 32 is a block diagram of another example of a graphics processor 3200. Elements of Figure 32 having the same reference numbers (or names) as the elements of any other figure herein can operate or function in any manner similar to that described elsewhere herein, but are not limited to such.

In some examples, graphics processor 3200 includes a geometry pipeline 3220, a media pipeline 3230, a display engine 3240, thread execution logic 3250, and a render output pipeline 3270. In some examples, graphics processor 3200 is a graphics processor within a multi-core processing system that includes one or more general-purpose processing cores. The graphics processor is controlled by register writes to one or more control registers (not shown) or via commands issued to graphics processor 3200 via a ring interconnect 3202. In some examples, ring interconnect 3202 couples graphics processor 3200 to other processing components, such as other graphics processors or general-purpose processors. Commands from ring interconnect 3202 are interpreted by a command streamer 3203, which supplies instructions to individual components of the geometry pipeline 3220 or the media pipeline 3230.

In some examples, command streamer 3203 directs the operation of a vertex fetcher 3205 that reads vertex data from memory and executes vertex-processing commands provided by command streamer 3203. In some examples, vertex fetcher 3205 provides vertex data to a vertex shader 3207, which performs coordinate space transformation and lighting operations to each vertex. In some examples, vertex fetcher 3205 and vertex shader 3207 execute vertex-processing instructions by dispatching execution threads to execution units 3252A-3252B via a thread dispatcher 3231.

In some examples, execution units 3252A-3252B are an array of vector processors having an instruction set for performing graphics and media operations. In some examples, execution units 3252A-3252B have an attached L1 cache 3251 that is specific for each array or shared between the arrays. The cache can be configured as a data cache, an instruction cache, or a single cache that is partitioned to contain data and instructions in different partitions.

In some examples, geometry pipeline 3220 includes tessellation components to perform hardware-accelerated tessellation of 3D objects. In some examples, a programmable hull shader 3211 configures the tessellation operations. A programmable domain shader 3217 provides back-end evaluation of tessellation output. A tessellator 3213 operates at the direction of hull shader 3211 and contains special purpose logic to generate a set of detailed geometric objects based on a coarse geometric model that is provided as input to geometry pipeline 3220. In some examples, if tessellation is not used, tessellation components (e.g., hull shader 3211, tessellator 3213, and domain shader 3217) can be bypassed.

In some examples, complete geometric objects can be processed by a geometry shader 3219 via one or more threads dispatched to execution units 3252A-3252B, or can proceed directly to the clipper 3229. In some examples, the geometry shader operates on entire geometric objects, rather than vertices or patches of vertices as in previous stages of the graphics pipeline. If the tessellation is disabled the geometry shader 3219 receives input from the vertex shader 3207. In some examples, geometry shader 3219 is programmable by a geometry shader program to perform geometry tessellation if the tessellation units are disabled.

Before rasterization, a clipper 3229 processes vertex data. The clipper 3229 may be a fixed function clipper or a programmable clipper having clipping and geometry shader functions. In some examples, a rasterizer and depth test component 3273 in the render output pipeline 3270 dispatches pixel shaders to convert the geometric objects into per pixel representations. In some examples, pixel shader logic is included in thread execution logic 3250. In some examples, an application can bypass the rasterizer and depth test component 3273 and access un-rasterized vertex data via a stream out unit 3223.

The graphics processor 3200 has an interconnect bus, interconnect fabric, or some other interconnect mechanism that allows data and message passing amongst the major components of the processor. In some examples, execution units 3252A-3252B and associated logic units (e.g., L1 cache 3251, sampler 3254, texture cache 3258, etc.) interconnect via a data port 3256 to perform memory access and communicate with render output pipeline components of the processor. In some examples, sampler 3254, caches 3251, 3258 and execution units 3252A-3252B each have separate memory access paths. In some examples the texture cache 3258 can also be configured as a sampler cache.

In some examples, render output pipeline 3270 contains a rasterizer and depth test component 3273 that converts vertex-based objects into an associated pixel-based representation. In some examples, the rasterizer logic includes a windower/masker unit to perform fixed function triangle and line rasterization. An associated render cache 3278 and depth cache 3279 are also available in some examples. A pixel operations component 3277 performs pixel-based operations on the data, though in some instances, pixel operations associated with 2D operations (e.g. bit block image transfers with blending) are performed by the 2D engine 3241, or substituted at display time by the display controller 3243 using overlay display planes. In some examples, a shared L3 cache 3275 is available to all graphics components, allowing the sharing of data without the use of main system memory.

In some examples, media pipeline 3230 includes a media engine 3237 and a video front-end 3234. In some examples, video front-end 3234 receives pipeline commands from the command streamer 3203. In some examples, media pipeline 3230 includes a separate command streamer. In some examples, video front-end 3234 processes media commands before sending the command to the media engine 3237. In some examples, media engine 3237 includes thread spawning functionality to spawn threads for dispatch to thread execution logic 3250 via thread dispatcher 3231.

In some examples, graphics processor 3200 includes a display engine 3240. In some examples, display engine 3240 is external to graphics processor 3200 and couples with the graphics processor via the ring interconnect 3202, or some other interconnect bus or fabric. In some examples, display engine 3240 includes a 2D engine 3241 and a display controller 3243. In some examples, display engine 3240 contains special purpose logic capable of operating independently of the 3D pipeline. In some examples, display controller 3243 couples with a display device (not shown), which may be a system integrated display device, as in a laptop computer, or an external display device attached via a display device connector.

In some examples, the geometry pipeline 3220 and media pipeline 3230 are configurable to perform operations based on multiple graphics and media programming interfaces and are not specific to any one application programming interface (API). In some examples, driver software for the graphics processor translates API calls that are specific to a particular graphics or media Library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

Graphics Pipeline Programming

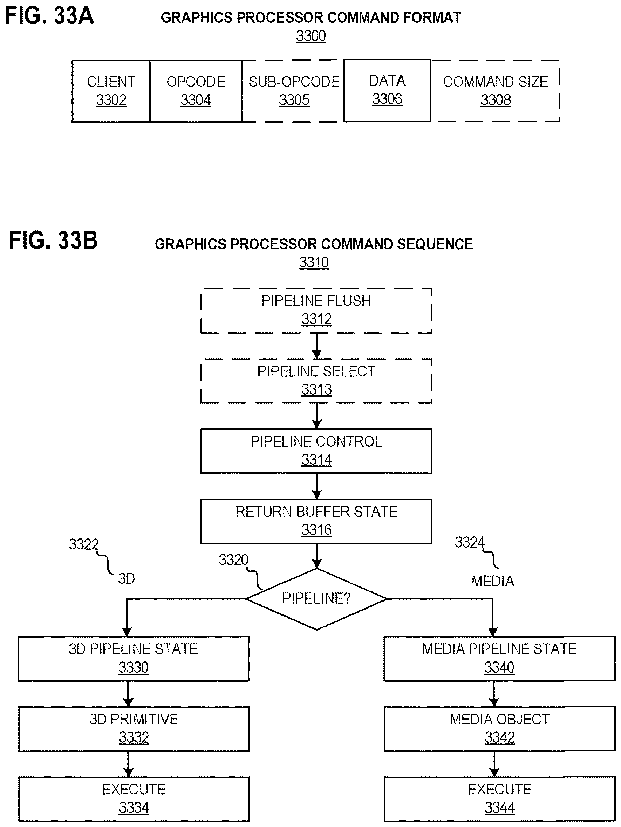

Figure 33A is a block diagram illustrating a graphics processor command format 3300 according to some examples. Figure 33B is a block diagram illustrating a graphics processor command sequence 3310 according to an example. The solid lined boxes in Figure 33A illustrate the components that are generally included in a graphics command while the dashed lines include components that are optional or that are only included in a sub-set of the graphics commands. The graphics processor command format 3300 of Figure 33A includes data fields to identify a client 3302, a command operation code (opcode) 3304, and data 3306 for the command. A sub-opcode 3305 and a command size 3308 are also included in some commands.

In some examples, client 3302 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3304 and, if present, sub-opcode 3305 to determine the operation to perform. The client unit performs the command using information in data field 3306. For some commands an explicit command size 3308 is expected to specify the size of the command. In some examples, the command parser automatically determines the size of at least some of the commands based on the command opcode. In some examples commands are aligned via multiples of a double word. Other command formats can be used.

The flow diagram in Figure 33B illustrates a graphics processor command sequence 3310. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3310 may begin with a pipeline flush command 3312 to cause any active graphics pipeline to complete the currently pending commands for the pipeline. In some examples, the 3D pipeline 3322 and the media pipeline 3324 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3312 can be used for pipeline synchronization or before placing the graphics processor into a low power state.

In some examples, a pipeline select command 3313 is used when a command sequence requires the graphics processor to explicitly switch between pipelines. In some examples, a pipeline select command 3313 is required only once within an execution context before issuing pipeline commands unless the context is to issue commands for both pipelines. In some examples, a pipeline flush command 3312 is required immediately before a pipeline switch via the pipeline select command 3313.

In some examples, a pipeline control command 3314 configures a graphics pipeline for operation and is used to program the 3D pipeline 3322 and the media pipeline 3324. In some examples, pipeline control command 3314 configures the pipeline state for the active pipeline. In some examples, the pipeline control command 3314 is used for pipeline synchronization and to clear data from one or more cache memories within the active pipeline before processing a batch of commands.

In some examples, return buffer state commands 3316 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 3320, the command sequence is tailored to the 3D pipeline 3322 beginning with the 3D pipeline state 3330 or the media pipeline 3324 beginning at the media pipeline state 3340.

The commands to configure the 3D pipeline state 3330 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3330 commands are also able to selectively disable or bypass certain pipeline elements if those elements will not be used.

In some examples, 3D primitive 3332 command is used to submit 3D primitives to be processed by the 3D pipeline. Commands and associated parameters that are passed to the graphics processor via the 3D primitive 3332 command are forwarded to the vertex fetch function in the graphics pipeline. The vertex fetch function uses the 3D primitive 3332 command data to generate vertex data structures. The vertex data structures are stored in one or more return buffers. In some examples, 3D primitive 3332 command is used to perform vertex operations on 3D primitives via vertex shaders. To process vertex shaders, 3D pipeline 3322 dispatches shader execution threads to graphics processor execution units.

In some examples, 3D pipeline 3322 is triggered via an execute 3334 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3310 follows the media pipeline 3324 path when performing media operations. In general, the specific use and manner of programming for the media pipeline 3324 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3324 is configured in a similar manner as the 3D pipeline 3322. A set of commands to configure the media pipeline state 3340 are dispatched or placed into a command queue before the media object commands 3342. In some examples, commands for the media pipeline state 3340 include data to configure the media pipeline elements that will be used to process the media objects. This includes data to configure the video decode and video encode logic within the media pipeline, such as encode or decode format. In some examples, commands for the media pipeline state 3340 also support the use of one or more pointers to "indirect" state elements that contain a batch of state settings.

In some examples, media object commands 3342 supply pointers to media objects for processing by the media pipeline. The media objects include memory buffers containing video data to be processed. In some examples, all media pipeline states must be valid before issuing a media object command 3342. Once the pipeline state is configured and media object commands 3342 are queued, the media pipeline 3324 is triggered via an execute command 3344 or an equivalent execute event (e.g., register write). Output from media pipeline 3324 may then be post processed by operations provided by the 3D pipeline 3322 or the media pipeline 3324. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine Language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

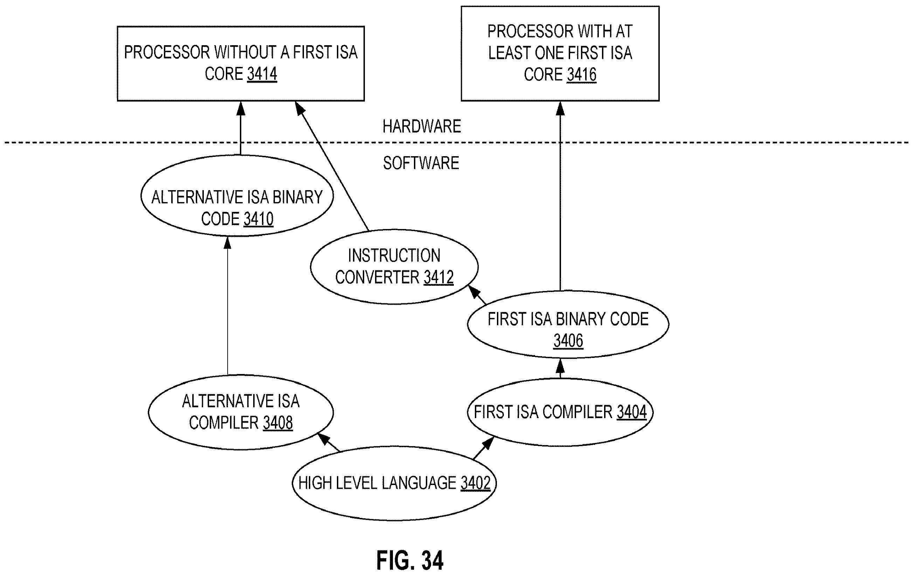

FIG. 34 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 34 shows a program in a high-level language 3402 may be compiled using a first ISA compiler 3404 to generate first ISA binary code 3406 that may be natively executed by a processor with at least one first ISA core 3416. The processor with at least one first ISA core 3416 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3404 represents a compiler that is operable to generate first ISA binary code 3406 (e.g., object code) that can, with or without additional linkage processing, be executed on the processor with at least one first ISA core 3416. Similarly, FIG. 34 shows the program in the high-level language 3402 may be compiled using an alternative ISA compiler 3408 to generate alternative ISA binary code 3410 that may be natively executed by a processor without a first ISA core 3414. The instruction converter 3412 is used to convert the first ISA binary code 3406 into code that may be natively executed by the processor without a first ISA core 3414. This converted code is not necessarily to be the same as the alternative ISA binary code 3410;

however, the converted code will accomplish the general operation and be made up of instructions from the alternative ISA. Thus, the instruction converter 3412 represents software, firmware, hardware, or a combination thereof that, through emulation, simulation or any other process, allows a processor or other electronic device that does not have a first ISA processor or core to execute the first ISA binary code 3406.

IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

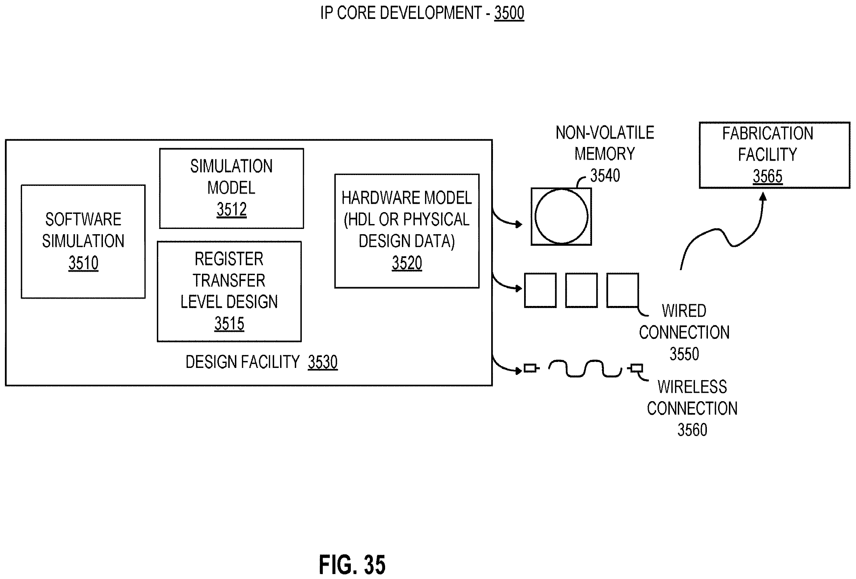

FIG. 35 is a block diagram illustrating an IP core development system 3500 that may be used to manufacture an integrated circuit to perform operations according to some examples. The IP core development system 3500 may be used to generate modular, reusable designs that can be incorporated into a larger design or used to construct an entire integrated circuit (e.g., an SOC integrated circuit). A design facility 3530 can generate a software simulation 3510 of an IP core design in a high-level programming language (e.g., C/C++). The software simulation 3510 can be used to design, test, and verify the behavior of the IP core using a simulation model 3512. The simulation model 3512 may include functional, behavioral, and/or timing simulations. A register transfer level (RTL) design 3515 can then be created or synthesized from the simulation model 3512. The RTL design 3515 is an abstraction of the behavior of the integrated circuit that models the flow of digital signals between hardware registers, including the associated logic performed using the modeled digital signals. In addition to an RTL design 3515, lower-level designs at the logic level or transistor level may also be created, designed, or synthesized. Thus, the particular details of the initial design and simulation may vary.

The RTL design 3515 or equivalent may be further synthesized by the design facility into a hardware model 3520, which may be in a hardware description language (HDL), or some other representation of physical design data. The HDL may be further simulated or tested to verify the IP core design. The IP core design can be stored for delivery to a fabrication facility 3565 using non-volatile memory 3540 (e.g., hard disk, flash memory, or any non-volatile storage medium). Alternatively, the IP core design may be transmitted (e.g., via the Internet) over a wired connection 3550 or wireless connection 3560. The fabrication facility 3565 may then fabricate an integrated circuit that is based at least in part on the IP core design. The fabricated integrated circuit can be configured to perform operations in accordance with at least some examples described herein.

Some examples relate to a digital signal processing (DSP) block that may provide a similar level of arithmetic performance (TOPs/TFLOPs) as an application-specific standard product (ASSP) or application-specific integrated circuit (ASIC) for artificial intelligence (AI) operations. In general, a DSP block is a type of circuitry that is used in integrated circuit devices, such as field programmable gate arrays (FPGAs), to perform multiply, accumulate, and addition operations. The DSP block described herein may take advantage of the flexibility of an FPGA to adapt to emerging algorithms or fix bugs in a planned implementation. The number representations used can be fixed point or floating point. Floating point numbers can also be expressed in block floating point, where a single exponent can be shared for multiple input values.

An FPGA can also provide other types of flexibility. For example, non-linear activation functions, such as $tanh(x)$ and $sigmoid(x)$, can be inserted anywhere into the dataflow, and the precision or range supported by such functions can be tailored to the application requirement, thereby saving area and power. Furthermore, an FPGA that includes the DSP circuitry described herein can also be used for non-AI signal processing or applications that do not involve any signal processing or hard arithmetic.

The presently described techniques also provide improved computational density and power consumption (e.g., a higher amount of TOPs/TFLOPs per W). For instance, as discussed herein, DSP blocks may perform virtual bandwidth expansion so that the bandwidth available can be used more effectively for the processing used and so that the cost of the computation (e.g., area for arithmetic) is balanced with the availability of the wires of an FPGA in a desirable (e.g., optimal) way for artificial intelligence applications. Moreover, the DSP blocks described herein may use the area and interface of the other DSP blocks that perform multiply-accumulate operations. Bounded box floating point may be used to provide floating point accuracy, along with full single-precision floating point (e.g., FP32) output capability.

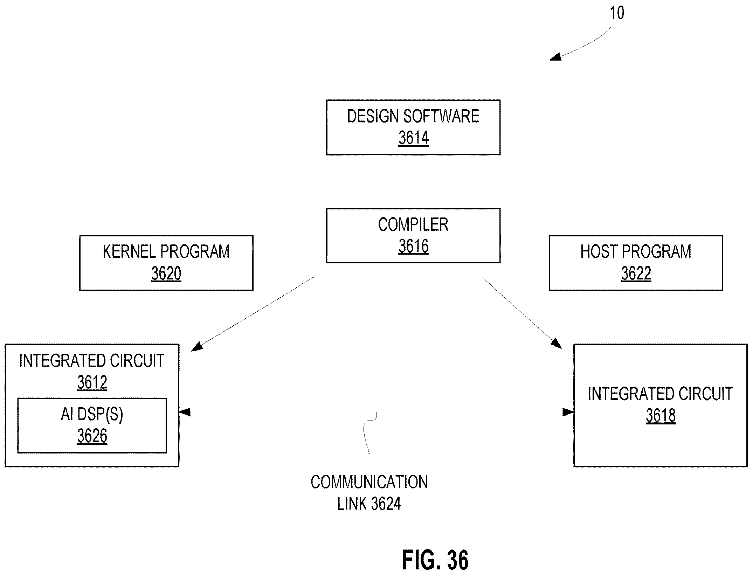

FIG. 36 illustrates examples of a block diagram of a system 3610 that may implement arithmetic operations using a DSP block. A designer may desire to implement functionality, such as the large precision arithmetic operations of this disclosure, on an integrated circuit device 3612 (such as a field-programmable gate array (FPGA) or an application-specific integrated circuit (ASIC)). In some cases, the designer may specify a high-level program to be implemented, such as an OpenCL program, which may enable the designer to more efficiently and easily provide programming instructions to configure a set of programmable logic cells for the integrated circuit device 3612 without specific knowledge of low-level hardware description languages (e.g., Verilog or VHDL). For example, because OpenCL is quite similar to other high-level programming languages, such as C++, designers of programmable logic familiar with such programming languages may have a reduced learning curve than designers that are required to learn unfamiliar low-level hardware description languages to implement new functionalities in the integrated circuit device 3612.

The designers may implement their high-level designs using design software 3614, such as a version of Intel® Quartus® by INTEL CORPORATION. The design software 3614 may use a compiler 3616 to convert the high-level program into a lower-level description. The compiler 3616 may provide machine-readable instructions representative of the high-level program to a host 3618 and the integrated circuit device 3612. The host 3618 may receive a host program 3622 which may be implemented by the kernel programs 3620. To implement the host program 3622, the host 3618 may communicate instructions from the host program 3622 to the integrated circuit device 3612 via a communications link 3624, which may be, for example, direct memory access (DMA) communications or peripheral component interconnect express (PCIe) communications. In some embodiments, the kernel programs 3620 and the host 3618 may enable configuration of one or more DSP blocks 3626 on the integrated circuit device 3612. The DSP block 3626 may include circuitry to implement, for example, operations to perform matrix-matrix or matrix-vector multiplication for AI or non-AI data processing. The integrated circuit device 3612 may include many (e.g., hundreds or thousands) of the DSP blocks 3626. Additionally, DSP blocks 3626 may be communicatively coupled to another such that data outputted from one DSP block 3626 may be provided to other DSP blocks 3626.

While the techniques above discussion described to the application of a high-level program, in some embodiments, the designer may use the design software 3614 to generate and/or to specify a low-level program, such as the low-level hardware description languages described above. Further, in some embodiments, the system 10 may be implemented without a separate host program 3622. Moreover, in some embodiments, the techniques described herein may be implemented in circuitry as a non-programmable circuit design. Thus, embodiments described herein are intended to be illustrative and not limiting.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include but are not limited to:

1. An apparatus comprising:

decoder circuitry to decode an instance of a single instruction, the single instruction to include one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in the block format to encode one or more numbers, wherein a block number of the block format has a value of a scale multiplied by a value of a scalar element and wherein the data that is in the block format is to use data from at least the first and second source operands; and

execution circuitry to execute the decoded instruction according to the opcode to perform the dot product.

2. The apparatus of example 1, wherein the opcode is to identify a first datatype for the first and second source operands and a second datatype for the destination operand.

3. The apparatus of example 2, wherein at least one of the datatypes is a floating point datatype.

4. The apparatus of example 3, wherein the floating point datatype is one of an 8-bit floating point, a 6-bit floating point, and a 4-bit floating point.

5. The apparatus of any of examples 1-4, wherein the first source operand is to store a value to indicate a number of source scalar elements to be used in the dot product.

6. The apparatus of any of examples 1-4, wherein the first source operand is to store a list of scalar elements and a scale and the dot product is to produce a plurality of scalar elements.

7. The apparatus of any of examples 1-4, wherein the first source operand is to store a list of scalar elements and the second source operand is to store a scale and the dot product is to produce a plurality of scalar elements.

8. The apparatus of any of examples 1-7, wherein the dot product is a cross-product of dot products.

9. The apparatus of any of examples 1-4, wherein the first source operand is to store a plurality of scalar data elements and a scale.

10. The apparatus of any of examples 1-4, wherein the first source operand is to store a plurality of scalar data elements and the second source is to store a shared scale.

11. A method comprising:

decoding an instance of a single instruction, the single instruction to include one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in the block format to encode one or more numbers, wherein a block number of the block format has a value of a scale multiplied by a value of a scalar element and wherein the data that is in the block format is to use data from at least the first and second source operands; and executing the decoded instruction according to the opcode to perform the dot product.

12. The method of example 11, wherein the opcode is to identify a first datatype for the first and second source operands and a second datatype for the destination operand.

13. The method of example 12, wherein at least one of the datatypes is a floating point datatype.

14. The method of example 13, wherein the floating point datatype is one of an 8-bit floating point, a 6-bit floating point, and a 4-bit floating point.

15. The method of any of examples 11-14, wherein the first source operand is to store a value to indicate a number of source scalar elements to be used in the dot product.

16. The method of any of examples 11-14, wherein the first source operand is to store a list of scalar elements and a scale and the dot product is to produce a plurality of scalar elements.

17. The method of any of examples 11-14, wherein the first source operand is to store a list of scalar elements and the second source operand is to store a scale and the dot product is to produce a plurality of scalar elements.

18. The method of any of examples 11-17, wherein the dot product is a cross-product of dot products.

19. The method of any of examples 11-14, wherein the first source operand is to store a plurality of scalar data elements and a scale.

20. A system comprising:

memory to store an instance of single instruction;
decoder circuitry to decode the instance of a single instruction, the single instruction to include one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in the block format to encode one or more numbers, wherein a block number of the block format has a value of a scale multiplied by a value of a scalar element and wherein the data that is in the block format is to use data from at least the first and second source operands; and
execution circuitry to execute the decoded instruction according to the opcode to perform the dot product.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

**Claims**

1. An apparatus comprising:

   decoder means to decode an instance of a single instruction, the single instruction to include one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in a block format to encode one or more numbers, wherein a block number of the block format has a value of a scale multiplied by a value of a scalar element and wherein the data that is in the block format is to use data from at least the first and second source operands; and
   execution means to execute the decoded instruction according to the opcode to perform the dot product.

2. The apparatus of claim 1, wherein the opcode is to identify a first datatype for the first and second source operands and a second datatype for the destination operand.

3. The apparatus of claim 2, wherein at least one of the datatypes is a floating point datatype.

4. The apparatus of claim 3, wherein the floating point datatype is one of an 8-bit floating point, a 6-bit floating point, and a 4-bit floating point.

5. The apparatus of any of claims 1-4, wherein the first source operand is to store a value to indicate a number of source scalar elements to be used in the dot product.

6. The apparatus of any of claims 1-4, wherein the first source operand is to store a list of scalar elements and a scale and the dot product is to produce a plurality of scalar elements.

7. The apparatus of any of claims 1-4, wherein the first source operand is to store a list of scalar elements and the second source operand is to store a scale and the dot product is to produce a plurality of scalar elements.

8. The apparatus of any of claims 1-7, wherein the dot product is a cross-product of dot products.

9. The apparatus of any of claims 1-4, wherein the first source operand is to store a plurality of scalar data elements and a scale.

10. The apparatus of any of claims 1-4, wherein the first source operand is to store a plurality of scalar data elements and the second source is to store a shared scale.

11. A method comprising:

    decoding an instance of a single instruction, the single instruction to include one or more fields for an identifier of at least a first source operand, one or more field for an identifier of a second source operand, and one or more fields for an identifier of a destination operand, and a field for an opcode, the opcode to at least indicate execution circuitry is to perform a dot product utilizing data that is in a block format to encode one or more numbers, wherein a block number of the block format has a value of a scale multiplied by a value of a scalar element and wherein the data that is in the block format is to use data from at least the first and second source operands; and
    executing the decoded instruction according to the opcode to perform the dot product.

12. The method of claim 11, wherein the opcode is to identify a first datatype for the first and second source operands and a second datatype for the destination operand.

13. The method of claim 12, wherein at least one of the datatypes is a floating point datatype.

**14.** The method of claim 13, wherein the floating point datatype is one of an 8-bit floating point, a 6-bit floating point, and a 4-bit floating point.

**15.** The method of claim 11, wherein the first source operand is to store a value to indicate a number of source scalar elements to be used in the dot product.

**FIG. 1**

**MEMORY 103**

SOURCE(S) 204

| SCALE | ELEMENT |
| SCALE | ELEMENT |

| SCALE | ELEMENT |

BLOCK NUMBER WITH ELEMENT AND SCALE STORED TOGETHER 205

SCALE AND ELEMENT LIST

POINTER TO A LIST OF SCALE(S) AND ELEMENTS 207

ELEMENT(S)

ELEMENT(S) ONLY 208

SCALE(S)

SCALE(S) ONLY 209

DESTINATION(S) 214

ELEMENT — VALUE 215

ELEMENT ELEMENT — VALUES 216

**REGISTERS 121 OR TILES 131**

SOURCE(S) 224

| SCALE | ELEMENT |
| SCALE | ELEMENT |

| SCALE | ELEMENT |

BLOCK NUMBER WITH ELEMENT AND SCALE STORED TOGETHER 225

SCALE AND ELEMENT LIST

POINTER TO A LIST OF SCALE(S) AND ELEMENTS 227

ELEMENT(S)

ELEMENT(S) ONLY 228

SCALE(S)

SCALE(S) ONLY 229

DESTINATION(S) 244

ELEMENT — VALUE 245

ELEMENT ELEMENT — VALUES 246

FIG. 2

FIG. 3

FIG. 4

| | | | | | | | | |
|---|---|---|---|---|---|---|---|---|
| X | X | X | X | X | X | X | X | INT8 |
| | | | S | 1 | X | X | X | M3 (FP8/FP6) |
| | | | | S | 1 | X | X | M2 (FP8/FP6) |
| | | | | | S | 1 | | M0 (FP4) |

**FIG. 5**

FIG. 6

PP0

A

BOOTH'S RADIX-4 CODER
701

{B(2:1),'0'}

PP1

A

BOOTH'S RADIX-4 CODER

{B(4:2)}

PP2

A

BOOTH'S RADIX-4 CODER

{B(6:4)}

PP3

A

BOOTH'S RADIX-4 CODER

{B(8:6)}

PP0    PP1         PP2    PP3

4:2 COMPRESSOR
703

+

ADDER 705

FIG. 7

FIG. 8

| OPCODE | SOURCE1 | SOURCE2 | SOURCE3 | SOURCE4 | SOURCE5 | DESTINATION |
|---|---|---|---|---|---|---|
| DOT PRODUCT OPERATION AND DATA TYPE(S) | SCALAR ELEMENTS | SHARED SCALE FOR SOURCE 1 | SCALAR ELEMENTS | SHARED SCALE FOR SOURCE 2 | NUMBER OF SCALAR ELEMENTS | SCALAR ELEMENT |
| DOT PRODUCT OPERATION, DATA TYPE(S), AND NUMBER OF SCALAR ELEMENTS | SCALAR ELEMENTS | SHARED SCALE FOR SOURCE 1 | SCALAR ELEMENTS | SHARED SCALE FOR SOURCE 2 | | SCALAR ELEMENT |
| DOT PRODUCT OPERATION AND DATA TYPE(S) | SCALAR ELEMENTS AND SCALE | SCALAR ELEMENTS AND SCALE | NUMBER OF SCALAR ELEMENTS | | | SCALAR ELEMENT |
| DOT PRODUCT OPERATION, DATA TYPE(S), AND NUMBER OF SCALAR ELEMENTS | SCALAR ELEMENTS AND SCALE | SCALAR ELEMENTS AND SCALE | | | | SCALAR ELEMENT |
| DOT PRODUCT OPERATION AND DATA TYPE(S) | LIST OF SCALAR ELEMENTS AND SCALE | LIST OF SCALAR ELEMENTS AND SCALE | NUMBER OF SCALAR ELEMENTS | | | SCALAR ELEMENTS |
| DOT PRODUCT OPERATION, DATA TYPE(S), AND NUMBER OF SCALAR ELEMENTS | LIST OF SCALAR ELEMENTS AND SCALE | LIST OF SCALAR ELEMENTS AND SCALE | | | | SCALAR ELEMENTS |
| DOT PRODUCT OPERATION AND DATA TYPE(S) | LIST OF SCALAR ELEMENTS AND SCALE | SCALE | SINGLE SCALAR FOR SCALE OF SOURCE 2 | | NUMBER OF SCALAR ELEMENTS | SCALAR ELEMENTS |
| DOT PRODUCT OPERATION, DATA TYPE(S), AND NUMBER OF SCALAR ELEMENTS | LIST OF SCALAR ELEMENTS | SCALE | SINGLE SCALAR FOR SCALE OF SOURCE 2 | SHARED SCALE FOR SOURCE 2 | | SCALAR ELEMENTS |
| DOT PRODUCT OPERATION AND DATA TYPE(S) | LIST OF SCALAR ELEMENTS AND SCALE | SINGLE SCALAR ELEMENT AND SCALE | NUMBER OF SCALAR ELEMENTS | | | SCALAR ELEMENTS |
| DOT PRODUCT OPERATION, DATA TYPE(S), AND NUMBER OF SCALAR ELEMENTS | LIST OF SCALAR ELEMENTS AND SCALE | SINGLE SCALAR ELEMENTS AND SCALE | | | | SCALAR ELEMENTS |
| CROSS-PRODUCT DOT PRODUCT OPERATION AND DATA TYPE(S) | LIST OF SCALAR ELEMENTS AND SCALE | LIST OF SCALAR ELEMENTS AND SCALE | NUMBER OF SCALAR ELEMENTS | | | SCALAR ELEMENTS |
| CROSS-PRODUCT DOT PRODUCT OPERATION, DATA TYPE(S), AND NUMBER OF SCALAR ELEMENTS | LIST OF SCALAR ELEMENTS AND SCALE | LIST OF SCALAR ELEMENTS AND SCALE | | | | SCALAR ELEMENTS |

FIG. 9

FETCH AN INSTANCE OF A SINGLE INSTRUCTION HAVING FIELDS FOR AN OPCODE, A FIRST SOURCE OPERAND, A SECOND SOURCE OPERAND, AND A DESTINATION OPERAND, WHEREIN AT LEAST ONE OF THE FIRST SOURCE OPERAND, SECOND SOURCE OPERAND, AND DESTINATION OPERAND, WHEREIN THE OPCODE TO AT LEAST INDICATE EXECUTION CIRCUITRY IS TO PERFORM A DOT PRODUCT UTILIZING OF DATA THAT IS IN THE BLOCK FORMAT TO ENCODE ONE OR MORE NUMBERS, WHEREIN A BLOCK NUMBER OF THE BLOCK FORMAT HAS A VALUE OF A SCALE MULTIPLIED BY A VALUE OF A DATA ELEMENT AND WHEREIN THE DATA THAT IS IN THE BLOCK FORMAT IS TO USE DATA FROM AT LEAST THE FIRST AND SECOND SOURCE OPERANDS
1001

DECODE THE INSTRUCTION 1003

RETRIEVE DATA ASSOCIATED WITH THE SOURCE OPERANDS AND SCHEDULE 1005

EXECUTE THE DECODED INSTRUCTION TO PERFORM A DOT PRODUCT OPERATION ON THE OPERANDS
1007

COMMIT A RESULT OF THE EXECUTED INSTRUCTION
1009

# FIG. 10

FETCH A SINGLE INSTRUCTION OF A FIRST INSTRUCTION SET ARCHITECTURE HAVING FIELDS FOR AN OPCODE, A FIRST SOURCE OPERAND, A SECOND SOURCE OPERAND, AND A DESTINATION OPERAND, WHEREIN AT LEAST ONE OF THE FIRST SOURCE OPERAND, SECOND SOURCE OPERAND, AND DESTINATION OPERAND, WHEREIN THE OPCODE TO AT LEAST INDICATE EXECUTION CIRCUITRY IS TO PERFORM A DOT PRODUCT UTILIZING OF DATA THAT IS IN THE BLOCK FORMAT TO ENCODE ONE OR MORE NUMBERS, WHEREIN A BLOCK NUMBER OF THE BLOCK FORMAT HAS A VALUE OF A SCALE MULTIPLIED BY A VALUE OF A DATA ELEMENT AND WHEREIN THE DATA THAT IS IN THE BLOCK FORMAT IS TO USE DATA FROM AT LEAST THE FIRST AND SECOND SOURCE OPERANDS
1101

TRANSLATE THE FETCHED SINGLE INSTRUCTION OF THE FIRST INSTRUCTION SET ARCHITECTURE INTO ONE OR MORE INSTRUCTIONS OF A SECOND INSTRUCTION SET ARCHITECTURE   1102

DECODE THE ONE OR MORE INSTRUCTIONS OF THE SECOND INSTRUCTION SET ARCHITECTURE 1103

RETRIEVE DATA ASSOCIATED WITH THE SOURCE OPERAND(S) AND SCHEDULE 1105

EXECUTE THE DECODED ONE OR MORE INSTRUCTIONS OF THE SECOND INSTRUCTION SET ARCHITECTURE TO PERFORM THE DOT PRODUCT AS INDICATED BY THE OPCODE OF THE SINGLE INSTRUCTION OF THE FIRST INSTRUCTION SET ARCHITECTURE
1107

COMMIT A RESULT OF THE EXECUTED INSTRUCTION(S)
1109

# FIG. 11

FIG. 12

FIG. 13

| SPECIAL PURPOSE LOGIC 1408 | CORE 1402(A) | | CORE 1402(N) | SYSTEM AGENT UNIT 1410 |
| | CACHE UNIT(S) 1404(A) | ••• | CACHE UNIT(S) 1404(N) | INTEGRATED MEMORY CONTROLLER UNIT(S) 1414 |
| | SHARED CACHE UNIT(S) 1406 | | | |
| | INTERFACE NETWORK 1412 | | | |

INTERFACE CONTROLLER UNIT(S) 1416

OTHER DEVICE(S) 1418

**FIG. 14**

1500

**FIG. 15**

**FIG. 16A**

To/From
Memory Unit
1624

Frame buffer
Interface
1625

ROP
1626

CODEC
1627

L2 Cache
1621

Partition Unit
1620

To/From
Memory Crossbar
1616

**FIG. 16B**

To
Memory Crossbar
1616 and/or
other Processing
Clusters

```
Processing Cluster 1614

MMU
1645

PreROP
1642

Data Crossbar
1640

Texture
Unit
1636

Graphics
Multiprocessor
1634

To/From
Memory
Crossbar
1616

L1 Cache
1648

Pipeline Manager
1632
```

To/From
Scheduler
1610

# FIG. 16C

To
Data Crossbar
1640

To
Data Crossbar
1640

| Shared Memory 1670 | Cache Memory 1672 |
|---|---|

Memory and Cache Interconnect 1668

Load/Store Unit 1666

GPGPU Cores 1662

Tensor/RT Cores 1663

Register File 1658

Address Mapping Unit 1656

Instruction Unit 1654

Graphics Multiprocessor 1634

Instruction Cache 1652

From
Pipeline Manager
1632

FIG. 16D

**Graphics Multiprocessor 1725**

**Interconnect Fabric 1727**

**Shared Memory 1746**

| Texture Unit(s) 1744A | Texture Unit(s) 1744B |
|---|---|

**Cache Memory 1742**

| Load/Store Unit 1740A | RT Core 1738A | Tensor Core 1737A | GPGPU Core 1736A | Load/Store Unit 1740B | RT Core 1738B | Tensor Core 1737B | GPGPU Core 1736B |
|---|---|---|---|---|---|---|---|

| Register File 1734A | Register File 1734B |
|---|---|

| Instruction Unit 1732A | Instruction Unit 1732B |
|---|---|

**Instruction Cache 1730**

**FIG. 17A**

Graphics Multiprocessor 1750

Interconnect Fabric 1752

Shared Memory 1753

| Texture Unit(s) 1760A | Texture Unit(s) 1760B |
|---|---|

Cache Memory 1758A

| Execution Resources 1756A | Execution Resources 1756B |
|---|---|
| Texture Unit(s) 1760C | Texture Unit(s) 1760D |

Cache Memory 1758B

| Execution Resources 1756C | Execution Resources 1756D |
|---|---|

Instruction Cache 1754

# FIG. 17B

**FIG. 17C**

EP 4 575 770 A1

1800

1820

| GLOBAL LOGIC 1801 | INF 1802 | DISPATCH 1803 | MEDIA 1804 |
| COMPUTE 1805A | COMPUTE 1805B | COMPUTE 1805C | COMPUTE 1805D |
| COMPUTE 1805E | COMPUTE 1805F | COMPUTE 1805G | COMPUTE 1805H |

CACHE/MEMORY 1806

FIG. 18

EP 4 575 770 A1

1900

1920

Compute Chiplets 1905

Media Chiplet 1904

Memory Chiplets 1906

| COMPUTE | COMPUTE | COMPUTE | ••• | COMPUTE | MEDIA | MEMORY/ CACHE | ••• | L3 BANKS | L3 BANKS |

| GLOBAL LOGIC 1901 | SCHED 1911 | POWER 1921 | INF 1902 | DISPATCH 1903 | FABRIC 1908 | L3 BANKS 1909A | ••• | L3 BANKS 1909N |

Base Die 1910

Interconnect Layer 1912

**FIG. 19A**

1930

POWER CONTROL
1932

CLOCK CONTROL
1934

CHIPLET LOGIC
1936

CACHE/SLM
1938

INTERCONNECT BUFFER
1939

INTERCONNECT CACHE
1940

FABRIC
INTERCONNECT NODE
1942

FIG. 19B

PIPELINE 2000

| FETCH 2002 | LENGTH DECODING 2004 | DECODE 2006 | ALLOC. 2008 | RENAMING 2010 | SCHEDULE 2012 | REGISTER READ/ MEMORY READ 2014 | EXECUTE STAGE 2016 | WRITE BACK/ MEMORY WRITE 2018 | EXCEPTION HANDLING 2022 | COMMIT 2024 |

**FIG. 20(A)**

FIG. 20(B)

EXECUTION UNIT(S) CIRCUITRY
2062

ALU 2101

VECTOR/SIMD 2103

LOAD/STORE 2105

BRANCH/JUMP 2107

FPU 2109

FIG. 21

REGISTER ARCHITECTURE
2200

Segment Registers 2220

Model Specific Registers 2235

Writemask/predicate Registers 2215

Control Register(s) 2255

SCALAR FP REGISTER FILE 2245

Instruction Pointer Register(s) 2230

Vector/SIMD Registers 2210

Debug Registers 2250

General Purpose Registers 2225

Mem. Management Registers 2265

Flag Register(s) 2240

Machine Check Registers 2260

FIG. 22

EP 4 575 770 A1

PREFIX(ES) 2301 | OPCODE 2303 | ADDRESSING INFORMATION 2305 | DISPLACEMENT VALUE 2307 | IMMEDIATE VALUE 2309

FIG. 23

ADDRESSING INFORMATION
2305

MOD R/M BYTE 2402

| 7 | 6 5 | 3 2 | 0 |
|---|---|---|---|
| MOD 2442 | REG 2444 | R/M 2446 | |

SIB BYTE 2404

| 7 | 6 5 | 3 2 | 0 |
|---|---|---|---|
| SCALE ss 2452 | INDEX xxx 2454 | BASE bbb 2456 | |

MOD R/M    SIB

FIG. 24

EP 4 575 770 A1

PREFIX 2301(A)

| | 7 | 6 | 5 | 4 | 3 | 2 | 1 | 0 |
|---|---|---|---|---|---|---|---|---|
| FORMAT | 0 | 1 | 0 | 0 | W | R | X | B |

**FIG. 25(A)**

PREFIX 2301(B)

| | 7 | 6 | 5 | 4 | 3 | 2 | 1 | 0 |
|---|---|---|---|---|---|---|---|---|
| FORMAT 2503 | M0 | R4 | X4 | B4 | W | R3 | X3 | B3 |

**FIG. 25(B)**

81

**FIG. 26(A)**

PREFIX 2301(A)

OPCODE 2303

| MOD R/M 2402 | | |
|---|---|---|
| MOD 2442 | REG 2444 | R/M 2446 |
| !=11 | rrr | bbb |

Rrrr  Bbbb

**FIG. 26(B)**

PREFIX 2301(A)

OPCODE 2303

| MOD R/M 2402 | | |
|---|---|---|
| MOD 2442 | REG 2444 | R/M 2446 |
| 11 | rrr | bbb |

Rrrr  Bbbb

**FIG. 26(C)**

PREFIX 2301(A)

OPCODE 2303

| MOD R/M 2402 | | |
|---|---|---|
| MOD 2442 | REG 2444 | R/M 2446 |
| !=11 | rrr | 100 |

| SIB 2404 | | |
|---|---|---|
| SCL 2452 | INDEX 2454 | BASE 2456 |
| | xxx | bbb |

Rrrr  Xxxx  Bbbb

**FIG. 26(D)**

PREFIX 2301(A)

OPCODE 2303

| MOD R/M 2402 |
|---|
| REG 2444 |
| bbb |

Bbbb

SECOND PREFIX 2301(B)

| | 7 | 6 | 5 | 4 | 3 | 2 | 1 | 0 |
|---|---|---|---|---|---|---|---|---|
| FORMAT 2701 | R | v | v | v | v | L | p | p |

BYTE 0 2703      BYTE 1 2705

## FIG. 27(A)

EP 4 575 770 A1

SECOND PREFIX 2301(B)

| | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|
| FORMAT 2711 | R | X | B | m | m | m | m | m | W | v | v | v | v | L | p | p |

BYTE 0 2713      BYTE 1 2715      BYTE 2 2717

## FIG. 27(B)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 2811 | z | L' | L | b | V' | a | a | a | W | v | v | v | v | 1 | p | p | R | X | B | R' | 0 | 0 | m | m |

PREFIX 2301(C)

PAYLOAD BYTE 2 2815

PAYLOAD BYTE 1 2817

PAYLOAD BYTE 0 2819

FIG. 28(A)

PREFIX 2301(C)

| FORMAT 2811 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| | - | - | - | - | V4 | - | - | - | W | V3 | V2 | V1 | V0 | X4 | p | p | R3 | X3 | B3 | R4 | B4 | M2 | M1 | M0 |

PAYLOAD BYTE 2 2815 — PAYLOAD BYTE 1 2817 — PAYLOAD BYTE 0 2819

FIG. 28(B)

PREFIX 2301(C)

| FORMAT 2822 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| | 0 | 0 | SE | ND | V4 | NF | 0 | 0 | W | V3 | V2 | V1 | V0 | X4 | p | p | R3 | X3 | B3 | R4 | B4 | 1 | 0 | 0 |

PAYLOAD BYTE 2 2825 — PAYLOAD BYTE 1 2827 — PAYLOAD BYTE 0 2829

FIG. 28(C)

## PREFIX 2301(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|----|----|----|----|----|----|----|----|----|----|----|----|----|----|---|---|---|---|---|---|---|---|---|---|
| FORMAT 2833 | 0 | 0 | L | 0 | V4 | NF | 0 | 0 | W | V3 | V2 | V1 | V0 | X4 | p | p | R3 | X3 | B3 | R4 | B4 | M2 | M1 | M0 |

PAYLOAD BYTE 2 — 2835  PAYLOAD BYTE 1 — 2837  PAYLOAD BYTE 0 — 2839

## FIG. 28(D)

## PREFIX 2301(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|----|----|----|----|----|----|----|----|----|----|----|----|----|----|---|---|---|---|---|---|---|---|---|---|
| FORMAT 2843 | z | L | L | b | V4 | a | a | a | W | V3 | V2 | V1 | V0 | X4 | p | p | R3 | X3 | B3 | R4 | B4 | M2 | M1 | M0 |

PAYLOAD BYTE 2 — 2845  PAYLOAD BYTE 1 — 2847  PAYLOAD BYTE 0 — 2849

## FIG. 28(E)

EXECUTION LOGIC
2900

**FIG. 29A**

GRAPHICS EXECUTION UNIT 2908

SEND 2930

BRANCH 2932

SIMD FPUs 2934

SIMD ALUs 2935

ARF 2926

GRF 2924

2922

THREAD ARBITER

INSTRUCTION FETCH

2937

**FIG. 29B**

FIG. 30

## GRAPHICS PROCESSOR INSTRUCTION FORMATS
### 3100

128-BIT INSTRUCTION
3110

| OPCODE 3112 | CONTROL 3114 | EXEC-SIZE 3116 | DEST 3118 | SRC0 3120 | SRC1 3122 | SRC2 3124 | ACCESS/ADDRESS MODE 3126 |
|---|---|---|---|---|---|---|---|

64-BIT COMPACT INSTRUCTION
3130

| OPCODE 3112 | INDEX 3113 | CONTROL 3114 | DEST 3118 | SRC0 3120 | SRC1 3122 |
|---|---|---|---|---|---|

OPCODE DECODE
3140

| 7 | 6 | 5 | 4 | 3 | 2 | 1 | 0 |
|---|---|---|---|---|---|---|---|

opcode=0·00x·xxxxb ← Move/Logic - 3142

opcode=0·010·xxxxb ← Flow Control - 3144

opcode=0·011·xxxxb ← Misc. - 3146

opcode=0·100·xxxxb ← Parallel Math - 3148

opcode=0·101·xxxxb ← Vector Math - 3150

**FIG. 31**

EP 4 575 770 A1

**FIG. 32**

## FIG. 33A

GRAPHICS PROCESSOR COMMAND FORMAT
3300

| CLIENT 3302 | OPCODE 3304 | SUB-OPCODE 3305 | DATA 3306 | COMMAND SIZE 3308 |
|---|---|---|---|---|

## FIG. 33B

GRAPHICS PROCESSOR COMMAND SEQUENCE
3310

PIPELINE FLUSH
3312

↓

PIPELINE SELECT
3313

↓

PIPELINE CONTROL
3314

↓

RETURN BUFFER STATE
3316

↓

3322 — 3D

3320 — PIPELINE?

3324 — MEDIA

| 3D PIPELINE STATE 3330 | MEDIA PIPELINE STATE 3340 |
|---|---|
| 3D PRIMITIVE 3332 | MEDIA OBJECT 3342 |
| EXECUTE 3334 | EXECUTE 3344 |

FIG. 34

EP 4 575 770 A1

IP CORE DEVELOPMENT - 3500

NON-VOLATILE MEMORY
3540

FABRICATION FACILITY
3565

SIMULATION MODEL
3512

SOFTWARE SIMULATION
3510

REGISTER TRANSFER LEVEL DESIGN
3515

HARDWARE MODEL (HDL OR PHYSICAL DESIGN DATA)
3520

DESIGN FACILITY 3530

WIRED CONNECTION
3550

WIRELESS CONNECTION
3560

FIG. 35

EP 4 575 770 A1

10

```
                    ┌─────────────────────┐
                    │  DESIGN SOFTWARE    │
                    │       3614          │
                    └─────────────────────┘


┌─────────────────────┐  ┌─────────────────────┐  ┌─────────────────────┐
│  KERNEL PROGRAM     │  │     COMPILER        │  │   HOST PROGRAM      │
│       3620          │  │       3616          │  │       3622          │
└─────────────────────┘  └─────────────────────┘  └─────────────────────┘
```

┌───────────────────────┐                    ┌───────────────────────┐
│ INTEGRATED CIRCUIT    │                    │                       │
│        3612           │                    │  INTEGRATED CIRCUIT   │
│  ┌─────────────────┐  │                    │        3618           │
│  │   AI DSP(S)     │◄─┼────────────────────┼──►                    │
│  │     3626        │  │                    │                       │
│  └─────────────────┘  │                    │                       │
└───────────────────────┘                    └───────────────────────┘

COMMUNICATION
LINK 3624

**FIG. 36**

Europäisches
Patentamt

European
Patent Office

Office européen
des brevets

# EUROPEAN SEARCH REPORT

**Application Number**

EP 24 21 3137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 571 328 B2 (NINTENDO CO LTD [JP]) 27 May 2003 (2003-05-27) * the whole document * | 1-15 | INV. G06F9/30 |
| A | BITA DARVISH ROUHANI ET AL: "Microscaling Data Formats for Deep Learning", ARXIV.ORG, CORNELL UNIVERSITY LIBRARY, 201 OLIN LIBRARY CORNELL UNIVERSITY ITHACA, NY 14853, 16 October 2023 (2023-10-16), XP091637580, * the whole document * | 1-15 | |
| A | LEE WAI-KONG ET AL: "DPCrypto: Acceleration of Post-Quantum Cryptography Using Dot-Product Instructions on GPUs", IEEE TRANSACTIONS ON CIRCUITS AND SYSTEMS I: REGULAR PAPERS, IEEE, US, vol. 69, no. 9, 1 September 2022 (2022-09-01), pages 3591-3604, XP011918541, ISSN: 1549-8328, DOI: 10.1109/TCSI.2022.3176966 [retrieved on 2022-06-03] * the whole document * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 6 May 2025 | Moraiti, Marina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3137

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| US 6571328 | B2 | 27-05-2003 | JP | 4785161 B2 | 05-10-2011 |
| | | | JP | 2001290633 A | 19-10-2001 |
| | | | US | 6857061 B1 | 15-02-2005 |
| | | | US | 2002032848 A1 | 14-03-2002 |
| | | | US | 2005125630 A1 | 09-06-2005 |
| | | | US | 2010217954 A1 | 26-08-2010 |

EPO FORM P0459

For more details about this annex : see Official Journal of the European Patent Office, No. 12/82